(19) Europäisches Patentamt
European Patent Office
Office européen des brevets

(11) EP 4 423 195 B1

(12) **EUROPEAN PATENT SPECIFICATION**

(45) Date of publication and mention of the grant of the patent:
**22.10.2025 Bulletin 2025/43**

(21) Application number: **22838656.1**

(22) Date of filing: **13.12.2022**

(51) International Patent Classification (IPC):
***C08L 79/04*** *(2006.01)* ***C08J 5/24*** *(2006.01)*
***C08L 79/08*** *(2006.01)* ***C08G 73/06*** *(2006.01)*
***C08G 73/12*** *(2006.01)* ***C08F 222/40*** *(2006.01)*

(52) Cooperative Patent Classification (CPC):
(C-Sets available)
**C08L 79/04; C08G 73/12; C08J 5/243; C08J 5/244; C08J 5/246; C08L 79/085;** C08F 222/402; C08J 2379/04 (Cont.)

(86) International application number:
**PCT/EP2022/085525**

(87) International publication number:
**WO 2023/110819 (22.06.2023 Gazette 2023/25)**

(54) **NOVEL COMPOSITIONS WITH IMPROVED CHARACTERISTICS**

NEUE ZUSAMMENSETZUNGEN MIT VERBESSERTEN EIGENSCHAFTEN

NOUVELLES COMPOSITIONS PRÉSENTANT DES CARACTÉRISTIQUES AMÉLIORÉES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.12.2021 EP 21214407**
**18.05.2022 EP 22174003**

(43) Date of publication of application:
**04.09.2024 Bulletin 2024/36**

(73) Proprietor: **Arxada AG**
**3930 Visp (CH)**

(72) Inventors:
- **LA DELFA, Gaetano**
**3930 Visp (CH)**
- **FOURNIER, Jean**
**3930 Visp (CH)**
- **ABGOTTSPON, Magnus**
**3930 Visp (CH)**
- **MAYERHOEFFER, Ulrich**
**3930 Visp (CH)**
- **ELLINGER, Stefan**
**3930 Visp (CH)**

(74) Representative: **Michalski Hüttermann & Partner Patentanwälte mbB**
**Kaistraße 16A**
**40221 Düsseldorf (DE)**

(56) References cited:
**EP-A1- 3 632 941**
**WO-A1-2017/191771**
**WO-A1-2021/260124**
**US-A1- 2021 165 327**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 79/04, C08L 79/085;**
**C08L 79/085, C08L 79/04**

## Description

The present invention relates to novel compositions comprising cyanate ester resins and substituted bisimides (citraconimides, bisitaconimide, citraconimido-itaconimide, bisnadicimide, bistetrahydroimide and mixtures thereof), and thermoset composite materials based on these compositions.

Thermoset composite matrices are typically based on polyesters, vinyl esters, epoxies, bismaleimides, cyanate esters, polyimides and phenolics.

CA2464339A1 US3553244, US3755402, US3740348 and US4578439 and EP1190184 EP1195764, US9263360, EP327926, EP1566377, EP2722363 discloses cyanate ester composites that can be used in compression molding, printed wiring boards, prepreg resins, composite sheet and metal fol-clad-laminate plate.

US20120049106, US7271227B1, US5198515 and US4568733, RSC Adv., 2017, 7, 23149 discloses bismaleimide composites that can be used for making laminates and prepregs by curing the composition to a polymer.

US2009/0110938 Al discloses a cyanate ester resin composition for a printed wiring board material containing a cyanate ester resin component A and/or an oligomer thereof, and at least one component B selected from the group consisting of an epoxy resin and an unsubstituted bismaleimide compound. These bismaleimides are less suitable for high-temperature applications due to their high mass loss at high temperatures in long-term stability tests (see table 2)

US2014199549 A1 discloses thermosetting resin composition for electronics packaging application device comprising a hydrophobic solid bismaleimide, a benzoxazine monomer and an epoxy anhydride or epoxy phenol novolac or epoxy cresol novolac-anhydride adduct. As mentioned in the examples the bismaleimides are less suitable for high-temperature applications due to their high mass loss at high temperatures. Further benzoxazines and cyanate esters are known to have different curing mechanisms which will lead to different network structure and performance.

However, many of the current thermoset composite based on bismaleimide compounds have limitations or disadvantages that restrict their use as thermosetting resins in high-temperature applications and use of easy processing.

Therefore, there remains a need for new thermoset composite materials that have improved properties.

The present invention therefore provides a composition comprising components (a) and (b) wherein component (a) is one or more cyanate esters independently selected from

(i) a difunctional cyanate ester compound of formula (I)

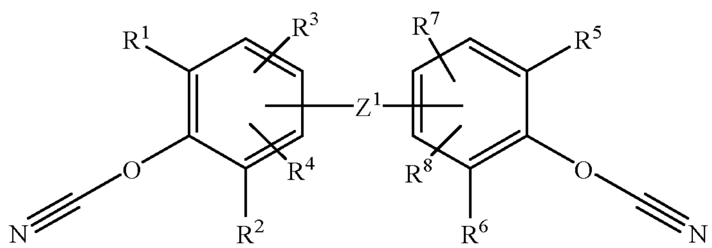

(I)

wherein

$R^1$ through $R^8$ are independently selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, halogenated $C_{3-8}$ cycloalkyl, linear $C_2$-$C_{10}$ alkenyl, branched $C_3$-$C_{10}$ alkenyl, $C_{1-10}$ alkoxy, halogen, phenyl and phenoxy;

wherein at least one of $R^1$ to $R^8$ is selected from the group consisting of linear $C_2$-$C_{10}$ alkenyl and branched $C_3$-$C_{10}$ alkenyl;

$Z^1$ indicates a direct bond or a divalent moiety selected from the group consisting of -O-, -S-, -S(=O)-, $-S(=O)_2-$, $-CH_2-$, $-CH(CH_3)-$, $-C(CH_3)_2-$,$-CH(CF_3)-$, $-C(CF_3)_2-$, -C(=O)-, $-C(=CH_2)-$, $-C(=CCl_2)-$, $-Si(CH_3)_2-$, linear $C_{1-10}$ alkanediyl, branched $C_{4-10}$ alkanediyl, $C_{3-8}$ cycloalkanediyl, 1,2-phenylene, 1,3-phenylene, 1,4-phenylene, $-N(R^{13})-$ wherein $R^{13}$ is selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, phenyl and phenoxy, and moieties of formulas

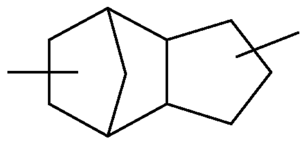

and

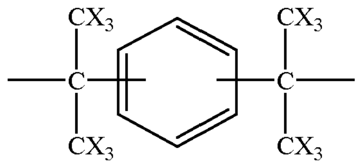

wherein X is independently selected from hydrogen and halogen;

and oligomers, prepolymers, polymers or mixtures thereof; or

wherein (a) is a mixture of (i) and (ii), wherein

(ii) is a polyfunctional cyanate ester of formula (II)

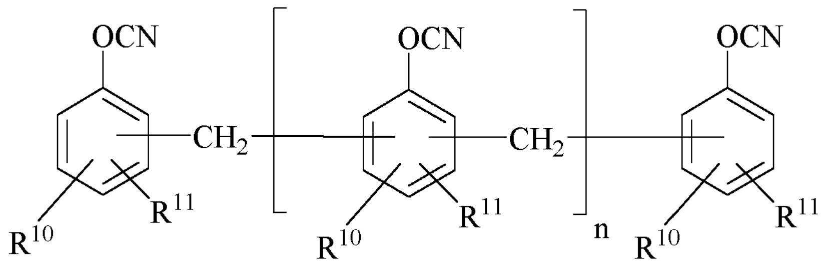

(II)

wherein

n is an integer from 1 to 20; and $R^{10}$ and $R^{11}$ are identical or different and independently from each other selected from the group consisting of hydrogen, linear $C_{1-10}$ alkyl, branched $C_{4-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-1)

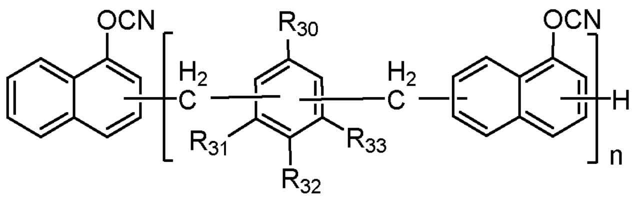

(IX-1)

wherein
n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-2)

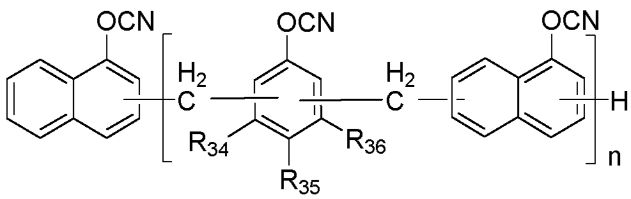

(IX-2)

wherein
n is an integer from 1 to 20; and $R^{34}$, $R^{35}$ and $R^{36}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-3)

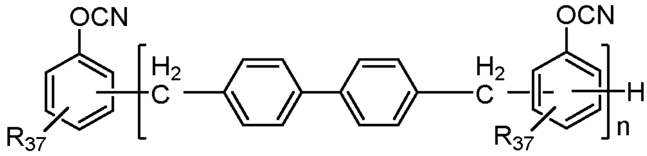

(IX-3)

wherein

n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and

oligomers, prepolymers, polymers or mixtures thereof; or

a polyfunctional cyanate ester of formula (IX-4)

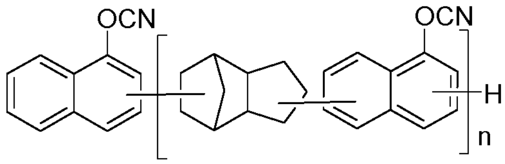

(IX-4)

wherein

n is an integer from 1 to 20; and oligomers, prepolymers, polymers or mixtures thereof;

or any combination of polyfunctional cyanate esters of formulas (II), (IX-1), (IX-2), (IX-3), and (IX-4);

and

wherein

component (b) is one or more substituted bisimide compound independently selected from a compound of formula (X)

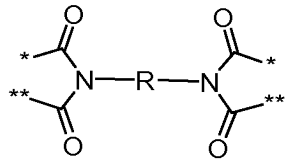

**X**

wherein * and ** each denotes a covalent bond to the respective C atom denoted with * and ** of a residue, wherein the residues are identical or different and independently selected from

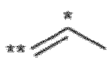
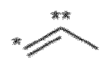
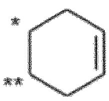
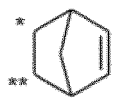
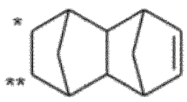
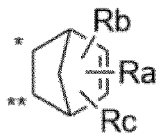
,

and wherein

R is independently selected from alkyl, cycloalkyl, alkyne, aryl, aralkyl and alkaryl;

Ra, Rb, and Rc are independently selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, halogenated $C_{3-8}$ cycloalkyl, linear $C_2$-$C_{10}$ alkenyl, branched $C_3$-$C_{10}$ alkenyl, $C_{1-10}$ alkoxy, halogen, phenyl and phenoxy,

or Ra and Rb, Ra and Rc, or Rb and Rc may together form a 3 to 8 membered cycloalkyl or a 3 to 8 membered cycloalkenyl;

and, oligomers, prepolymers, polymers or mixtures of these compounds.

The term "halogen" refers to fluorine, chlorine, bromine or iodine, preferably fluorine, chlorine or bromine.

The term "substituted bisimide" refers to compounds with substitutions at the C-C double bond (3 and/or 4 position) of the maleimide-group.

Alkyl substituents (either alone or as part of a larger group, such as alkoxy-) may be straight-chained or branched. Alkyl on its own or as part of another substituent is, depending upon the number of carbon atoms mentioned, for example, methyl, ethyl, n-propyl, n-butyl, n-pentyl, n-hexyl and the isomers thereof, for example, iso-propyl, iso-butyl, sec-butyl, tert-

butyl or isoamyl.

Alkenyl substituents (either alone or as part of a larger group, e.g. alkenyloxy) can be in the form of straight or branched chains, and the alkenyl moieties, where appropriate, can be of either the (E)- or (Z)-configuration.

Alkynyl substituents (either alone or as part of a larger group, e.g. alkynyloxy) can be in the form of straight or branched chains.

Aryl groups (either alone or as part of a larger group, such as e.g. aryloxy, aryl-alkyl) are aromatic ring systems which can be in mono-, bi- or tricyclic form. Examples of such rings include phenyl, naphthyl, anthracenyl, indenyl or phenanthrenyl. Preferred aryl groups are phenyl and naphthyl, phenyl being most preferred.

The term "linear $C_{1-10}$ alkyl" refers to a straight-chained saturated hydrocarbon group having 1 to 10 carbon atoms including methyl, ethyl, propyl, butyl, pentyl, hexyl, heptyl, octyl, nonyl, and decyl.

The term "branched $C_{4-10}$ alkyl" refers to a branched-chained saturated hydrocarbon group having 4 to 10 carbon atoms including butyl, 1-methylpropyl, 2-methylpropyl, 1,1-dimethylethyl, 1-methylbutyl, 2-methylbutyl, 3-methylbutyl, 2,2-dimethylpropyl, 1-ethylpropyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethyl propyl, 1 ,2,2-trimethylpropyl, 1-ethyl-1-methylpropyl and 1-ethyl-2-methylpropyl.

The term "linear $C_2$-$C_{10}$ alkenyl" refers to linear groups with one or more double bonds, wherein the alkenyl moieties, where appropriate, can be of either the (E)- or (Z)-configuration. Examples of "linear $C_2$-$C_{10}$ alkenyl" groups include vinyl, allyl, propenyl, butenyl, pentenyl, hexenyl, heptenyl, and octenyl.

The term "branched $C_3$-$C_{10}$ alkenyl" refers to branched groups with one or more double bonds, wherein the alkenyl moieties, where appropriate, can be of either the (E)- or (Z)-configuration. The branching site can either be at an unsaturated, or at a saturated carbon atom. Examples of "branched $C_3$-$C_{10}$ alkenyl" groups include isopropenyl, sec-butenyl, tert-butenyl, isopentenyl, and isohexenyl.

The term "3 to 8 membered cycloalkyl" or "$C_{3-8}$ cycloalkyl" refers to saturated carbocyclic compounds that can include one or more rings. Examples of "3 to 8 membered cycloalkyl" or "$C_{3-8}$ cycloalkyl" groups include cyclopropyl, cyclobutyl, cyclopentyl, cyclohexyl, cycloheptyl, cyclooctyl, norbonyl, and bicyclo[2.2.2]octyl.

The term "3 to 8 membered cycloalkenyl" refers to unsaturated carbocyclic compounds that can include one or more rings. Examples of "3 to 8 membered cycloalkenyl" groups include cyclopropenyl, cyclopropyl, cyclobutenyl, cyclopentenyl, cyclohexenyl, cycloheptenyl, cyclooctenyl, norbonenyl, bicyclo[2.2.2]octenyl, and phenyl.

It is to be understood that the alkyl, cycloalkyl, alkyne, aryl, aralkyl, alkaryl, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, halogenated $C_{3-8}$ cycloalkyl, linear $C_2$-$C_{10}$ alkenyl, branched $C_3$-$C_{10}$ alkenyl, $C_{1-10}$ alkoxy, phenyl, phenoxy, 3 to 8 membered cycloalkyl, and 3 to 8 membered cycloalkenyl may optionally be further substituted. Exemplary substituents include hydroxy, carboxy, amino, sulfonyl, halogen, and phenyl-groups.

As used herein, the term "comprising" is to be construed as encompassing both "including" and "consisting of", both meanings being specifically intended, and hence individually disclosed, embodiments according to the present invention.

As used herein, the articles "a" and "an" preceding an element or component are intended to be nonrestrictive regarding the number of instances (i.e. occurrences) of the element or component. Therefore, "a" or "an" is to be read to include one or at least one, and the singular word form of the element or component also includes the plural unless the number is obviously meant to be singular.

As used herein, the term "about" modifying the quantity of a substance, ingredient, component, or parameter employed refers to variation in the numerical quantity that can occur, for example, through typical measuring and handling procedures, e.g., liquid handling procedures used for making concentrates or solutions. Furthermore, variation can occur from inadvertent error in measuring procedures, differences in the manufacture, source, or purity of the ingredients employed to carry out the methods, and the like.

It has surprisingly been found that the thermoset composite compositions according to the invention may possess any number of benefits including, *inter alia,* improvements in processability compared to the individual components, improvements in the toughness, improvements in the thermal oxidative stability, increased safety profile, and/or improved physico-chemical properties of the resultant thermoset composite materials.

In particular, it has been found that the compositions according to the invention possess improved thermal-oxidative stabilities, as can be measured in terms of mass loss and surface damage of the resultant composite materials.

Further, the compositions according to the invention also demonstrate improvements in the glass transition temperature (Tg) of the resultant composite materials.

Moreover, the compositions according to the invention exhibit improvements in terms of processability of the materials, e.g. reduced viscosity, reduced void formation and reduction of shrinkage and distortion in the resultant composite materials, thereby reducing the need for long degassing steps and providing for reduced pressure during polymerisation.

It has been found that substituted bisimides improve the properties and/or the processability of the thermoset composite material.

In particular, it has been found that the thermoset composite materials based on substituted bisimides show improved thermal-oxidative stabilities, improved fracture toughness and decreased brittleness. Thermoset composite materials comprising resins cyanate ester resins and substituted bismimides have better handling, processing and thermal stability.

The biscitraconimides are 3-methyl analogues of bismaleimides. The biscitraconimide resins can be prepared by the general reaction between two equivalents of citraconic anhydride with a bisamine by elimination of water. In "The Synthesis of Bisitaconamic Acids and Isomeric Bisimide Monomers," Galanti, A. V. et al, Journ. Poly. Sci.: Polymer Chemistry Edition, Vol. 20, pp. 233-239 (1982) a method is disclosed for the preparation of biscitraconimides in the form of an isomeric mixture of the citraconic and itaconic imides.

The methylnadicimides can be prepared by the general reaction between two equivalents of methylnadic anhydride with a bisamine by elimination of water. In "POLYMER, 1989, Vol 30, June (Conference issue) 1039" in US4110294 and additionally in JP20130551725 a method is disclosed for the preparation of an isomeric mixture of the methylnadicimides.

A wide variety of cyanate esters are known to the skilled person including, but not limited to, Novolac cyanate ester (Primaset® PT resins from Arxada), Naphthol-aralkyl cyanate ester, Naphthol phenol novolac type cyanate ester, 2,2-bis(4-cyanatophenyl)propane (known as Bisphenol-A dicyanate, available under trade name Primaset® BADCy, AroCy® B-10), bis(4-cyanato-3,5-dimethylpheny)methane (known as Bisphenol-F dicyanate, available under trade name Primaset® METHYLCy, AroCy® M-10), 1,1'-bis(4-cyanatophenyl)ethane (known as Bisphenol-E dicyanate, available under trade name Primaset® LeCy, AroCy® L-10), bis(4-cyanatophenyl)thioether (available under trade name AroCy® T-10), 3-bis(4-cyanatophenyl-1-(1-methylethylidene))benzene (known as Bisphenol-M dicyanate, available under trade name Primaset® LM-500, AroCy® XU366, RTX366), cyanated phenol-dicyclopentadiene adduct (available under trade name Primaset® DT-4000, AroCy®XU-71787.02L, XU71787), 1,3-phenylene-dicyanate (known as resorcinol dicyanate, available under trade name REX-370), fused ring cyanate monomers such as naphthalene and anthraquinone, fluoroaliphatic dicyanates, Primaset® ULL-950S, Primaset® HTL-300, propane-2,2-diylbis-2-(prop-2-en-1-yl)benzene-4,1-diyl dicyanate (known as diallylbisphenol A dicyanate) available as Primaset® CL-100and mixtures/prepolymers thereof. Preferably, the difunctional cyanate ester compound of formula (I) according to the present invention is propane-2,2-diylbis-2-(prop-2-en-1-yl)benzene-4,1-diyl dicyanate (known as diallylbisphenol A dicyanate).

Further cyanate esters which can be used in combination with the cyanate esters according to the invention are

a. the reaction product of 2,2-bis(4-cyanatophenyl)propane (known as Bisphenol-A dicyanate, available under trade name Primaset® BADCy, AroCy® B-10) with hydroxyl-terminated polybutadiene (HTPB), which is an oligomer of butadiene terminated at each end with a hydroxyl functional group;
b. a rubber-modified cyanate ester by incorporating a cross-linked styrene-butadiene rubber copolymer and a styrene-acrylonitrile copolymer into a cyanated phenol-dicyclopentadiene adduct (Primaset® DT-4000, AroCy®XU-71787.02L, XU71787);
c. a cyanate ester prepolymer obtained by a prepolymerization reaction of Bisphenol-A dicyanate.

According to the present invention, in the difunctional cyanate ester compound of formula (I), at least one of $R^1$ to $R^8$ is selected from the group consisting of linear $C_2$-$C_{10}$ alkenyl and branched $C_3$-$C_{10}$ alkenyl. In one embodiment, at least two of $R^1$ to $R^8$ are selected from the group consisting of linear $C_2$-$C_{10}$ alkenyl and branched $C_3$-$C_{10}$ alkenyl. In one embodiment, one or two of $R^1$ to $R^8$ are selected from the group consisting of linear $C_2$-$C_{10}$ alkenyl and branched $C_3$-$C_{10}$ alkenyl. In one embodiment, at least two of $R^1$ to $R^8$ are selected from vinyl and allyl. Preferably, $R^1$ and $R^5$ are selected from the group consisting of linear $C_2$-$C_{10}$ alkenyl and branched $C_3$-$C_{10}$ alkenyl. More preferably, $R^1$ and $R^5$ are each independently a linear $C_2$-$C_{10}$ alkenyl. Even more preferably, $R^1$ and $R^5$ are each independently selected from vinyl and allyl. Most preferably, $R^1$ and $R^5$ are allyl.

According to the present invention, component (a) may comprise a mixture of the difunctional cyanate ester compound of formula (I) and a polyfunctional cyanate ester of formula (II).

In one embodiment, the polyfunctional cyanate ester is a polyfunctional cyanate ester of formula (II)

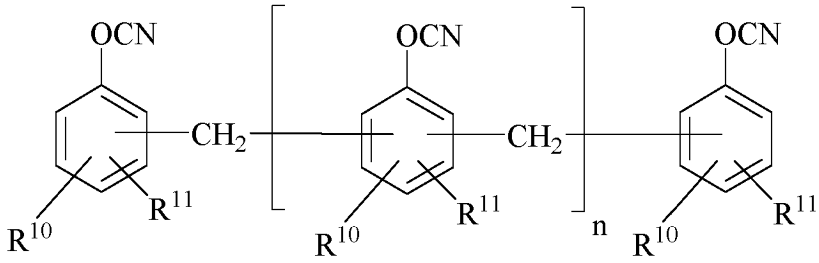

(II)

wherein
n is an integer from 1 to 20; and $R^{10}$ and $R^{11}$ are identical or different and independently from each other selected from the group consisting of hydrogen, linear $C_{1-10}$ alkyl, branched $C_{4-10}$ alkyl, linear $C_2$-$C_{10}$ alkenyl, and branched $C_3$-$C_{10}$ alkenyl; and oligomers, prepolymers, polymers or mixtures thereof.

In one embodiment, the polyfunctional cyanate ester is a polyfunctional cyanate ester of formula (IX-1)

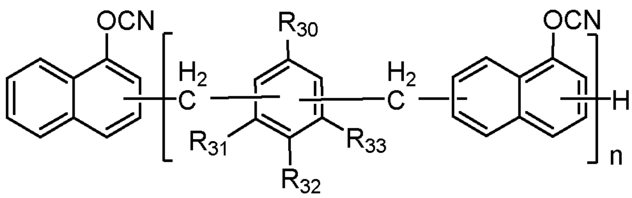

(IX-1)

wherein
n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof.

In one embodiment, in the polyfunctional cyanate ester of formula (IX-1), $R^{30}$, $R^{31}$, $R^{32}$, and $R^{33}$ are hydrogen.

In one embodiment, the polyfunctional cyanate ester is a polyfunctional cyanate ester of formula (IX-2)

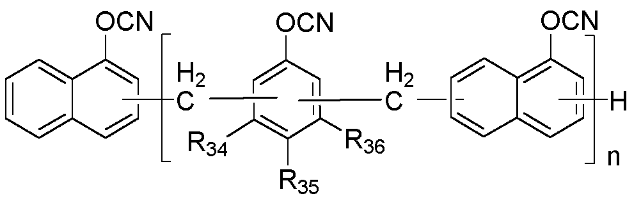

(IX-2)

wherein
n is an integer from 1 to 20; and $R^{34}$, $R^{35}$ and $R^{36}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof.

In one embodiment, in the polyfunctional cyanate ester of formula (IX-2), $R^{34}$, $R^{35}$, and $R^{36}$ are hydrogen.

In one embodiment, the polyfunctional cyanate ester is a polyfunctional cyanate ester of formula (IX-3)

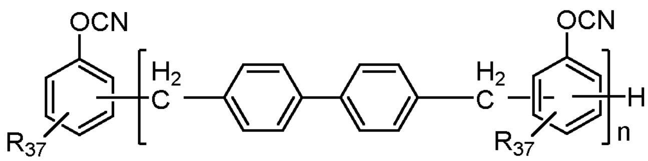

(IX-3)

wherein
n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof.

In one embodiment, in the polyfunctional cyanate ester of formula (IX-3), $R^{37}$ is hydrogen or methyl.

In one embodiment, the polyfunctional cyanate ester is a polyfunctional cyanate ester of formula (IX-4)

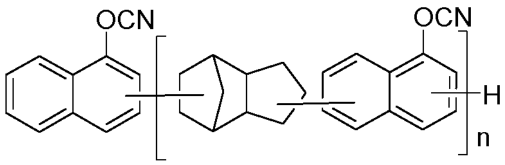

(IX-4)

wherein
n is an integer from 1 to 20; and oligomers, prepolymers, polymers or mixtures thereof.

In one embodiment, the polyfunctional cyanate ester is any combination of polyfunctional cyanate esters of formulas (II), (IX-1), (IX-2), (IX-3), and (IX-4).

In one embodiment, the polyfunctional cyanate ester is selected from of polyfunctional cyanate esters of formulas (IX-1), (IX-2), (IX-3), and any combinations thereof.

In one embodiment, the polyfunctional cyanate ester is a polyfunctional cyanate ester of formula (II)

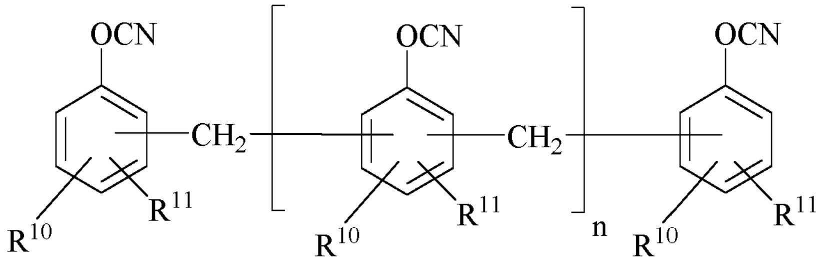

(II)

wherein
n is an integer from 1 to 15; and $R^{10}$ and $R^{11}$ are identical or different and independently from each other selected from the group consisting of hydrogen, linear $C_{1-8}$ alkyl, branched $C_{4-8}$ alkyl, linear $C_2$-$C_{10}$ alkenyl, and branched $C_3$-$C_{10}$ alkenyl; and oligomers, prepolymers, polymers or mixtures thereof.

In one embodiment, the polyfunctional cyanate ester is a polyfunctional cyanate ester of formula (II)

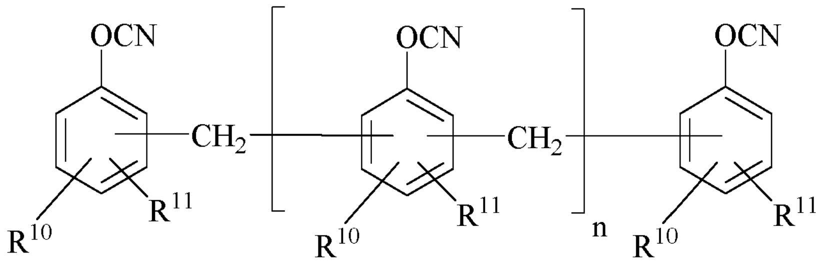

(II)

wherein
n is an integer from 1 to 10; and $R^{10}$ and $R^{11}$ are identical or different and independently from each other selected from the group consisting of hydrogen, linear $C_{1-5}$ alkyl, branched $C_{4-6}$ alkyl, linear $C_2$-$C_{10}$ alkenyl, and branched $C_3$-$C_{10}$ alkenyl; and oligomers, prepolymers, polymers or mixtures thereof.

In one embodiment, the polyfunctional cyanate ester of formula (II)

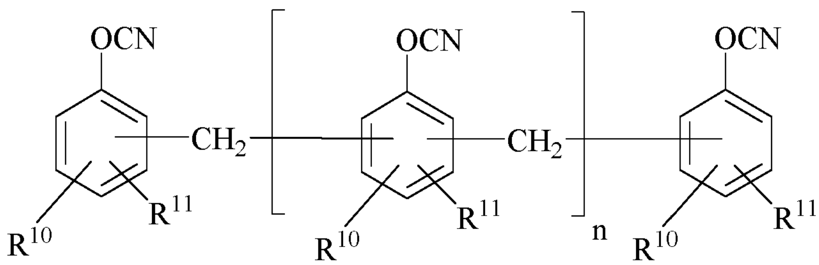

(II)

is independently selected from the group consisting of compound III, compound IV, compound V, compound VI, and oligomers, prepolymers, polymers or mixtures thereof

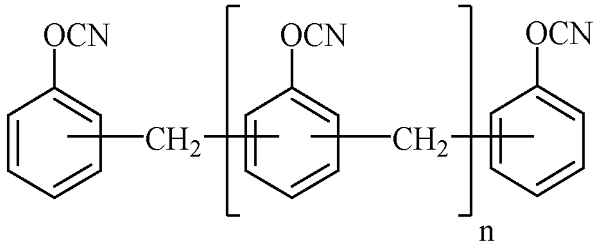

**III**

n is 2 to 3

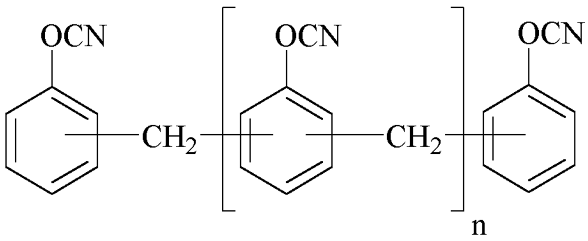

**IV**

n is 3 to 4

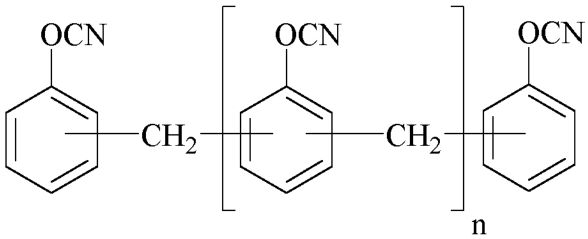

**V**

n is 3 to 6

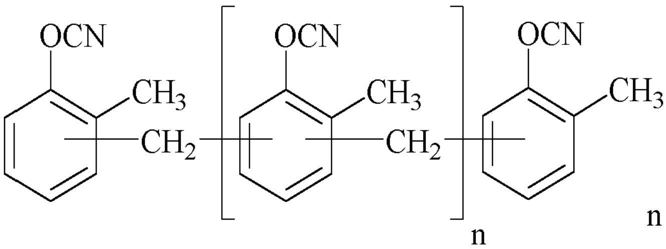

**VI**

n is 3 to 6 on average.

In one embodiment component (a) is one or more cyanate esters independently selected from

(i) a difunctional cyanate ester compound of formula (I)

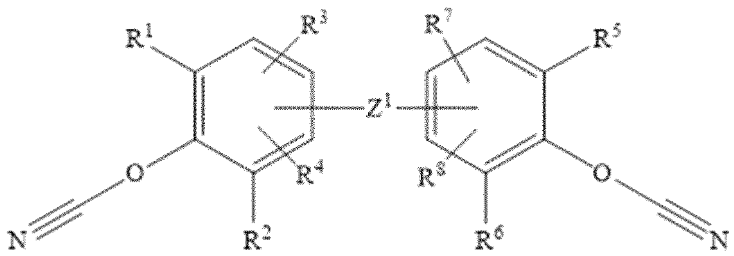

(I)

wherein

$R^1$ through $R^8$ are independently selected from the group consisting of hydrogen, linear $C_{1-10}$ alkyl, $C_{3-8}$ cycloalkyl, linear $C_2$-$C_{10}$ alkenyl, and branched $C_3$-$C_{10}$ alkenyl;
wherein at least one of $R^1$ to $R^8$ is selected from the group consisting of linear $C_2$-$C_{10}$ alkenyl and branched $C_3$-$C_{10}$ alkenyl;

$Z^1$ indicates a direct bond or a divalent moiety selected from the group consisting of -O-, -S-, -S(=O)-, $-S(=O)_2-$, $-CH_2-$, $-CH(CH_3)-$, $-C(CH_3)_2-$,$-CH(CF_3)-$, $-C(CF_3)_2-$, -C(=O)-, $-C(=CH_2)-$, $-C(=CCl_2)-$, $-Si(CH_3)_2-$, linear $C_{1-10}$ alkanediyl, branched $C_{4-10}$ alkanediyl, $C_{3-8}$ cycloalkanediyl, 1,2-phenylene, 1,3-phenylene, 1,4-phenylene, $-N(R^{13})-$ wherein $R^{13}$ is selected from the group consisting of hydrogen, linear $C_{1-10}$ alkyl, $C_{3-8}$ cycloalkyl, phenyl and phenoxy, and moieties of formulas

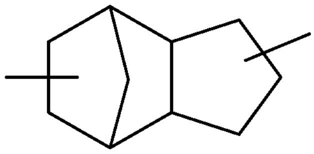

and

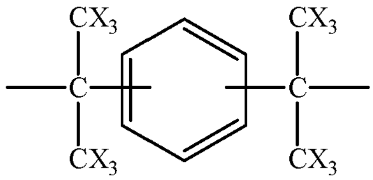

wherein X is independently selected from hydrogen and halogen;
and oligomers, prepolymers, polymers or mixtures thereof; or
wherein (a) is a mixture of (i) and (ii), wherein

(ii) is a polyfunctional cyanate ester of formula (II)

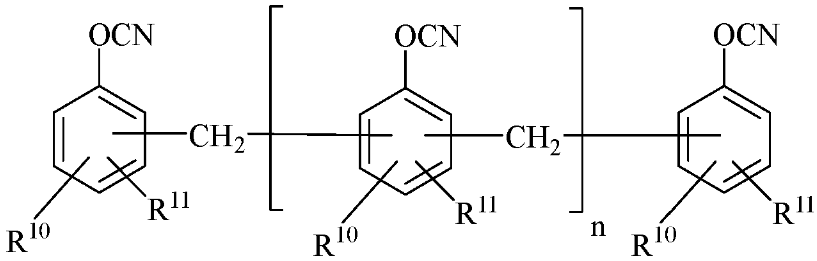

(II)

wherein

n is an integer from 1 to 20; and $R^{10}$ and $R^{11}$ are identical or different and independently from each other selected from the group consisting of hydrogen, linear $C_{1-10}$ alkyl, branched $C_{4-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-1)

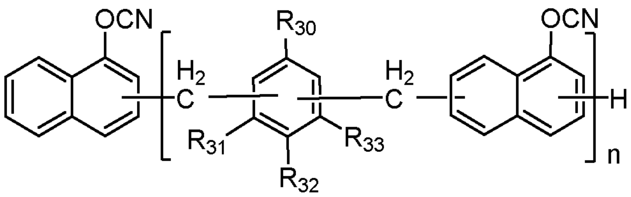

(IX-1)

wherein
n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-2)

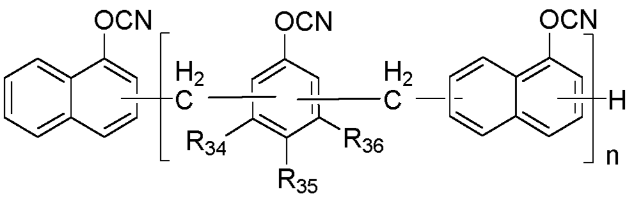

(IX-2)

wherein
n is an integer from 1 to 20; and $R^{34}$, $R^{35}$ and $R^{36}$ are identical or different and independently from each other selected

from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-3)

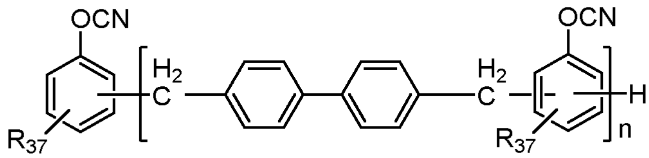

(IX-3)

wherein
n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and
oligomers, prepolymers, polymers or mixtures thereof; or
a polyfunctional cyanate ester of formula (IX-4)

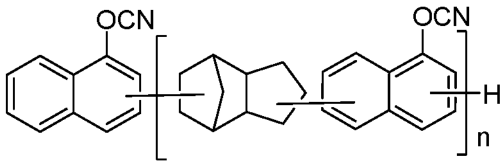

(IX-4)

wherein
n is an integer from 1 to 20; and oligomers, prepolymers, polymers or mixtures thereof;
or any combination of polyfunctional cyanate esters of formulas (II), (IX-1), (IX-2), (IX-3), and (IX-4).

In another embodiment component (a) is one or more cyanate esters independently selected from

(i) a difunctional cyanate ester compound of formula (I)

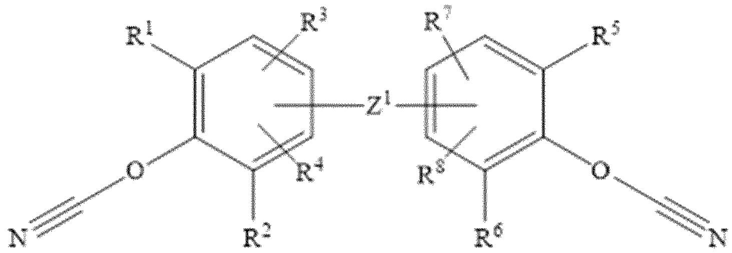

(I)

wherein

$R^1$ through $R^8$ are independently selected from the group consisting of hydrogen, linear $C_{1-3}$ alkyl, linear $C_2$-$C_{10}$ alkenyl, and branched $C_3$-$C_{10}$ alkenyl;
wherein at least one of $R^1$ to $R^8$ is selected from the group consisting of linear $C_2$-$C_{10}$ alkenyl and branched $C_3$-$C_{10}$ alkenyl;
$Z^1$ indicates a direct bond or a divalent moiety selected from the group consisting of -O-, -S-, -S(=O)-, $-S(=O)_2-$, $-CH_2-$, $-CH(CH_3)-$, $-C(CH_3)_2-$,$-CH(CF_3)-$, $-C(CF_3)_2-$, $-C(=CCl_2)-$, $-Si(CH_3)_2-$, branched $C_{4-8}$ alkanediyl, $C_{3-8}$ cycloalkanediyl, 1,2-phenylene, 1,3-phenylene, 1,4-phenylene;
and oligomers, prepolymers, polymers or mixtures thereof; or
wherein (a) is a mixture of (i) and (ii), wherein

(ii) is a polyfunctional cyanate ester of formula (II)

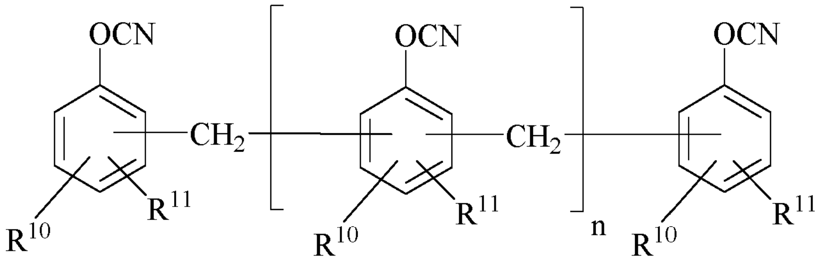

(II)

wherein

n is an integer from 1 to 15; and $R^{10}$ and $R^{11}$ are identical or different and independently from each other selected from the group consisting of hydrogen, linear $C_{1-8}$ alkyl, branched $C_{4-8}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-1)

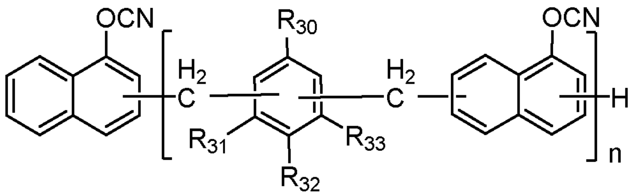

(IX-1)

wherein
n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-2)

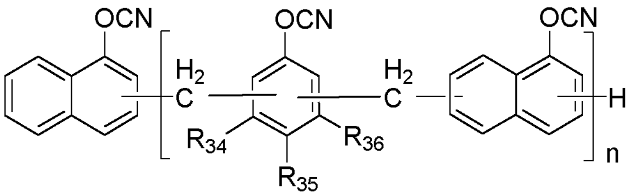

(IX-2)

wherein
n is an integer from 1 to 20; and $R^{34}$, $R^{35}$ and $R^{36}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-3)

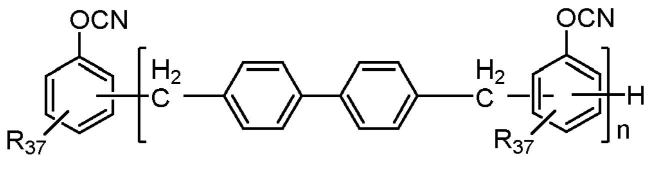

(IX-3)

wherein
n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and
oligomers, prepolymers, polymers or mixtures thereof; or
a polyfunctional cyanate ester of formula (IX-4)

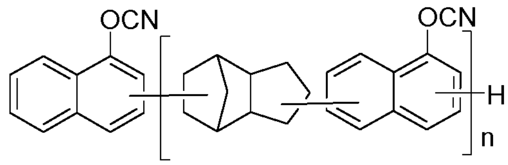

(IX-4)

wherein

n is an integer from 1 to 20; and oligomers, prepolymers, polymers or mixtures thereof;

or any combination of polyfunctional cyanate esters of formulas (II), (IX-1), (IX-2), (IX-3), and (IX-4).

In another embodiment component (a) is one or more cyanate esters independently selected from

(i) a difunctional cyanate ester compound of formula (I)

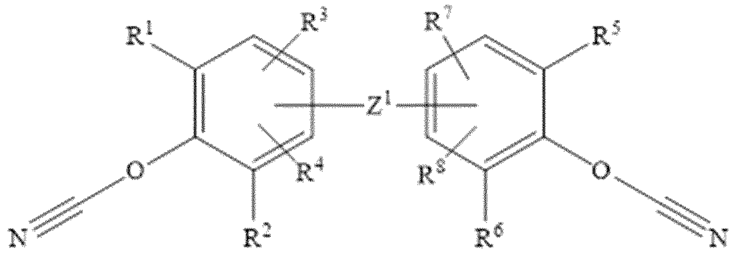

(I)

wherein

$R^1$ through $R^8$ are independently selected from the group consisting of hydrogen, linear $C_{1-3}$ alkyl, linear $C_2$-$C_{10}$ alkenyl, and branched $C_3$-$C_{10}$ alkenyl;

wherein at least one of $R^1$ to $R^8$ is selected from the group consisting of linear $C_2$-$C_{10}$ alkenyl and branched $C_3$-$C_{10}$ alkenyl;

$Z^1$ indicates a direct bond or a divalent moiety selected from the group consisting of -O-, -S-, $-S(=O)_2-$, $-CH_2-$, $-CH(CH_3)-$, $-C(CH_3)_2-$, $-C(CF_3)_2-$, $-C(=CCl_2)-$, branched $C_{4-6}$ alkanediyl, $C_{3-8}$ cycloalkanediyl, 1,2-phenylene, 1,3-phenylene, 1,4-phenylene;

and oligomers, prepolymers, polymers or mixtures thereof; or

wherein (a) is a mixture of (i) and (ii), wherein

(ii) is a polyfunctional cyanate ester of formula (II)

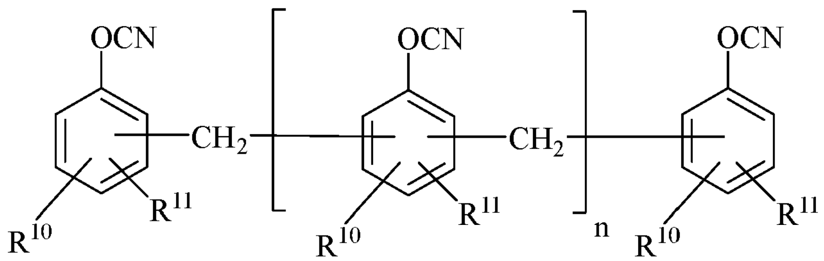

(II)

,

wherein

n is an integer from 1 to 10; and $R^{10}$ and $R^{11}$ are identical or different and independently from each other selected from the group consisting of hydrogen, linear $C_{1-5}$ alkyl, branched $C_{4-6}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-1)

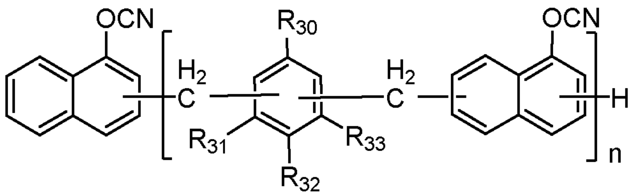

(IX-1)

wherein
n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-2)

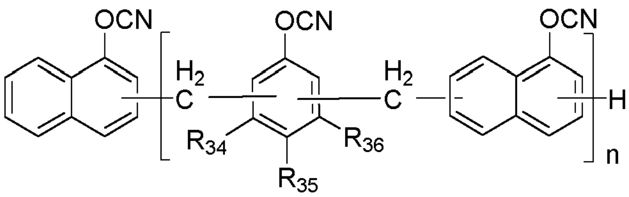

(IX-2)

wherein
n is an integer from 1 to 20; and $R^{34}$, $R^{35}$ and $R^{36}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-3)

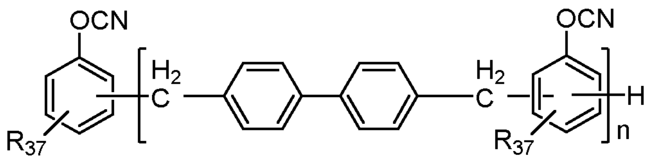

(IX-3)

wherein
n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and
oligomers, prepolymers, polymers or mixtures thereof; or
a polyfunctional cyanate ester of formula (IX-4)

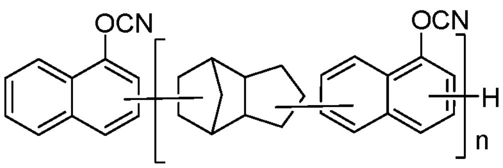

(IX-4)

wherein
n is an integer from 1 to 20; and oligomers, prepolymers, polymers or mixtures thereof;
or any combination of polyfunctional cyanate esters of formulas (II), (IX-1), (IX-2), (IX-3), and (IX-4).

In another embodiment component (a) is one or more cyanate esters independently selected from

(i) a difunctional cyanate ester compound of formula (I)

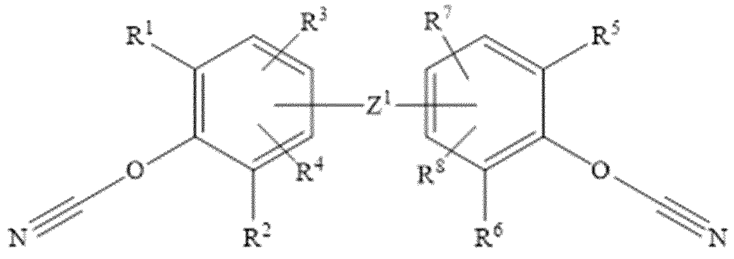

(I)

wherein the difunctional cyanate ester of formula I is independently selected from the group consisting of

i) $R^1$ and $R^5$ are allyl, $R^2$ and $R^6$ are methyl, $R^3$, $R^4$, $R^7$ and $R^8$ are hydrogen and wherein $Z^1$ is $-CH_2-$ (methylene);
ii) $R^1$ and $R^5$ are allyl and $R^2$, $R^3$, $R^4$, $R^6$, $R^7$ and $R^8$ are hydrogen and wherein $Z^1$ is $-CH_2-$(methylene);
iii) $R^1$ and $R^5$ are allyl and $R^2$, $R^3$, $R^4$, $R^6$, $R^7$ and $R^8$ are hydrogen and wherein $Z^1$ is $-C(CH_3)_2-$;
iv) $R^1$ and $R^5$ are allyl and $R^2$, $R^3$, $R^4$, $R^6$, $R^7$ and $R^8$ are hydrogen and $Z^1$ is $-C(=O)-$;
v) $R^1$ and $R^5$ are allyl and $R^2$, $R^3$, $R^4$, $R^6$, $R^7$ and $R^8$ are hydrogen and $Z^1$ is $-S(=O)-$ ;
vi) $R^1$ and $R^5$ are allyl and $R^2$, $R^3$, $R^4$, $R^6$, $R^7$ and $R^8$ are hydrogen and $Z^1$ is $-S-$;
vii) $R^1$ and $R^5$ are allyl and $R^2$, $R^3$, $R^4$, $R^6$, $R^7$ and $R^8$ are hydrogen and $Z^1$ is $-C(CF_3)_2-$;
viii)$R^1$ and $R^5$ are allyl and $R^2$, $R^3$, $R^4$, $R^6$, $R^7$ and $R^8$ are hydrogen and $Z^1$ is $-C(=CCl_2)-$;
ix) $R^1$ and $R^5$ are allyl and $R^2$, $R^3$, $R^4$, $R^6$, $R^7$ and $R^8$ are hydrogen and $Z^1$ is independently selected from the group consisting of

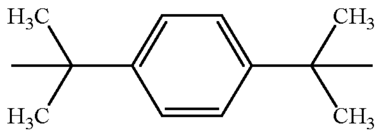 , 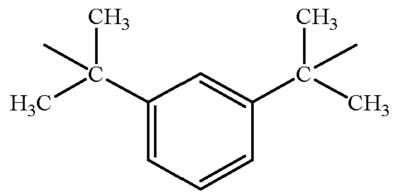 ;

x) $R^1$ and $R^5$ are allyl and $R^2$, $R^3$, $R^4$, $R^6$, $R^7$ and $R^8$ are hydrogen and $Z^1$ is

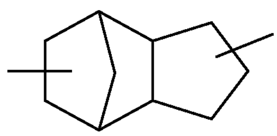 ;

or
xi) $R^1$ and $R^5$ are allyl and $R^2$, $R^3$, $R^4$, $R^6$, $R^7$ and $R^8$ are hydrogen and $Z^1$ is $-CH(CH_3)-$;

and oligomers, prepolymers, polymers or mixtures thereof; or

wherein (a) is a mixture of (i) and (ii), wherein

(ii) is a polyfunctional cyanate ester of formula (II)

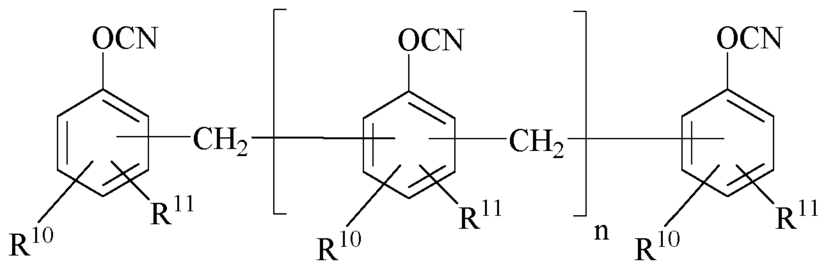 (II)

wherein the polyfunctional cyanate ester is independently selected from the group consisting of compound III, compound IV, compound V, compound VI, and oligomers, prepolymers, polymers or mixtures thereof

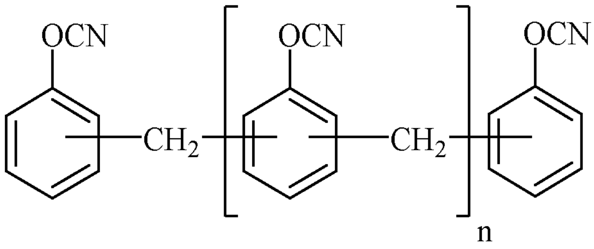

**III**

n is 2 to 3

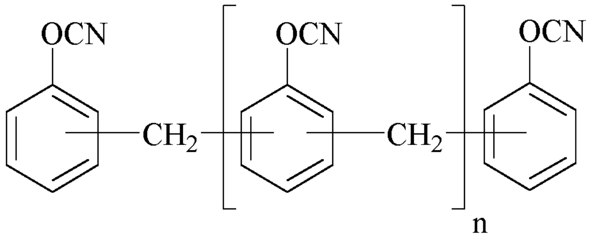

**IV**

n is 3 to 4

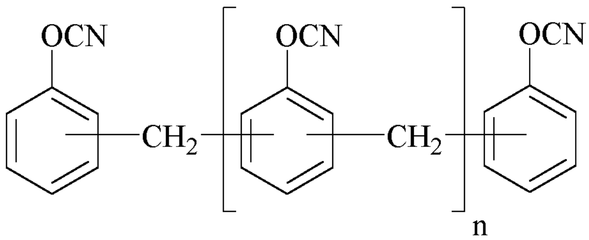

**V**

n is 3 to 6

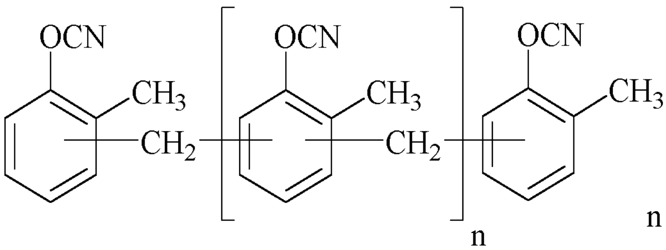

**VI**

n is 3 to 6 on average

;

or

a polyfunctional cyanate ester of formula (IX-1)

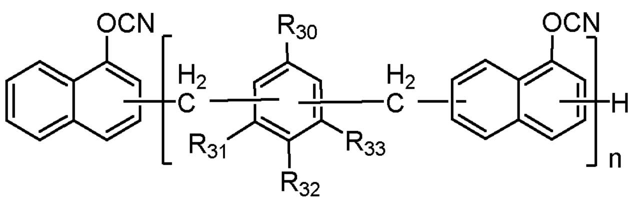

(IX-1)

wherein

n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and
oligomers, prepolymers, polymers or mixtures thereof; or

a polyfunctional cyanate ester of formula (IX-2)

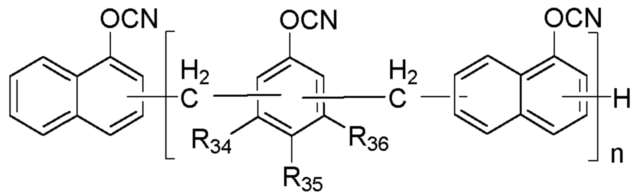

(IX-2)

wherein

n is an integer from 1 to 20; and $R^{34}$, $R^{35}$ and $R^{36}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and
oligomers, prepolymers, polymers or mixtures thereof; or

a polyfunctional cyanate ester of formula (IX-3)

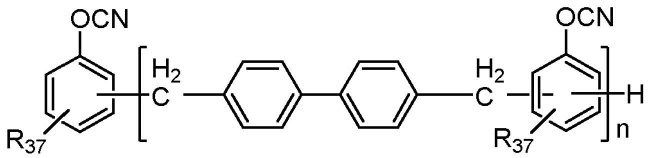

(IX-3)

wherein
n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-4)

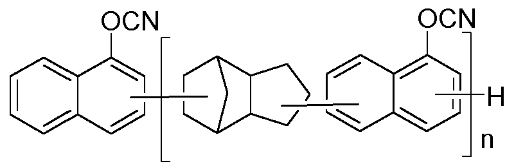

(IX-4)

wherein

n is an integer from 1 to 20; and oligomers, prepolymers, polymers or mixtures thereof;

or any combination of polyfunctional cyanate esters of formulas (II), (IX-1), (IX-2), (IX-3), and (IX-4).

In one embodiment, the polyfunctional cyanate ester is selected from

(i) a polyfunctional cyanate ester of formula (IX-1)

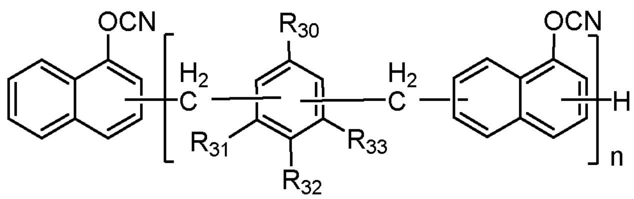

(IX-1)

wherein
n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and

branched $C_3$-$C_{10}$ alkenyl; and oligomers, prepolymers, polymers or mixtures thereof;

(ii) a polyfunctional cyanate ester of formula (IX-2)

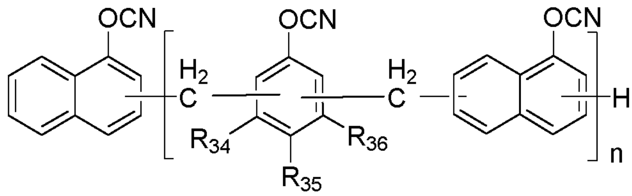

(IX-2)

wherein
n is an integer from 1 to 20; and $R^{34}$, $R^{35}$ and $R^{36}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof;

(iii) a polyfunctional cyanate ester of formula (IX-3)

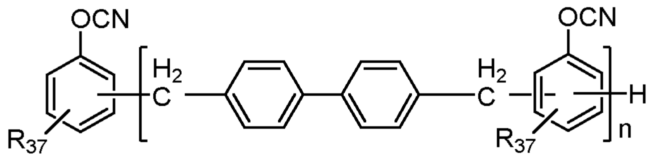

(IX-3)

wherein

n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or

(iv)a polyfunctional cyanate ester of formula (IX-4)

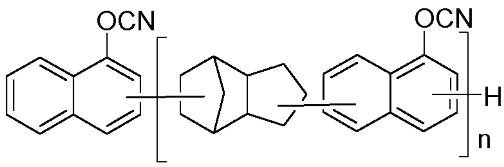

(IX-4)

wherein

n is an integer from 1 to 20; and oligomers, prepolymers, polymers or mixtures thereof;

and any combinations thereof.

In one embodiment, in the difunctional cyanate ester compound of formula (I):

(i) at least two of $R^1$ to $R^8$ are independently selected from the group consisting of linear $C_2$-$C_{10}$ alkenyl and branched $C_3$-$C_{10}$ alkenyl;

preferably two of $R^1$ to $R^8$ are independently selected from the group consisting of linear $C_2$-$C_{10}$ alkenyl and branched $C_3$-$C_{10}$ alkenyl;
more preferably $R^1$ and $R^5$ are independently selected from the group consisting of linear $C_2$-$C_{10}$ alkenyl and branched $C_3$-$C_{10}$ alkenyl and $R^2$, $R^3$, $R^4$, $R^6$, $R^7$ and $R^8$ are hydrogen;

(ii) at least two of $R^1$ to $R^8$ are independently selected from the group consisting of allyl and vinyl;

preferably two of $R^1$ to $R^8$ are independently selected from the group consisting of allyl and vinyl;

more preferably $R^1$ and $R^5$ are independently selected from the group consisting of allyl and vinyl and $R^2$, $R^3$, $R^4$, $R^6$, $R^7$ and $R^8$ are hydrogen; or

(iii) $R^1$ and $R^5$ are allyl and $R^2$, $R^3$, $R^4$, $R^6$, $R^7$ and $R^8$ are hydrogen.

In another embodiment, component (a) is one or more cyanate esters independently selected from

(i) a difunctional cyanate ester compound of formula

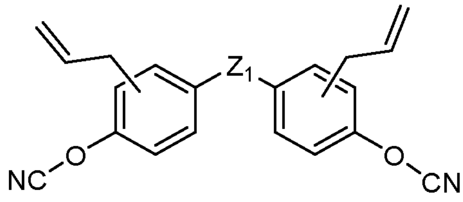

,

wherein

$Z^1$ indicates a direct bond or a divalent moiety selected from the group consisting of -O-, -S-, -S(=O)-, $-S(=O)_2-$, $-CH_2-$, $-CH(CH_3)-$, $-C(CH_3)_2-$,$-CH(CF_3)-$, $-C(CF_3)_2-$, -C(=O)-, $-C(=CH_2)-$, $-C(=CCl_2)-$, $-Si(CH_3)_2-$, linear $C_{1-10}$ alkanediyl, branched $C_{4-10}$ alkanediyl, $C_{3-8}$ cycloalkanediyl, 1,2-phenylene, 1,3-phenylene, 1,4-phenylene, $-N(R^{13})-$ wherein $R^{13}$ is selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, phenyl and phenoxy, and moieties of formulas

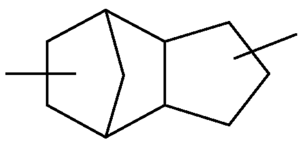

and

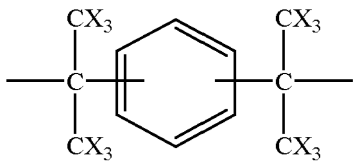

,

wherein X is independently selected from hydrogen and halogen and oligomers, polymers or mixtures thereof; or

wherein (a) is a mixture of (i) and (ii), wherein

(ii) is a polyfunctional cyanate ester of formula (II)

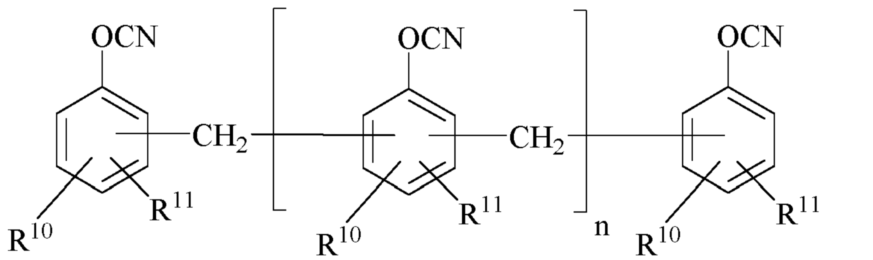

(II)

,

wherein

n is an integer from 1 to 20; and $R^{10}$ and $R^{11}$ are identical or different and independently from each other selected from the group consisting of hydrogen, linear $C_{1-10}$ alkyl, branched $C_{4-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-1)

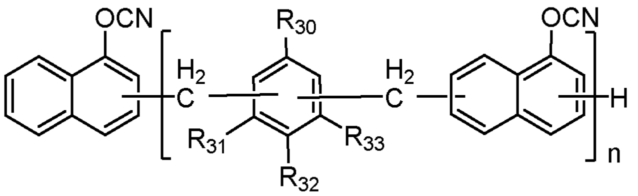

(IX-1)

wherein

n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-2)

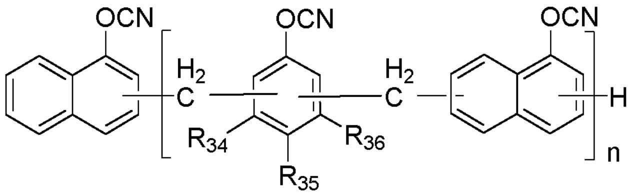

(IX-2)

wherein

n is an integer from 1 to 20; and $R^{34}$, $R^{35}$ and $R^{36}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-3)

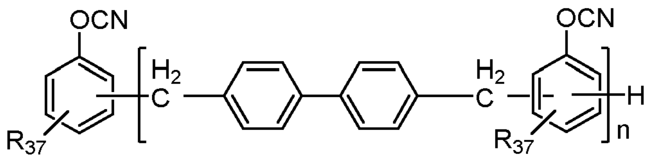

(IX-3)

wherein

n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and

oligomers, prepolymers, polymers or mixtures thereof; or

a polyfunctional cyanate ester of formula (IX-4)

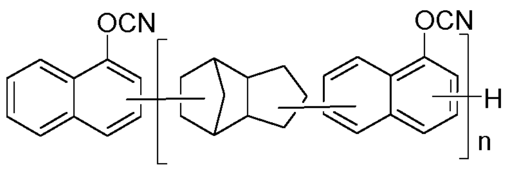

(IX-4)

wherein

n is an integer from 1 to 20; and oligomers, prepolymers, polymers or mixtures thereof;

or any combination of polyfunctional cyanate esters of formulas (II), (IX-1), (IX-2), (IX-3), and (IX-4).

In a particularly preferred embodiment, component (a) is one or more cyanate esters independently selected from

(i) a difunctional cyanate ester compound of formula

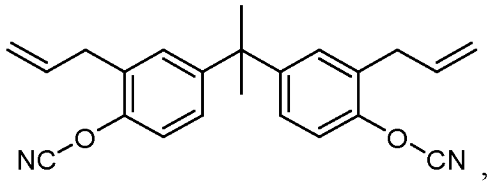

or

wherein (a) is a mixture of (i) and (ii), wherein

(ii) is a polyfunctional cyanate ester of formula (II)

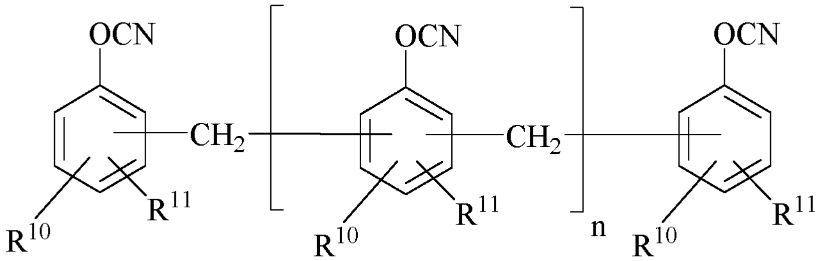

(II)

wherein

n is an integer from 1 to 20; and $R^{10}$ and $R^{11}$ are identical or different and independently from each other selected from the group consisting of hydrogen, linear $C_{1-10}$ alkyl, branched $C_{4-10}$ alkyl, linear $C_2$-$C_{10}$ alkenyl, and branched $C_3$-$C_{10}$ alkenyl; and oligomers, prepolymers, polymers or mixtures thereof.

In a particularly preferred embodiment, component (a) is one or more cyanate esters independently selected from

(i) a difunctional cyanate ester compound of formula

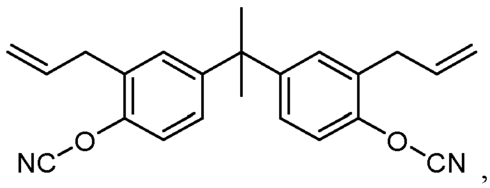

or

wherein (a) is a mixture of (i) and (ii), wherein

(ii) is a polyfunctional cyanate ester of formula (II)

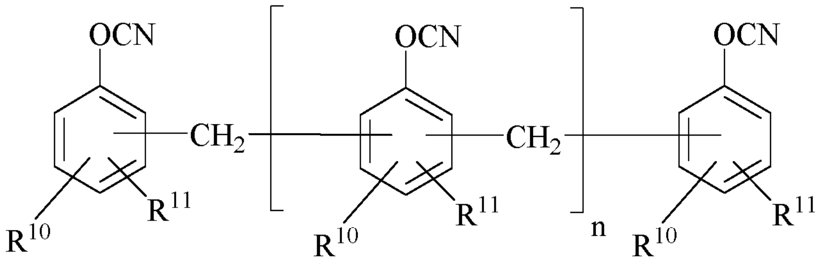

(II)

wherein

n is an integer from 1 to 20; and $R^{10}$ and $R^{11}$ are identical or different and independently from each other selected from the group consisting of hydrogen, linear $C_{1-10}$ alkyl, branched $C_{4-10}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-1)

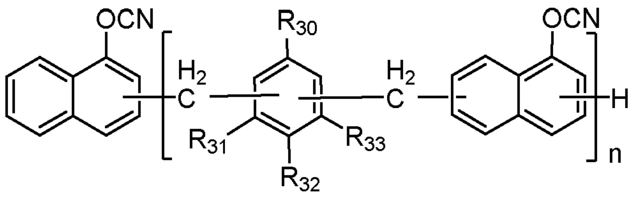

(IX-1)

wherein
n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-2)

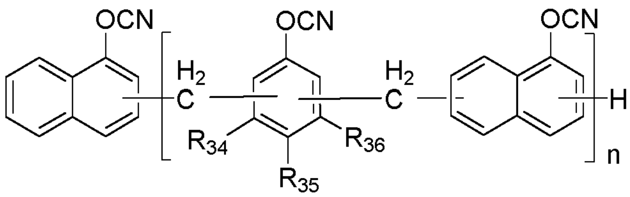

(IX-2)

wherein
n is an integer from 1 to 20; and $R^{34}$, $R^{35}$ and $R^{36}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-3)

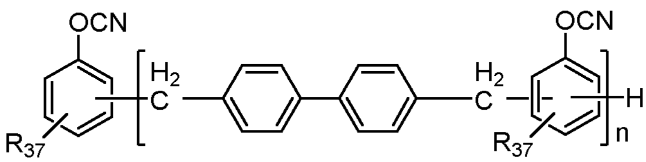

(IX-3)

wherein
n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and
oligomers, prepolymers, polymers or mixtures thereof; or
a polyfunctional cyanate ester of formula (IX-4)

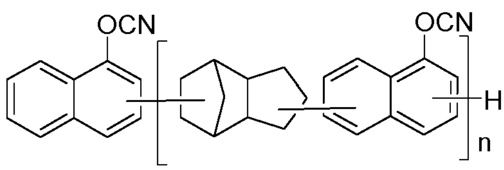

(IX-4)

wherein
n is an integer from 1 to 20; and oligomers, prepolymers, polymers or mixtures thereof;
or any combination of polyfunctional cyanate esters of formulas (II), (IX-1), (IX-2), (IX-3), and (IX-4).

In one embodiment, component (b) is one or more substituted bisimide compound independently selected from a compound of formula (X)

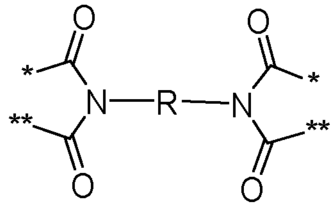

X

wherein * and ** each denotes a covalent bond to the respective C atom denoted with * and ** of a residue, wherein the residues are identical or different and independently selected from

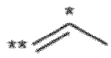 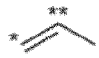 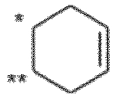 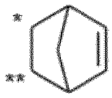 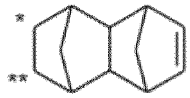 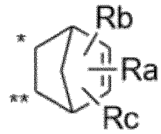 ,

and wherein
R is independently selected from alkyl, cycloalkyl, alkyne, aryl, aralkyl and alkaryl;
Ra, Rb, and Rc are independently selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, halogenated $C_{3-8}$ cycloalkyl, linear $C_2$-$C_{10}$ alkenyl, branched $C_3$-$C_{10}$ alkenyl, $C_{1-10}$ alkoxy, halogen, phenyl and phenoxy,
or Ra and Rb, Ra and Rc, or Rb and Rc may together form a 3 to 8 membered cycloalkyl or a 3 to 8 membered cycloalkenyl;
and oligomers, prepolymers, polymers or mixtures of these compounds.

**In** another embodiment, R in component of formula (X) is independently selected from aryl, linear or branched $C_{1-10}$ alkyl, $C_3$-$C_8$ cycloalkyl, $C_{2-10}$ alkyne or the moiety <<"N"-R-"N">>, wherein <<"N"-R-"N">> is an aromatic amine moiety independently selected from ("N" denotes the point of connectivity)

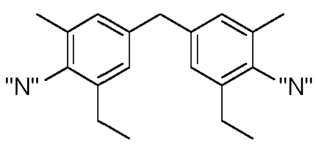 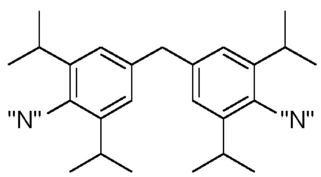 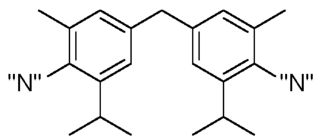

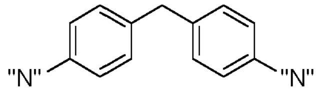 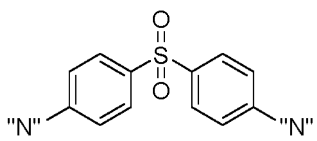 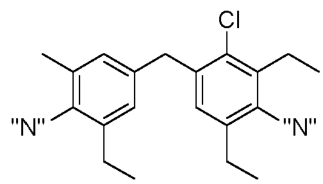

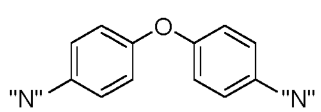 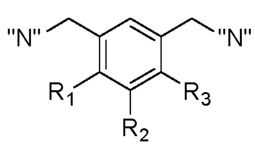 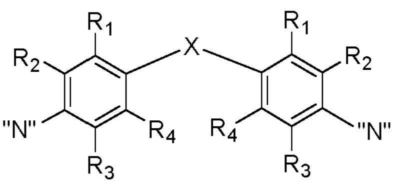

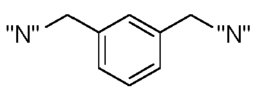 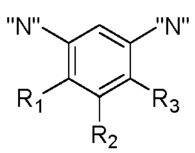 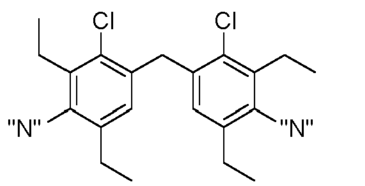

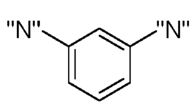

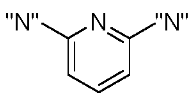

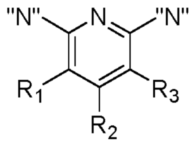

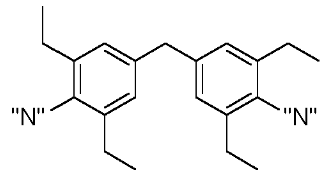

wherein

R$_1$, R$_2$, R$_3$ and R$_4$ are each independently selected from hydrogen, $C_2$-$C_{20}$ alkyl, $C_2$-$C_{20}$ alkene, $C_2$-$C_{20}$ alkyne, halogen (preferably Cl, Br, F, or I), $NO_2$, and sulfone; and
X is independently selected from $C_1$-$C_{20}$ alkyl, $C_2$-$C_{20}$ alkene, $C_2$-$C_{20}$ alkyne and sulfone;
and oligomers, prepolymers, polymers or mixture thereof.

Suitable substituted bisimide compounds as component (b) include

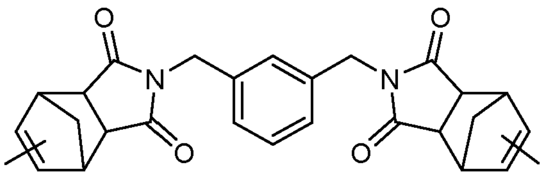

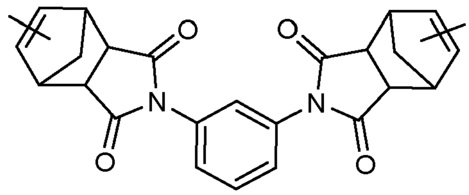

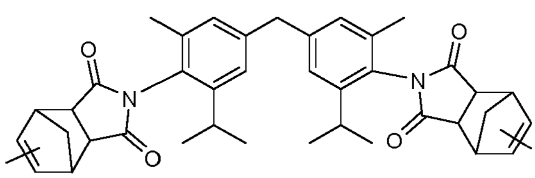

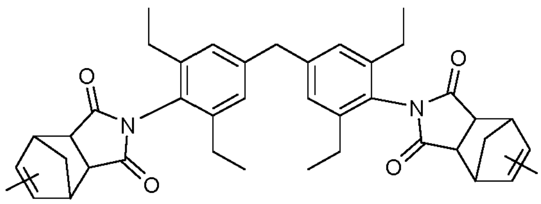

.

In another embodiment component (b) is one or more substituted bisimide compound independently selected from

b1) at least one selected from the group of biscitraconimide compound of formula (X1), bisitaconimide compound of formula (X2) and citraconimido-itaconimide compound of formula (X3), and oligomers, prepolymers, polymers or mixtures thereof

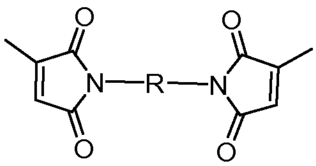

(X1)

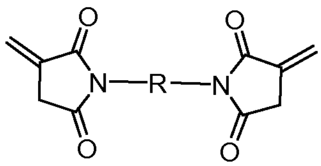

(X2)

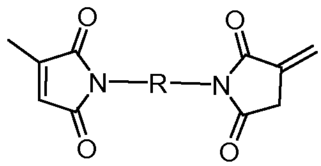

(X3)

or
b2) a bisnadicimide compound of formula (X4) and oligomers, prepolymers, polymers or mixtures thereof

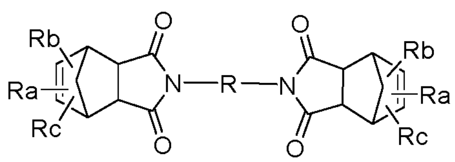

(X4)

wherein

Ra, Rb, and Rc are independently selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, halogenated $C_{3-8}$ cycloalkyl, linear $C_2$-$C_{10}$ alkenyl, branched $C_3$-$C_{10}$ alkenyl, $C_{1-10}$ alkoxy, halogen, phenyl and phenoxy, or Ra and Rb, Ra and Rc, or Rb and Rc may together form a 3 to 8 membered cycloalkyl or a 3 to 8 membered cycloalkenyl;

or

b3) a bistetrahydroimide compound of formula (X5) and oligomers, prepolymers, polymers or mixtures thereof

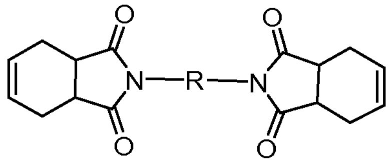

(X5) ;

wherein

R is independently selected from aryl, linear or branched $C_1$-$C_{10}$ alkyl, $C_3$-$C_8$ cycloalkyl, $C_2$-$C_{10}$ alkyne or the moiety <<"N"-R-"N">>, wherein <<"N"-R-"N">> is an aromatic amine moiety independently selected from ("N" denotes the point of connectivity)

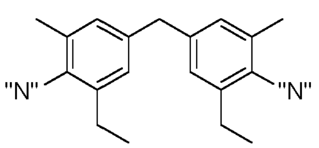
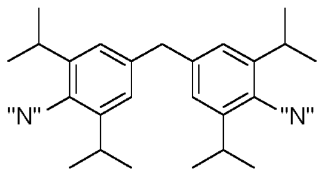
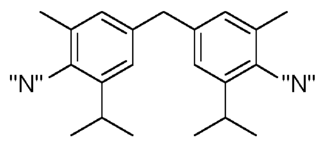
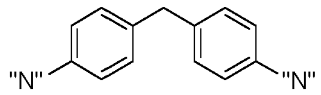
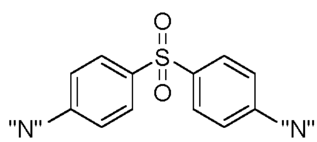
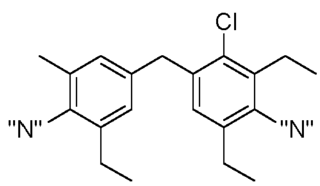
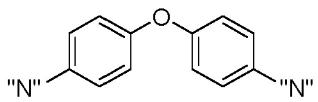
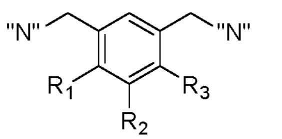
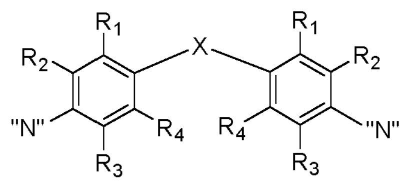
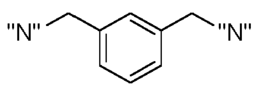
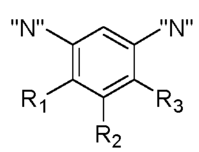
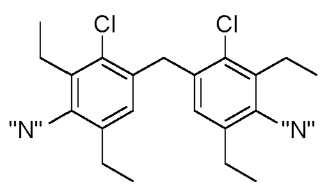
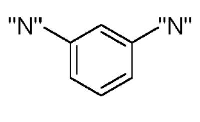
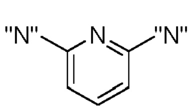
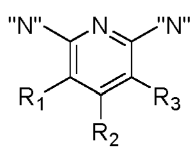
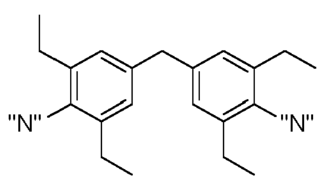

wherein
$R_1$, $R_2$, $R_3$ and $R_4$ are each independently selected from hydrogen, $C_1$-$C_{20}$ alkyl, $C_2$-$C_{20}$ alkene, $C_2$-$C_{20}$ alkyne, halogen (preferably Cl, Br, F, or I), $NO_2$, and sulfone;
X is independently selected from $C_1$-$C_{20}$ alkyl, $C_2$-$C_{20}$ alkene, $C_2$-$C_{20}$ alkyne and sulfone;
and oligomers, prepolymers, polymers or mixture thereof.

In another embodiment, component (b) is one or more substituted bisimide compound independently selected from

b1) at least one selected from the group of biscitraconimide compound of formula (X1), bisitaconimide compound of formula (X2) and citraconimido-itaconimide compound of formula (X3), and oligomers, prepolymers, polymers or mixtures thereof

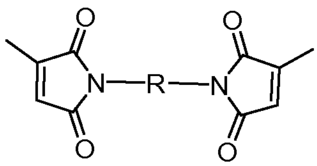
(X1)

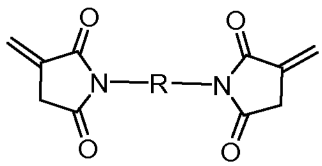
(X2)

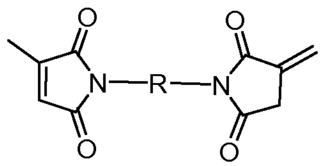
(X3)

or

b2) a bisnadicimide compound of formula (X4) and oligomers, prepolymers, polymers or mixtures thereof

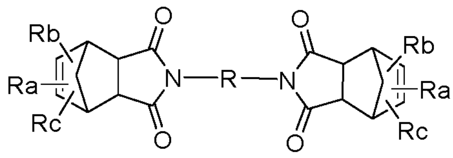
(X4)

wherein

Ra, Rb, and Rc are independently selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, halogenated $C_{3-8}$ cycloalkyl, linear $C_2$-$C_{10}$ alkenyl, branched $C_3$-$C_{10}$ alkenyl, $C_{1-10}$ alkoxy, halogen, phenyl and phenoxy,
or Ra and Rb, Ra and Rc, or Rb and Rc may together form a 3 to 8 membered cycloalkyl or a 3 to 8 membered cycloalkenyl,

or

b3) a bistetrahydroimide compound of formula (X5) and oligomers, prepolymers, polymers or mixtures thereof

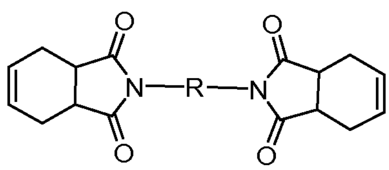
(X5) ;

wherein R is <<"N"-R-"N">> which is an aromatic amine moiety independently selected from ("N" denotes the point of connectivity)

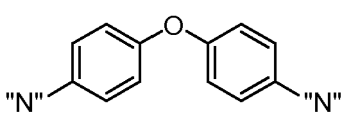 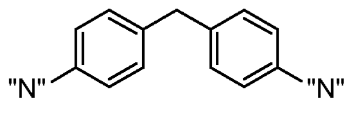 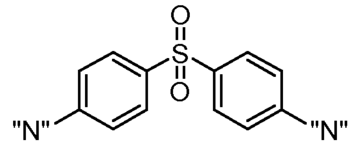

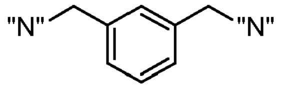 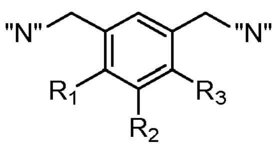 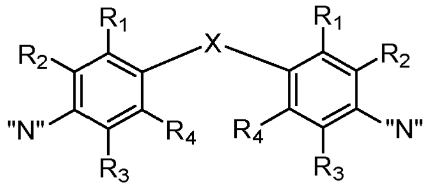

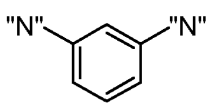 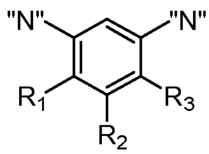

wherein

$R_1$, $R_2$, $R_3$ and $R_4$ are each independently selected from hydrogen, $C_1$-$C_5$ alkyl, halogen (preferably Cl, Br, or F), $NO_2$, and sulfone, and
X is independently selected from $C_1$-$C_{20}$ alkyl, $C_2$-$C_{20}$ alkene, $C_2$-$C_{20}$ alkyne and sulfone;
and oligomers, prepolymers, polymers or mixtures thereof.

**In** another embodiment, component (b) is one or more substituted bisimide compound independently selected from

b1) at least one selected from the group of biscitraconimide compound of formula (X1), bisitaconimide compound of formula (X2) and citraconimido-itaconimide compound of formula (X3), and oligomers, prepolymers, polymers or mixtures thereof

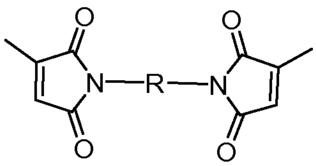
(X1)

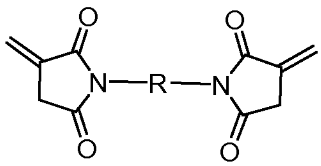
(X2)

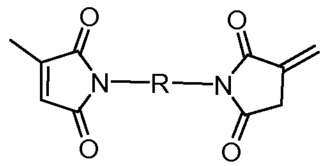
(X3)

or

b2) a bisnadicimide compound of formula (X4) and oligomers, prepolymers, polymers or mixtures thereof

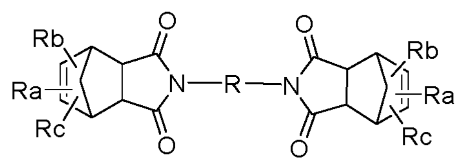
(X4)

wherein

Ra, Rb, and Rc are independently selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, halogenated $C_{3-8}$ cycloalkyl, linear $C_2$-$C_{10}$ alkenyl, branched $C_3$-$C_{10}$ alkenyl, $C_{1-10}$ alkoxy, halogen, phenyl and phenoxy,

or Ra and Rb, Ra and Rc, or Rb and Rc may together form a 3 to 8 membered cycloalkyl or a 3 to 8 membered cycloalkenyl,

or

b3) a bistetrahydroimide compound of formula (X5) and oligomers, prepolymers, polymers or mixtures thereof

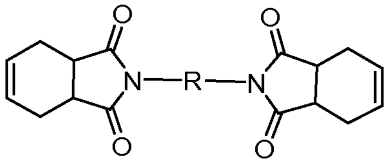

(X5) ;

wherein R is independently selected from 4,4'-methylene diphenylene, o-phenylene, and m-xylylene;
and oligomers, prepolymers, polymers or mixtures thereof.

In the context of the present invention, it is to be understood that component (b) can be any mixture of compounds of formula X, such as any mixture containing two or more of X1, X2, X3, X4, and X5, or any mixture containing X1, X2, and X3.

In a further preferred embodiment, component (b) is one or more substituted bisimide compound selected from the group consisting of biscitraconimide compound of formula (X1), bisitaconimide compound of formula (X2) and citraconimido-itaconimide compound of formula (X3)

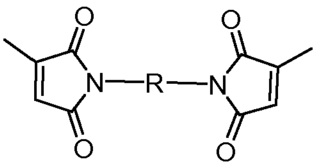

(X1)

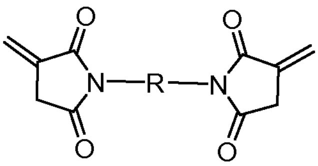

(X2)

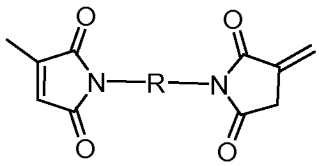

(X3)

wherein R is independently selected from 4,4'-methylene diphenylene, o-phenylene, and m-xylylene;
and oligomers, prepolymers, polymers or mixtures thereof.

In another embodiment, component (b) is one or more substituted bisimide compound selected from the group consisting of biscitraconimide compound of formula (X1), bisitaconimide compound of formula (X2), and citraconimido-itaconimide compound of formula (X3)

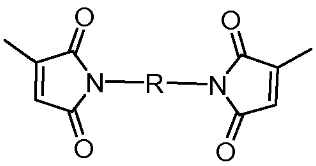

(X1)

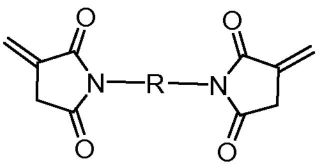

(X2)

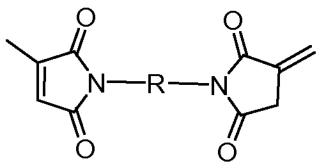

(X3)

wherein R is m-xylylene;
and oligomers, prepolymers, polymers or mixtures thereof.

In another embodiment, component (b) is a biscitraconimide compound of formula (X1),

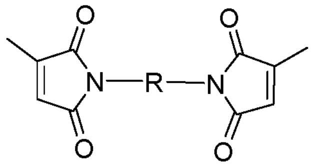

(X1)

,

wherein R is m-xylylene;
and oligomers, prepolymers, polymers or mixtures thereof.

In the compositions according to the invention the ratio of component (a) to component (b) may vary depending on the thermoset composite to be formed and the desired properties thereof, e.g. thermal-oxidative stability, glass transition temperature (Tg) and reduction in void formation.

In one embodiment the ratio of component (a) to component (b) is from 80 wt.-% component (a) to 20 wt.-% component (b), from 75 wt.-% component (a) to 25 wt.-% component (b) from 70 wt.-% component (a) to 30 wt.-% component (b), from 65 wt.-% component (a) to 35 wt.- % component (b), from 60 wt.-% component (a) to 40 wt.-% component (b), from 55 wt.-% component (a) to 45 wt.-% component (b), from 50 wt.-% component (a) to 50 wt.-% component (b), from 45 wt.-% component (a) to 55 wt.-% component (b), from 40 wt.-% component (a) to 60 wt.-% component (b), from 35 wt.-% component (a) to 65 wt.-% component (b), from 30 wt.-% component (a) to 70 wt.-% component (b), or from 25 wt.-% component (a) to 75 wt.-% component (b) based on total amount of the resin composition.

In one embodiment the ratio of component (a) to (b) is in the range of from 10-70 wt.-% component (a) to 90-30 wt.-% component (b) based on total amount of the resin composition.

In one embodiment the ratio of component (a) to (b) is in the range of from 20-70 wt.-% component (a) to 80-30 wt.-% component (b) based on total amount of the resin composition.

In one embodiment the ratio of component (a) to (b) is in the range of from 30-70 wt.-% component (a) to 70-30 wt.-% component (b) based on total amount of the resin composition.

In one embodiment the ratio of component (a) to (b) is in the range of from 40-60 wt.-% component (a) to 60-40 wt.-% component (b) based on total amount of the resin composition.

In one embodiment the ratio of component (a) to (b) is in the range of from 25-75 wt.-% component (a) to 75-25 wt.-% component (b) based on total amount of the resin composition.

In one embodiment the ratio of component (a) to component (b) is 80 parts by weight of component (a) to 20 parts by weight of component (b) based on total amount of the resin composition, in order to allow a good processability of the mixture.

In one embodiment the ratio of component (a) to component (b) is 70 parts by weight of component (a) to 30 parts by weight of component (b) based on total amount of the resin composition, in order to allow a good processability of the mixture.

In one embodiment the ratio of component (a) to component (b) is 60 parts by weight of component (a) to 40 parts by weight of component (b) based on total amount of the resin composition, in order to allow a good processability of the mixture.

In one embodiment the ratio of component (a) to component (b) is 50 parts by weight of component (a) to 50 parts by weight of component (b) based on total amount of the resin composition, in order to allow a good processability of the mixture.

In one embodiment the ratio of component (a) to component (b) is 40 parts by weight of component (a) to 60 parts by weight of component (b) based on total amount of the resin composition, in order to allow a good processability of the mixture.

In one embodiment the ratio of component (a) to component (b) is 30 parts by weight of component (a) to 70 parts by weight of component (b) based on total amount of the resin composition, in order to allow a good processability of the mixture.

In one embodiment the ratio of component (a) to component (b) is 20 parts by weight of component (a) to 80 parts by weight of component (b) based on total amount of the resin composition, in order to allow a good processability of the mixture.

In one embodiment, the composition further comprises a catalyst selected from the group consisting of aliphatic mono-, di- and polyamines, aromatic mono-, di- and polyamines, carbocyclic mono-, di- and polyamines, heterocyclic mono-, di- and polyamines, compounds containing a five- or six-membered nitrogen-containing heterocyclic ring, hydroxyamines, phosphines, phenols, bisphenols, and mixtures thereof.

The catalyst can be comprised in the composition in amount of 0 to 20 wt.-% based on total amount of the resin

composition. The catalyst can be comprised in the composition in amount of 0.01 to 20 wt.-% based on total amount of the resin composition. An amount of 0 to 20 wt.- % includes about 1 wt.-%, about 2 wt.-%, about 3 wt.-%, about 4 wt.-%, about 5 wt.-%, about 6 wt.-%, about 7 wt.-%, about 8 wt.-%, about 9 wt.-%, about 10 wt.-%, about 11 wt.-%, about 12 wt.-%, about 13 wt.-%, about 14 wt.-%, about 15 wt.-%, about 16 wt.-%, about 17 wt.-%, about 18 wt.-%, about 19 wt.-%, or about 20 wt.-%, based on total amount of the resin composition. In one embodiment, catalyst can be comprised in the composition in amount of 0 to 20 wt.-%, 0 to 15 wt.-%, or 0 to 10 wt.-% based on total amount of the resin composition. In one embodiment, catalyst can be comprised in the composition in amount of 0.01 to 20 wt.-%, 0.1 to 15 wt.-%, or 1 to 10 wt.-% based on total amount of the resin composition.

In one embodiment, the catalyst comprises a bisphenol such as bisphenol A or a substituted bisphenol A.

In one embodiment, the catalyst is a compound of formula (VII)

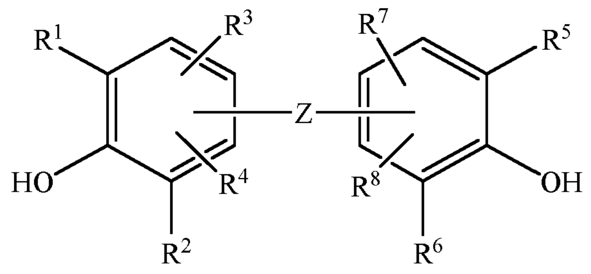

(VII)

wherein

$R^1$ through $R^8$ are independently selected from the group consisting of hydrogen, linear $C_{1-10}$ alkyl, linear $C_2$-$C_{10}$ alkenyl, halogenated linear $C_{1-10}$ alkyl, branched $C_{4-10}$ alkyl, branched $C_3$-$C_{10}$ alkenyl, halogenated branched $C_{4-10}$ alkyl, $C_{3-8}$ cycloalkyl, halogenated $C_{3-8}$ cycloalkyl, $C_{1-10}$ alkoxy, halogen, phenyl and phenoxy, preferably $R^1$ through $R^8$ are independently selected from the group consisting of hydrogen, linear $C_{1-10}$ alkyl, linear $C_2$-$C_{10}$ alkenyl, and branched $C_3$-$C_{10}$ alkenyl,
wherein at least one of $R^1$ to $R^8$ is selected from the group consisting of linear $C_2$-$C_{10}$ alkenyl (such as allyl or vinyl) and branched $C_3$-$C_{10}$ alkenyl, preferably wherein $R^1$ and $R^5$ are selected from the group consisting of linear $C_2$-$C_{10}$ alkenyl (such as allyl or vinyl) and branched $C_3$-$C_{10}$ alkenyl and optionally and $R^2$, $R^3$, $R^4$, $R^6$, $R^7$ and $R^8$ are hydrogen;
Z indicates a direct bond or a divalent moiety selected from the group consisting of -O-, -S-, -S(=O)-, $-S(=O)_2-$, $-CH_2-$, $-CH(CH_3)-$, $-C(CH_3)_2-$, $-CH(CF_3)-$, $-C(CF_3)_2-$, -C(=O)-, $-C(=CH_2)-$, $-C(=CCl_2)-$, $-Si(CH_3)_2-$, linear $C_{1-10}$ alkanediyl, branched $C_{4-10}$ alkanediyl, $C_{3-8}$ cycloalkanediyl, 1,2-phenylene, 1,3-phenylene, 1,4-phenylene, $-N(R^{13})-$ wherein $R^{13}$ is selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, phenyl and phenoxy, and moieties of formulas

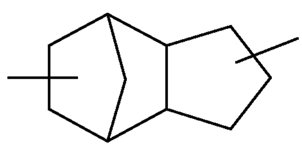

and

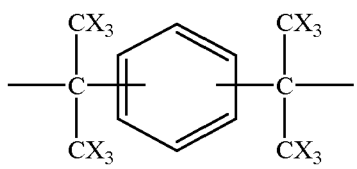

;

wherein X is independently selected from hydrogen and halogen;
and oligomers, prepolymers, polymers or mixtures thereof.

Preferably, the catalyst is a compound according to the following formula

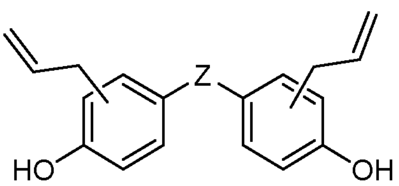

wherein

Z indicates a direct bond or a divalent moiety selected from the group consisting of -O-, -S-, -S(=O)-, -S(=O)$_2$-, -CH$_2$-, -CH(CH$_3$)-, -C(CH$_3$)$_2$-,-CH(CF$_3$)-, -C(CF$_3$)$_2$-, -C(=O)-, -C(=CH$_2$)-, -C(=CCl$_2$)-, -Si(CH$_3$)$_2$-, linear $C_{1-10}$ alkanediyl, branched $C_{4-10}$ alkanediyl, $C_{3-8}$ cycloalkanediyl, 1,2-phenylene, 1,3-phenylene, 1,4-phenylene, -N(R$^{13}$)- wherein R$^{13}$ is selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, phenyl and phenoxy, and moieties of formulas

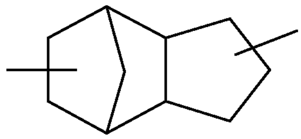

and

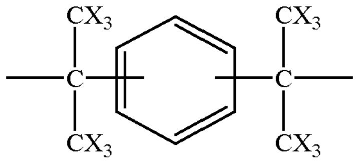

,

wherein X is independently selected from hydrogen and halogen; and oligomers, polymers or mixtures thereof.

More preferably, the catalyst is a compound according to the following formula

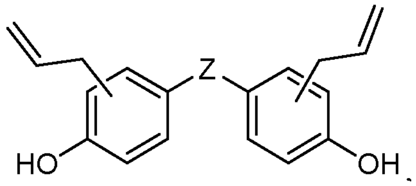

.

wherein
Z indicates a direct bond or a divalent moiety selected from the group consisting of -CH$_2$-, -CH(CH$_3$)-, and -C(CH$_3$)$_2$-, preferably Z is -C(CH$_3$)$_2$-.

Even more preferably, the catalyst is 4,4'-propane-2,2-diylbis[2-(prop-2-en-1-yl)phenol]

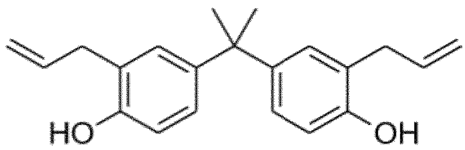

One group of compositions according to the invention are those comprising components (a) and (b) wherein component (a) is one or more cyanate esters independently selected from

(i) a difunctional cyanate ester compound of formula (I)

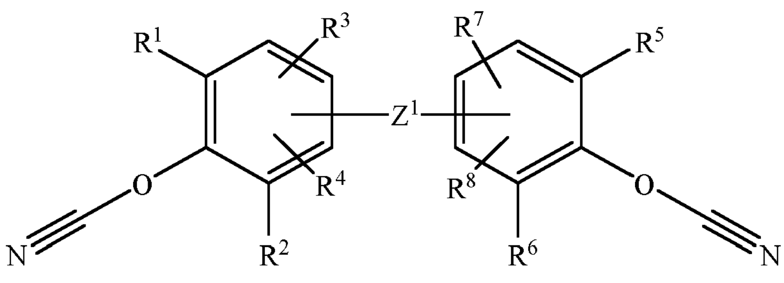

(I)

wherein

R$^1$ through R$^8$ are independently selected from the group consisting of hydrogen, linear $C_{1-10}$ alkyl, $C_{3-8}$ cycloalkyl, linear $C_2$-$C_{10}$ alkenyl, and branched $C_3$-$C_{10}$ alkenyl,

wherein at least one of R$^1$ to R$^8$ is selected from the group consisting of linear $C_2$-$C_{10}$ alkenyl and branched $C_3$-$C_{10}$ alkenyl;

$Z^1$ indicates a direct bond or a divalent moiety selected from the group consisting of -O-, -S-, -S(=O)-, $-S(=O)_2-$, $-CH_2-$, $-CH(CH_3)-$, $-C(CH_3)_2-$, $-CH(CF_3)-$, $-C(CF_3)_2-$, -C(=O)-, $-C(=CH_2)-$, $-C(=CCl_2)-$, $-Si(CH_3)_2-$, linear $C_{1-10}$ alkanediyl, branched $C_{4-10}$ alkanediyl, $C_{3-8}$ cycloalkanediyl, 1,2-phenylene, 1,3-phenylene, 1,4-phenylene, $-N(R^{13})-$ wherein $R^{13}$ is selected from the group consisting of hydrogen, linear $C_{1-10}$ alkyl, $C_{3-8}$ cycloalkyl, phenyl and phenoxy, and moieties of formulas

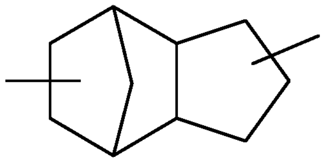

and

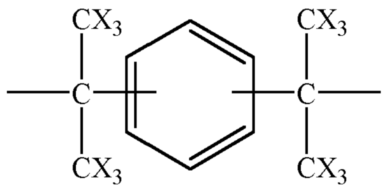

wherein X is independently selected from hydrogen and halogen; and oligomers, prepolymers, polymers or mixtures thereof; or

wherein (a) is a mixture of (i) and (ii), wherein

(ii) is a polyfunctional cyanate ester of formula (II)

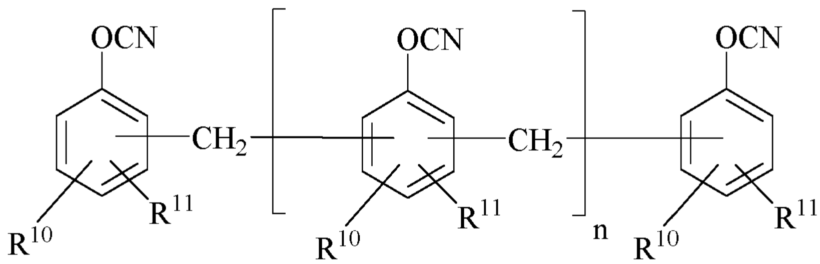

(II)

wherein

n is an integer from 1 to 20; and $R^{10}$ and $R^{11}$ are identical or different and independently from each other selected from the group consisting of hydrogen, linear $C_{1-10}$ alkyl, branched $C_{4-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-1)

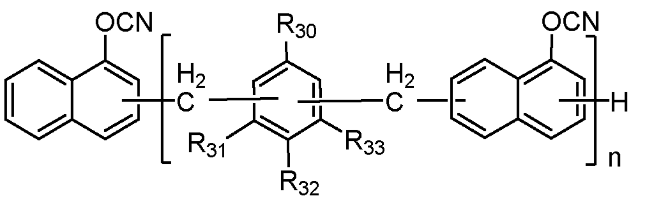

(IX-1)

wherein
n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-2)

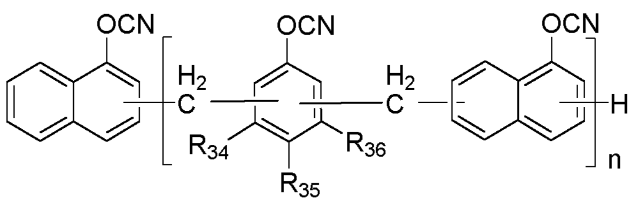

(IX-2)

wherein

n is an integer from 1 to 20; and $R^{34}$, $R^{35}$ and $R^{36}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-3)

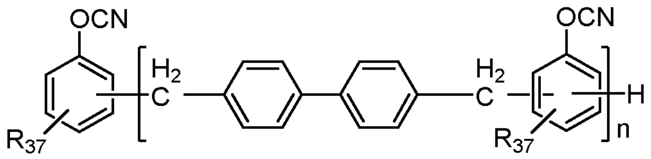

(IX-3)

wherein

n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-4)

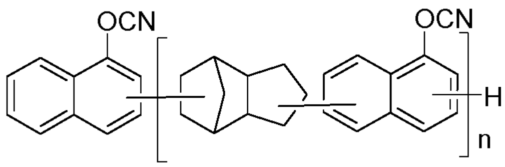

(IX-4)

wherein

n is an integer from 1 to 20; and oligomers, prepolymers, polymers or mixtures thereof;

or any combination of polyfunctional cyanate esters of formulas (II), (IX-1), (IX-2), (IX-3), and (IX-4);

and

wherein component (b) is one or more substituted bisimide independently selected from a biscitraconimide compound of formula (X1)

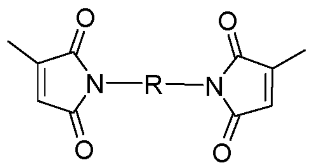

(X1)

wherein R is m-xylylene; and oligomers, prepolymers, polymers or mixtures thereof, or

b1) at least one selected from the group of biscitraconimide compound of formula (X1), bisitaconimide compound of formula (X2) and citraconimido-itaconimide compound of formula (X3), and oligomers, prepolymers, polymers or mixtures thereof

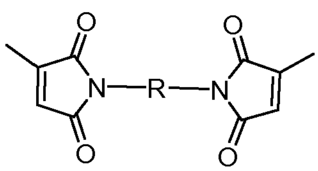

(X1)

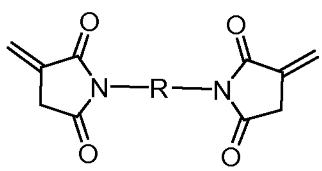

(X2)

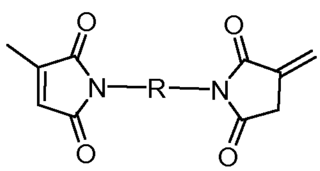

(X3)

or

b2) a bisnadicimide compound of formula (X4) and oligomers, prepolymers, polymers or mixtures thereof,

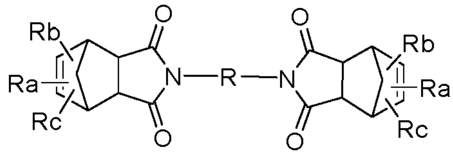

(X4)

wherein

Ra, Rb, and Rc are independently selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, halogenated $C_{3-8}$ cycloalkyl, linear $C_2$-$C_{10}$ alkenyl, branched $C_3$-$C_{10}$ alkenyl, $C_{1-10}$ alkoxy, halogen, phenyl and phenoxy,

or Ra and Rb, Ra and Rc, or Rb and Rc may together form a 3 to 8 membered cycloalkyl or a 3 to 8 membered cycloalkenyl;

or

b3) a bistetrahydroimide compound of formula (X5) and oligomers, prepolymers, polymers or mixtures thereof

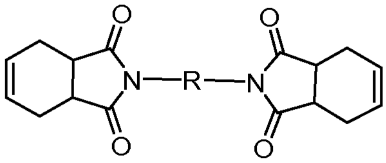

(X5) ;

wherein

R is independently selected from aryl, linear or branched $C_1$-$C_{10}$ alkyl, $C_3$-$C_8$ cycloalkyl, $C_2$-$C_{10}$ alkyne or the moiety <<"N"-R-"N">> , wherein <<"N"-R-"N">> is an aromatic amine moiety independently selected from ("N" denotes the point of connectivity)

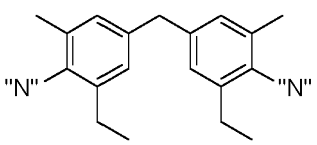
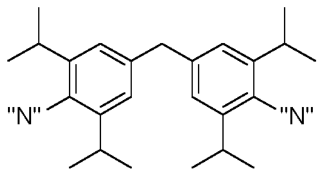
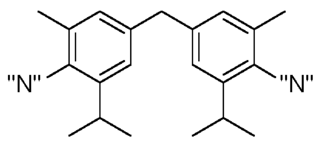
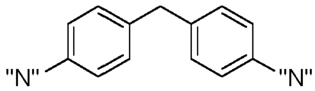
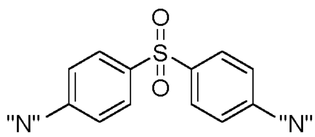
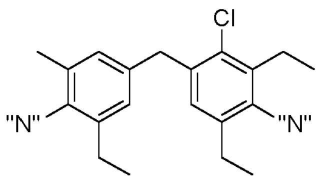
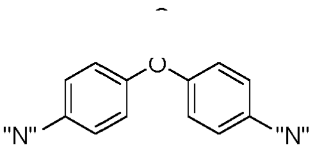
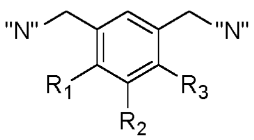
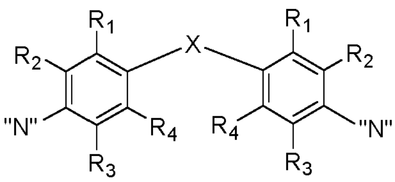
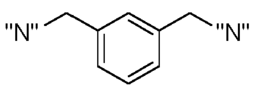
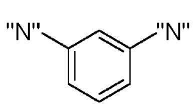
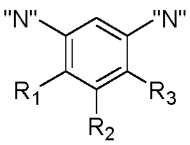
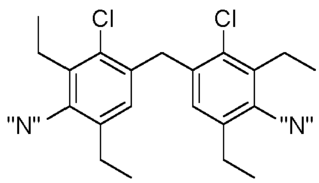

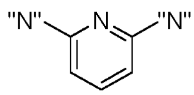

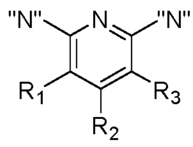

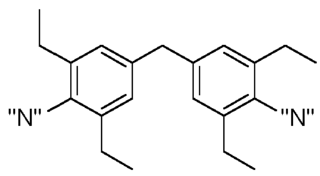

wherein

$R_1$, $R_2$, $R_3$ and $R_4$ are each independently selected from hydrogen, $C_1$-$C_{20}$ alkyl, $C_2$-$C_{20}$ alkene, $C_2$-$C_{20}$ alkyne, halogen (preferably Cl, Br, F, or I), $NO_2$, and sulfone;

X is independently selected from $C_1$-$C_{20}$ alkyl, $C_2$-$C_{20}$ alkene, $C_2$-$C_{20}$ alkyne and sulfone; and oligomers, prepolymers, polymers or mixtures thereof.

Another group of compositions according to the invention are those comprising components (a) and (b) wherein component (a) is one or more cyanate esters independently selected from

(i) a difunctional cyanate ester compound of formula (I)

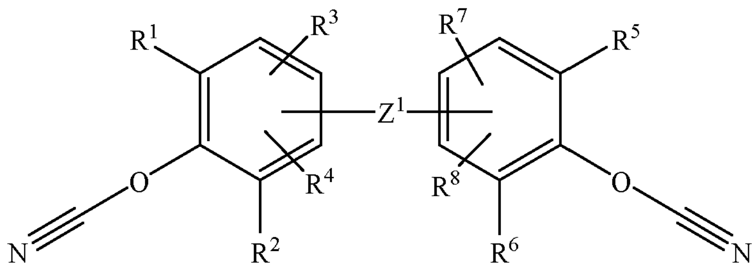

(I)

wherein

$R^1$ through $R^8$ are independently selected from the group consisting of hydrogen, linear $C_{1-3}$ alkyl, linear $C_2$-$C_{10}$ alkenyl, and branched $C_3$-$C_{10}$ alkenyl,

wherein at least one of $R^1$ to $R^8$ is selected from the group consisting of linear $C_2$-$C_{10}$ alkenyl and branched $C_3$-$C_{10}$ alkenyl;

$Z^1$ indicates a direct bond or a divalent moiety selected from the group consisting of -O-, -S-, -S(=O)-, $-S(=O)_2-$, $-CH_2-$, $-CH(CH_3)-$, $-C(CH_3)_2-$, $-CH(CF_3)-$, $-C(CF_3)_2-$, $-C(=CCl_2)-$, $-Si(CH_3)_2-$, branched $C_{2-8}$ alkanediyl, $C_{3-8}$ cycloalkanediyl, 1,2-phenylene, 1,3-phenylene, 1,4-phenylene; and oligomers, prepolymers, polymers or mixtures thereof; or

wherein (a) is a mixture of (i) and (ii), wherein

(ii) is a polyfunctional cyanate ester of formula (II)

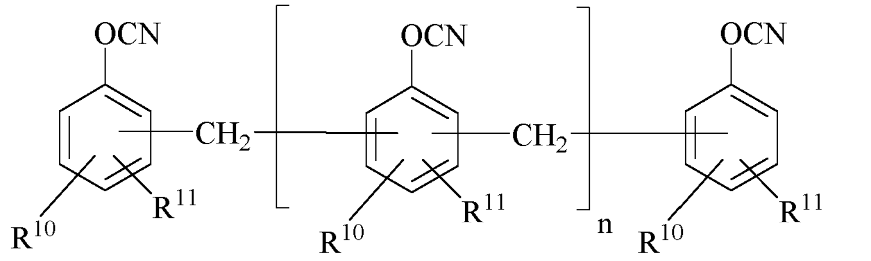

(II)

,

wherein

n is an integer from 1 to 15; and $R^{10}$ and $R^{11}$ are identical or different and independently from each other selected from the group consisting of hydrogen, linear $C_{1-8}$ alkyl, branched $C_{4-8}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-1)

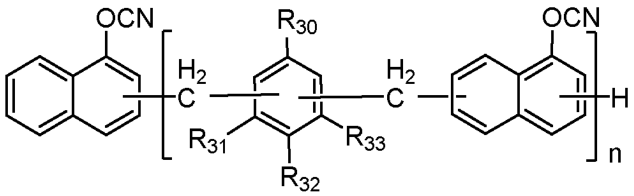

(IX-1)

wherein
n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-2)

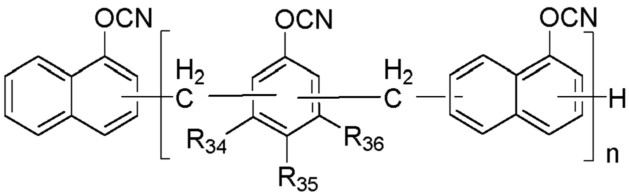

(IX-2)

wherein
n is an integer from 1 to 20; and $R^{34}$, $R^{35}$ and $R^{36}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-3)

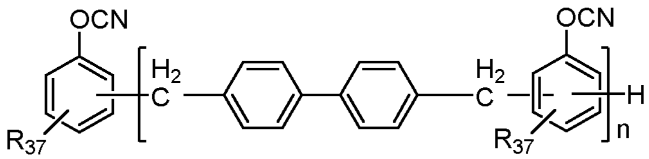

(IX-3)

wherein
n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-4)

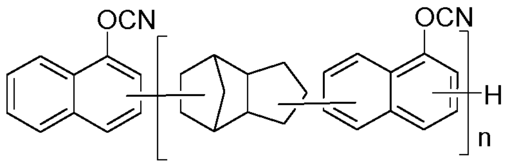

(IX-4)

wherein
n is an integer from 1 to 20; and oligomers, prepolymers, polymers or mixtures thereof;
or any combination of polyfunctional cyanate esters of formulas (II), (IX-1), (IX-2), (IX-3), and (IX-4);
and
wherein component (b) is one or more substituted bisimide independently selected from a biscitraconimide compound of formula (X1),

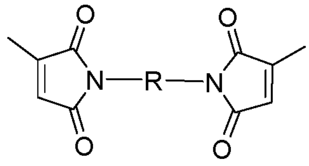

(X1)

wherein R is m-xylylene; and oligomers, prepolymers, polymers or mixtures thereof, or

b1) at least one selected from the group of biscitraconimide compound of formula (X1), bisitaconimide compound of formula (X2) and citraconimido-itaconimide compound of formula (X3), and oligomers, prepolymers, polymers or mixtures thereof

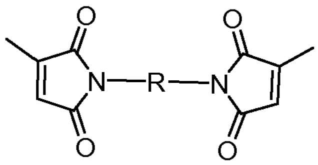

(X1)

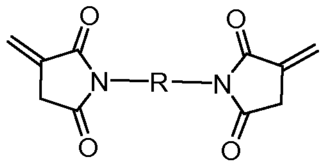

(X2)

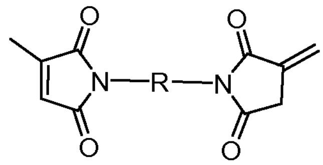

(X3)

or

b2) a bisnadicimide compound of formula (X4) and oligomers, prepolymers, polymers or mixtures thereof

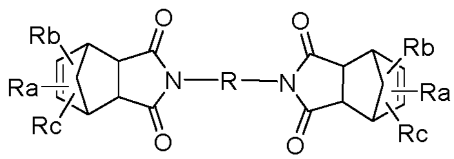

(X4)

wherein

Ra, Rb, and Rc are independently selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, halogenated $C_{3-8}$ cycloalkyl, linear $C_2$-$C_{10}$ alkenyl, branched $C_3$-$C_{10}$ alkenyl, $C_{1-10}$ alkoxy, halogen, phenyl and phenoxy,

or Ra and Rb, Ra and Rc, or Rb and Rc may together form a 3 to 8 membered cycloalkyl or a 3 to 8 membered cycloalkenyl; or

b3) a bistetrahydroimide compound of formula (X5) and oligomers, prepolymers, polymers or mixtures thereof

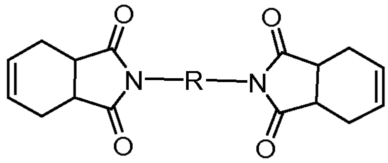

(X5) ;

wherein R is the moiety <<"N"-R-"N">> which is an aromatic amine moiety independently selected from ("N" denotes the point of connectivity)

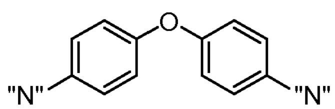

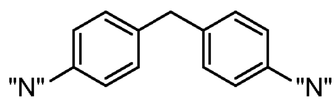

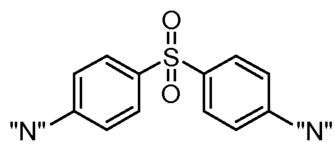

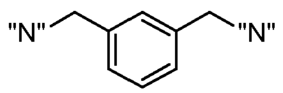
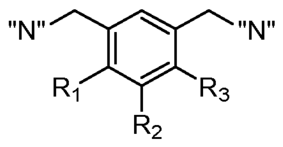
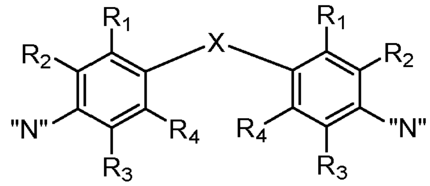

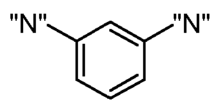
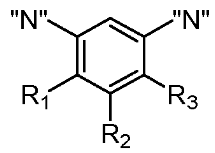

wherein
$R_1$, $R_2$, $R_3$ and $R_4$ are each independently selected from hydrogen, $C_1$-$C_5$ alkyl, halogen (preferably Cl, Br, or F), $NO_2$, and sulfon, and
X is independently selected from $C_1$-$C_{20}$ alkyl, $C_2$-$C_{20}$ alkene, $C_2$-$C_{20}$ alkyne and sulfone;
and oligomers, prepolymers, polymers or mixtures thereof.

Another group of compositions according to the invention are those comprising components (a) and (b) wherein component (a) is one or more cyanate esters independently selected from

(i) a difunctional cyanate ester compound of formula (I)

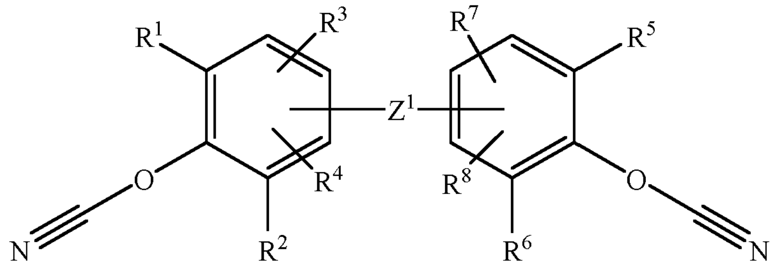

(I)

wherein

$R^1$ through $R^8$ are independently selected from the group consisting of hydrogen, linear $C_{1-3}$ alkyl, linear $C_2$-$C_{10}$ alkenyl, and branched $C_3$-$C_{10}$ alkenyl,
wherein at least one of $R^1$ to $R^8$ is selected from the group consisting of linear $C_2$-$C_{10}$ alkenyl and branched $C_3$-$C_{10}$ alkenyl;
$Z^1$ indicates a direct bond or a divalent moiety selected from the group consisting of -O-, -S-, $-S(=O)_2-$, $-CH_2-$, $-CH(CH_3)-$, $-C(CH_3)_2-$, $-C(CF_3)_2-$, $-C(=CCl_2)-$, branched $C_{4-6}$ alkanediyl, $C_{3-8}$ cycloalkanediyl, 1,2-phenylene, 1,3-phenylene, 1,4-phenylene; and oligomers, prepolymers, polymers or mixtures thereof; or
wherein (a) is a mixture of (i) and (ii), wherein

(ii) is a polyfunctional cyanate ester of formula (II)

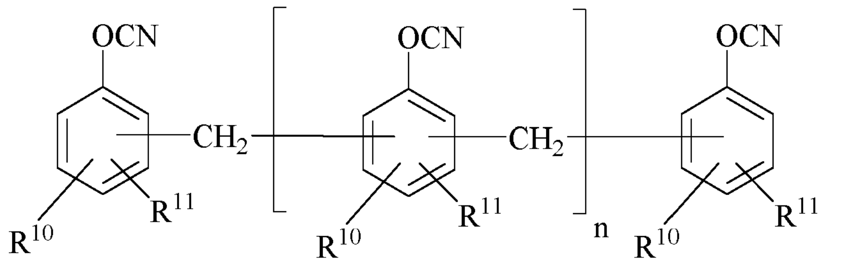

(II)

wherein

n is an integer from 1 to 10; and $R^{10}$ and $R^{11}$ are identical or different and independently from each other selected from the group consisting of hydrogen, linear $C_{1-5}$ alkyl, branched $C_{4-6}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-1)

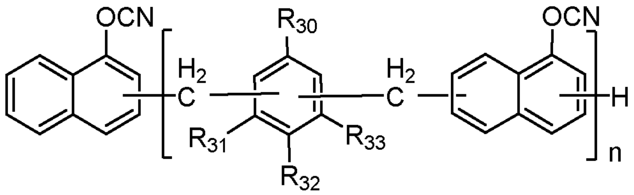

(IX-1)

wherein
n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-2)

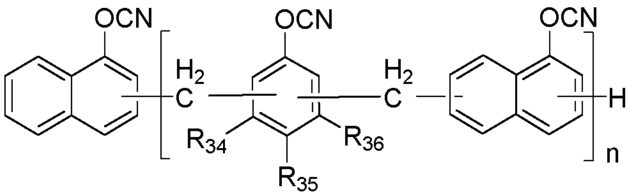

(IX-2)

wherein
n is an integer from 1 to 20; and $R^{34}$, $R^{35}$ and $R^{36}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-3)

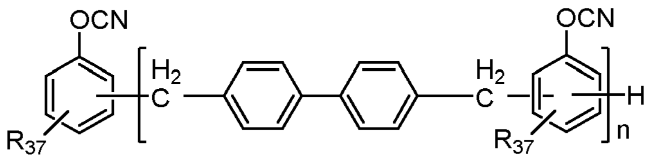

(IX-3)

wherein
n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-4)

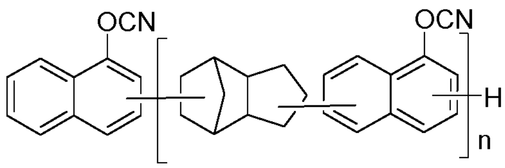

(IX-4)

wherein
n is an integer from 1 to 20; and oligomers, prepolymers, polymers or mixtures thereof;
or any combination of polyfunctional cyanate esters of formulas (II), (IX-1), (IX-2), (IX-3), and (IX-4);
and
wherein component (b) is one or more substituted bisimide independently selected from a biscitraconimide compound of formula (X1),

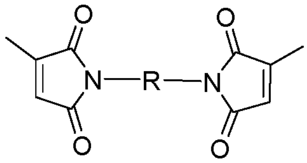

(X1)

wherein R is m-xylylene; and oligomers, prepolymers, polymers or mixtures thereof, or

b1) at least one selected from the group of biscitraconimide compound of formula (X1), bisitaconimide compound of formula (X2) and citraconimido-itaconimide compound of formula (X3), and oligomers, prepolymers, polymers or mixtures thereof,

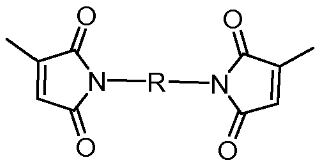

(X1)

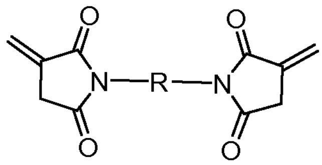

(X2)

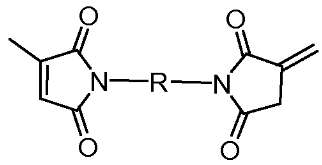

(X3)

or

b2) a bisnadicimide compound of formula (X4) and oligomers, prepolymers, polymers or mixtures thereof,

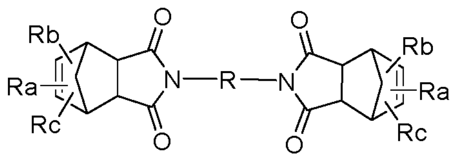

(X4)

wherein

Ra, Rb, and Rc are independently selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, halogenated $C_{3-8}$ cycloalkyl, linear $C_2$-$C_{10}$ alkenyl, branched $C_3$-$C_{10}$ alkenyl, $C_{1-10}$ alkoxy, halogen, phenyl and phenoxy,

or Ra and Rb, Ra and Rc, or Rb and Rc may together form a 3 to 8 membered cycloalkyl or a 3 to 8 membered cycloalkenyl;

or

b3) a bistetrahydroimide compound of formula (X5) and oligomers, prepolymers, polymers or mixtures thereof

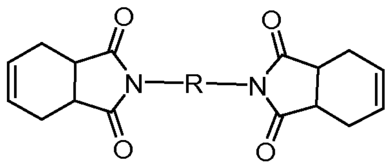

(X5) ;

wherein R is independently selected from 4,4'-methylene diphenylene, and o-phenylene, m-xylylene; and oligomers, prepolymers, polymers or mixtures thereof.

Another group of compositions according to the invention are those comprising components (a) and (b) wherein component (a) is one or more cyanate esters independently selected from

(i) a difunctional cyanate ester compound of formula (I)

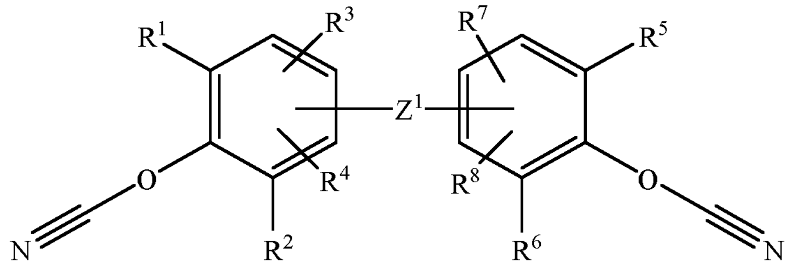

(I)

wherein the difunctional cyanate ester of formula I is independently selected from the group consisting of

i) $R^1$ and $R^5$ are allyl, $R^2$ and $R^6$ are methyl, $R^3$, $R^4$, $R^7$ and $R^8$ are hydrogen and wherein $Z^1$ is $-CH_2-$ (methylene);
ii) $R^1$ and $R^5$ are allyl and $R^2$, $R^3$, $R^4$, $R^6$, $R^7$ and $R^8$ are hydrogen and wherein Z1 is $-CH_2-$(methylene);
iii) $R^1$ and $R^5$ are allyl and $R^2$, $R^3$, $R^4$, $R^6$, $R^7$ and $R^8$ are hydrogen and wherein Z1 is $-C(CH_3)_2-$;
iv) $R^1$ and $R^5$ are allyl and $R^2$, $R^3$, $R^4$, $R^6$, $R^7$ and $R^8$ are hydrogen and $Z^1$ is -C(=O)-;
v) $R^1$ and $R^5$ are allyl and $R^2$, $R^3$, $R^4$, $R^6$, $R^7$ and $R^8$ are hydrogen and $Z^1$ is -S(=O)- ;
vi) $R^1$ and $R^5$ are allyl and $R^2$, $R^3$, $R^4$, $R^6$, $R^7$ and $R^8$ are hydrogen and $Z^1$ is -S-;
vii) $R^1$ and $R^5$ are allyl and $R^2$, $R^3$, $R^4$, $R^6$, $R^7$ and $R^8$ are hydrogen and $Z^1$ is $-C(CF_3)_2-$;
viii)$R^1$ and $R^5$ are allyl and $R^2$, $R^3$, $R^4$, $R^6$, $R^7$ and $R^8$ are hydrogen and $Z^1$ is $-C(=CCl_2)-$;
ix) $R^1$ and $R^5$ are allyl and $R^2$, $R^3$, $R^4$, $R^6$, $R^7$ and $R^8$ are hydrogen and $Z^1$ is independently selected from the group consisting of

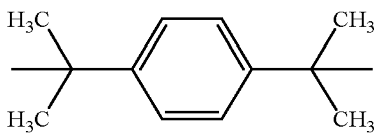
,
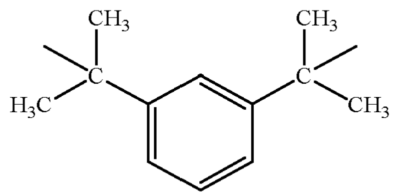
;

x) $R^1$ and $R^5$ are allyl and $R^2$, $R^3$, $R^4$, $R^6$, $R^7$ and $R^8$ are hydrogen and $Z^1$ is

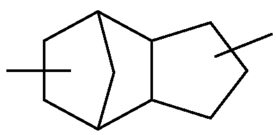
;

or
xi) $R^1$ and $R^5$ are allyl and $R^2$, $R^3$, $R^4$, $R^6$, $R^7$ and $R^8$ are hydrogen and $Z^1$ is $-CH(CH_3)-$;

and oligomers, prepolymers, polymers or mixtures thereof; or

wherein (a) is a mixture of (i) and (ii), wherein

(ii) a polyfunctional cyanate ester of formula (II)

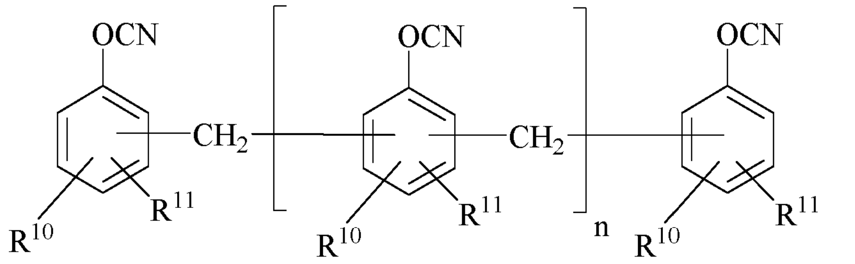

(II)

wherein the polyfunctional cyanate ester is independently selected from the group consisting of compound III, compound IV, compound V, compound VI, and oligomers, prepolymers, polymers or mixtures thereof;

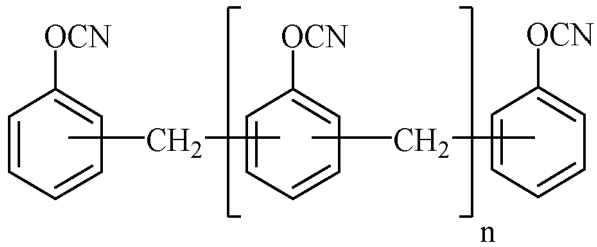

**III**

n is 2 to 3

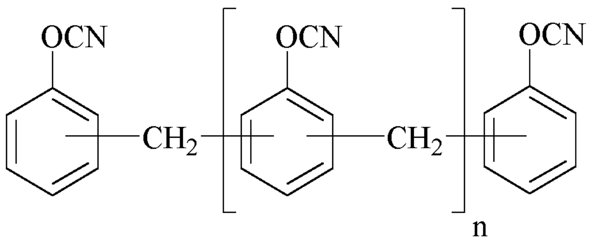

**IV**

n is 3 to 4

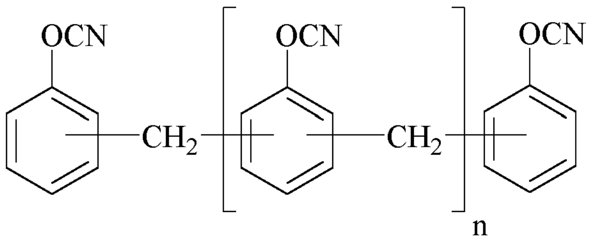

**V**

n is 3 to 6

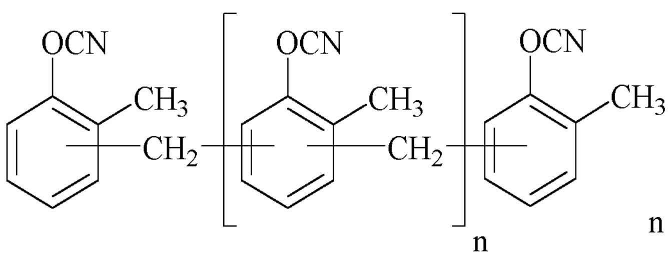

**VI**

n is 3 to 6 on average

;

or

a polyfunctional cyanate ester of formula (IX-1)

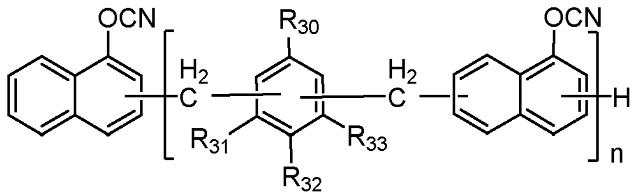

(IX-1)

wherein

n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-2)

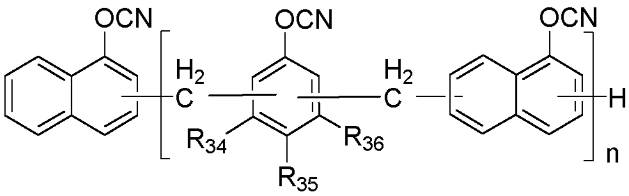

(IX-2)

wherein
n is an integer from 1 to 20; and $R^{34}$, $R^{35}$ and $R^{36}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-3)

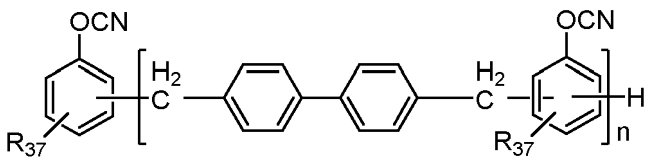

(IX-3)

wherein
n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-4)

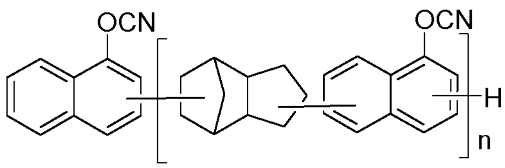

(IX-4)

wherein
n is an integer from 1 to 20; and oligomers, prepolymers, polymers or mixtures thereof;
or any combination of polyfunctional cyanate esters of formulas (II), (IX-1), (IX-2), (IX-3), and (IX-4);
and
wherein component (b) is one or more substituted bisimide independently selected from a biscitraconimide compound of formula (X1),

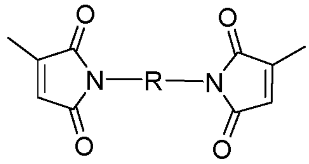

(X1)

wherein R is m-xylylene; and oligomers, prepolymers, polymers or mixtures thereof, or

b1) at least one selected from the group of biscitraconimide compound of formula (X1), bisitaconimide compound of formula (X2) and citraconimido-itaconimide compound of formula (X3), and oligomers, prepolymers, polymers or mixtures thereof

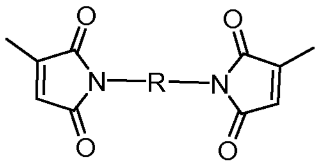

(X1)

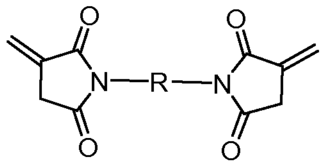

(X2)

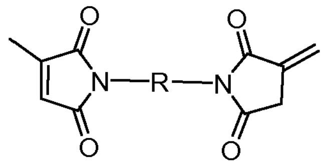

(X3)

or

b2) a bisnadicimide compound of formula (X4) and oligomers, prepolymers, polymers or mixtures thereof

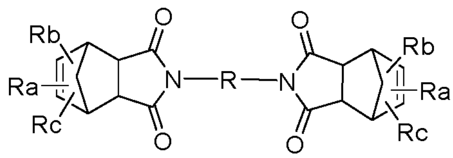

(X4)

wherein

Ra, Rb, and Rc are independently selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, halogenated $C_{3-8}$ cycloalkyl, linear $C_2$-$C_{10}$ alkenyl, branched $C_3$-$C_{10}$ alkenyl, $C_{1-10}$ alkoxy, halogen, phenyl and phenoxy,

or Ra and Rb, Ra and Rc, or Rb and Rc may together form a 3 to 8 membered cycloalkyl or a 3 to 8 membered cycloalkenyl;

or

b3) a bistetrahydroimide compound of formula (X5) and oligomers, prepolymers, polymers or mixtures thereof

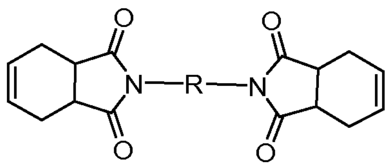

(X5) ;

wherein R is the moiety <<"N"-R-"N">> which is an aromatic amine moiety independently selected from ("N" denotes the point of connectivity)

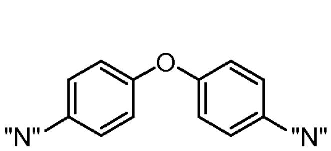

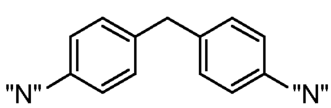

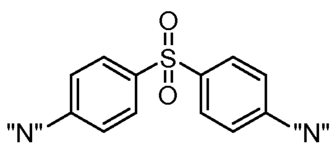

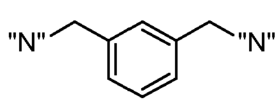
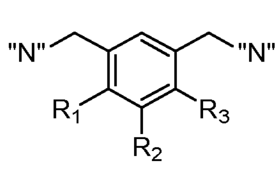
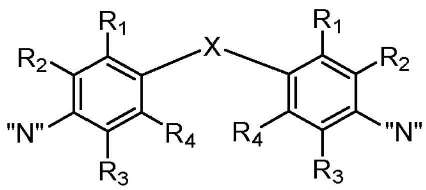

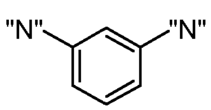
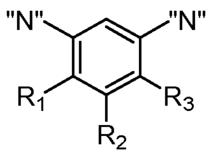

wherein
$R_1$, $R_2$, $R_3$ and $R_4$ are each independently selected from hydrogen, $C_1$-$C_5$ alkyl, halogen (preferably Cl, Br, or F), $NO_2$, and sulfone, and
X is independently selected from $C_1$-$C_{20}$ alkyl, $C_2$-$C_{20}$ alkene, $C_2$-$C_{20}$ alkyne and sulfone;
and oligomers, prepolymers, polymers or mixtures thereof.

Another group of compositions according to the invention are those comprising components (a) and (b) wherein component (a) is one or more cyanate esters independently selected from

(i) a difunctional cyanate ester compound of formula (I)

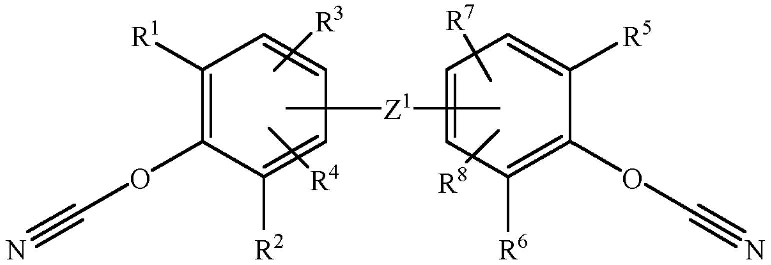

(I)

wherein

the difunctional cyanate ester of formula I is independently selected from the group consisting of

i) $R^1$ and $R^5$ are allyl, $R^2$ and $R^6$ are methyl, $R^3$, $R^4$, $R^7$ and $R^8$ are hydrogen and wherein $Z^1$ is $-CH_2-$ (methylene);
ii) $R^1$ and $R^5$ are allyl and $R^2$, $R^3$, $R^4$, $R^6$, $R^7$ and $R^8$ are hydrogen and wherein $Z^1$ is $-CH_2-$(methylene);
iii) $R^1$ and $R^5$ are allyl and $R^2$, $R^3$, $R^4$, $R^6$, $R^7$ and $R^8$ are hydrogen and wherein $Z^1$ is $-C(CH_3)_2-$;
iv) $R^1$ and $R^5$ are allyl and $R^2$, $R^3$, $R^4$, $R^6$, $R^7$ and $R^8$ are hydrogen and $Z^1$ is $-C(=O)-$;
v) $R^1$ and $R^5$ are allyl and $R^2$, $R^3$, $R^4$, $R^6$, $R^7$ and $R^8$ are hydrogen and $Z^1$ is $-S(=O)-$ ;
vi) $R^1$ and $R^5$ are allyl and $R^2$, $R^3$, $R^4$, $R^6$, $R^7$ and $R^8$ are hydrogen and $Z^1$ is $-S-$;
vii) $R^1$ and $R^5$ are allyl and $R^2$, $R^3$, $R^4$, $R^6$, $R^7$ and $R^8$ are hydrogen and $Z^1$ is $-C(CF_3)_2-$;
viii)$R^1$ and $R^5$ are allyl and $R^2$, $R^3$, $R^4$, $R^6$, $R^7$ and $R^8$ are hydrogen and $Z^1$ is $-C(=CCl_2)-$;
ix) $R^1$ and $R^5$ are allyl and $R^2$, $R^3$, $R^4$, $R^6$, $R^7$ and $R^8$ are hydrogen and $Z^1$ is independently selected from the group consisting of

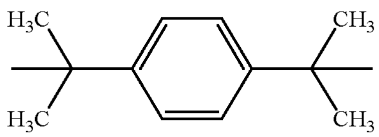

,

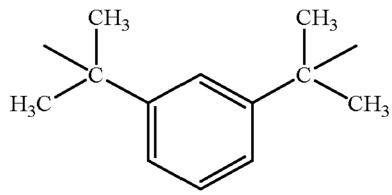

;

x) $R^1$ and $R^5$ are allyl and $R^2$, $R^3$, $R^4$, $R^6$, $R^7$ and $R^8$ are hydrogen and $Z^1$ is

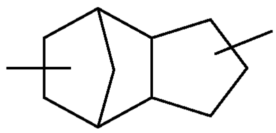

;

or

xi) $R^1$ and $R^5$ are allyl and $R^2$, $R^3$, $R^4$, $R^6$, $R^7$ and $R^8$ are hydrogen and $Z^1$ is $-CH(CH_3)-$;

and oligomers, prepolymers, polymers or mixtures thereof; or

wherein (a) is a mixture of (i) and (ii), wherein

(ii) is a polyfunctional cyanate ester of formula (II)

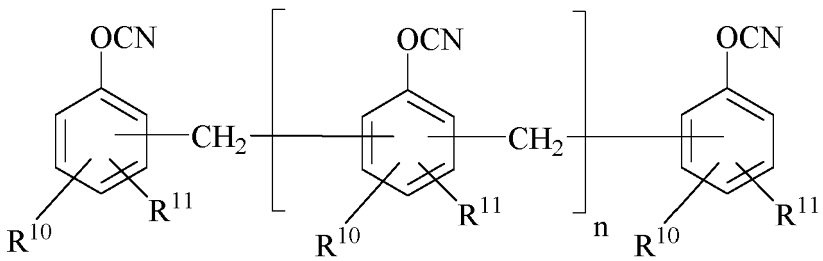

(II)

,

wherein the polyfunctional cyanate ester is independently selected from the group consisting of compound III , compound IV, compound V, compound VI, and oligomers, prepolymers, polymers or mixtures thereof;

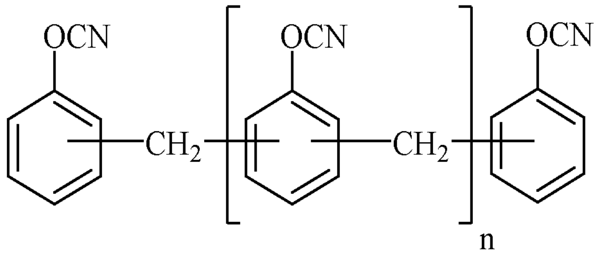

**III**

n is 2 to 3

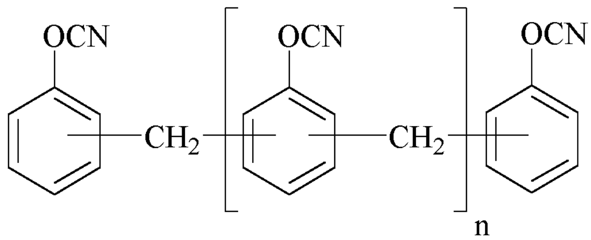

**IV**

n is 3 to 4

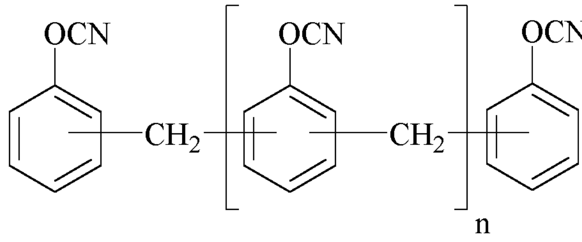

**V**

n is 3 to 6

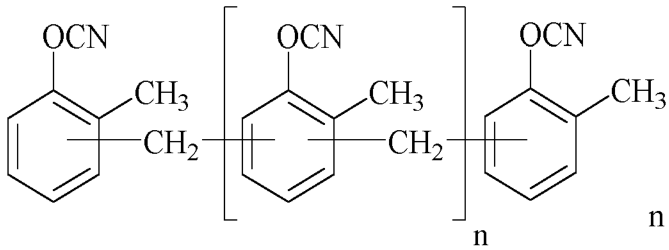

**VI**

n is 3 to 6 on average

;

and wherein component (b) is one or more substituted bisimide independently selected from a biscitraconimide compound of formula (X1),

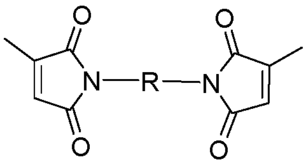

(X1)

wherein R is m-xylylene; and oligomers, prepolymers, polymers or mixtures thereof, or

b1) at least one selected from the group of biscitraconimide compound of formula (X1), bisitaconimide compound of formula (X2) and citraconimido-itaconimide compound of formula (X3), and oligomers, prepolymers, polymers or mixtures thereof,

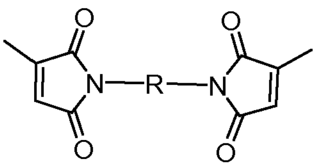

(X1)

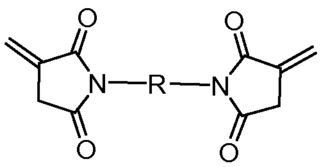

(X2)

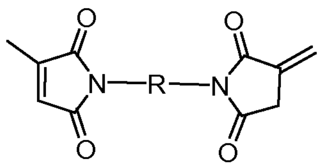

(X3)

or

b2) a bisnadicimide compound of formula (X4) and oligomers, prepolymers, polymers or mixtures thereof,

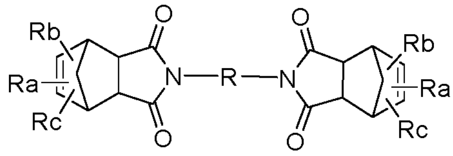

(X4)

wherein

Ra, Rb, and Rc are independently selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, halogenated $C_{3-8}$ cycloalkyl, linear $C_2$-$C_{10}$ alkenyl, branched $C_3$-$C_{10}$ alkenyl, $C_{1-10}$ alkoxy, halogen, phenyl and phenoxy,

or Ra and Rb, Ra and Rc, or Rb and Rc may together form a 3 to 8 membered cycloalkyl or a 3 to 8 membered cycloalkenyl;
or
b3) a bistetrahydroimide compound of formula (X5) and oligomers, prepolymers, polymers or mixtures thereof

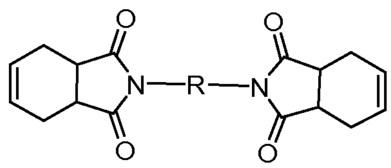

(X5) ;

wherein R is independently selected from 4,4'-methylene diphenylene, o-phenylene, and m-xylylene;
and oligomers, prepolymers, polymers or mixtures thereof.

Another group of compositions according to the invention are those comprising components (a) and (b) wherein component (a) is one or more cyanate esters independently selected from

(i) a difunctional cyanate ester compound of formula (I)

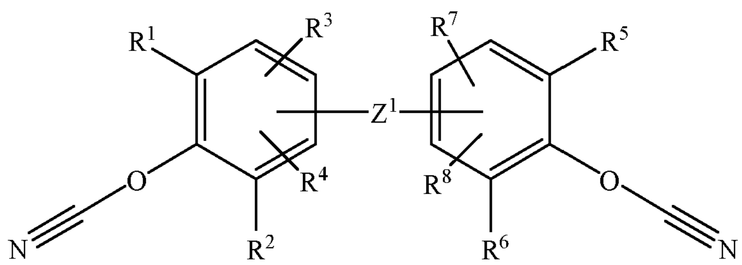

(I)

wherein $R^1$ through $R^8$ are independently selected from the group consisting of hydrogen, linear $C_2$-$C_{10}$ alkenyl, and branched $C_3$-$C_{10}$ alkenyl,
wherein at least one of $R^1$ to $R^8$ is selected from the group consisting of linear $C_2$-$C_{10}$ alkenyl and branched $C_3$-$C_{10}$ alkenyl; and
$Z^1$ is $-C(CH_3)_2-$ and oligomers, prepolymers, polymers or mixtures thereof; or
wherein (a) is a mixture of (i) and (ii), wherein

(ii) a polyfunctional cyanate ester of formula (II)

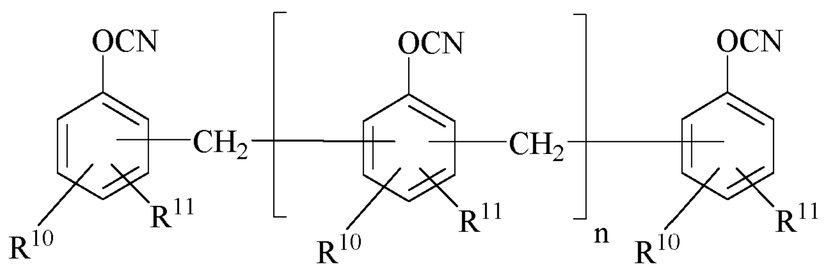

(II)

wherein the polyfunctional cyanate ester is independently selected from the group consisting of compound III, compound IV, compound V , and oligomers, prepolymers, polymers or mixtures thereof;

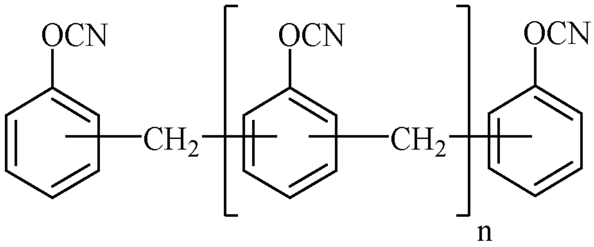

**III**

n is 2 to 3

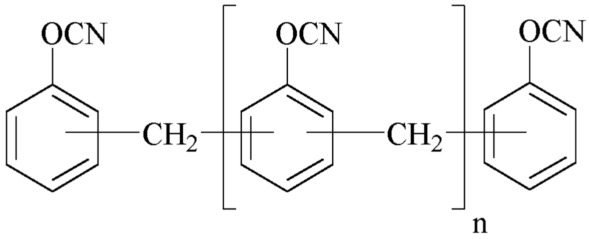

**IV**

n is 3 to 4

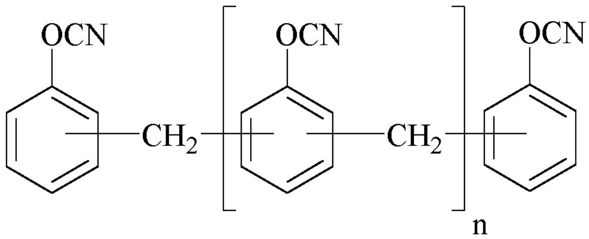

**V**

n is 3 to 6

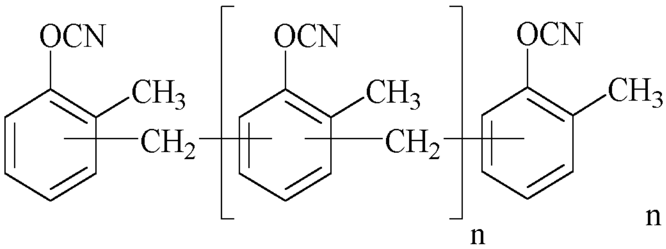

**VI**

n is 3 to 6 on average

;

and

wherein component (b) is a substituted bisimide compound selected from a biscitraconimide compound of formula (X1)

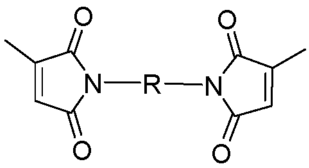

(X1)

,

wherein R is m-xylylene; and oligomers, prepolymers, polymers or mixtures thereof; or

at least one selected from the group of biscitraconimide compound of formula (X1), bisitaconimide compound of formula (X2) and citraconimido-itaconimide compound of formula (X3); and oligomers, prepolymers, polymers or mixtures thereof

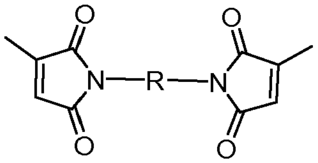
(X1)
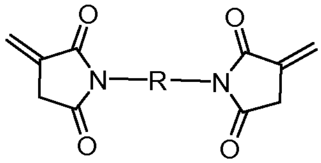
(X2)
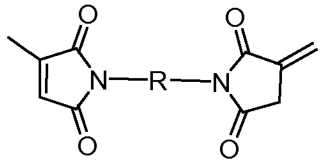
(X3)

wherein R is m-xylylene.

In one embodiment, after curing the composition comprising components (a) and (b) according to the invention, the cured composition exhibits a mass loss after 1000 h at 250°C of less than about 2.5 wt.-%, preferably less than about 2.0 wt.-%, more preferably of less than about 1.75 wt.-%.

***Preparation of compositions according to the invention***

The present invention relates to novel compositions comprising cyanate ester resins and substituted bisimides (citraconimides, bisitaconimide, citraconimido-itaconimide, bisnadicimide, bis methylnadicimides, bistetrahydroimide and mixtures thereof), and thermoset composite materials based on these compositions.

The preparation of a viscous liquid mixture of cyanate esters of component (a) and substituted bisimides of the compounds of component (b) can be achieved, *inter alia,* by intimately mixing the components together in their liquid states (*i.e.* at the necessary temperature) until a homogenization is obtained. It is also possible to produce the mixture of the components at lower temperatures by means of the use of solvents.

The preparations of the cyanate esters of component (a) are described in, *inter alia,* JP1990251518A, EP1566377, EP2722363and JP2018062568A or can be prepared by analogous procedures described therein or using standard synthesis techniques known to the person skilled in the art. Additionally, many of the cyanate esters of component (a) are also commercially available (*e.g*. under the brand name Primaset from Arxada, Switzerland
The preparations of the compounds of component (b) are described in, *inter alia,* US20120049106, US7271227B1, US5198515, US4110294, JP20130551725, EP2799497B1 and US4568733, RSC Adv., 2017, 7, 23149 or can be prepared by analogous procedures described therein or using standard synthesis techniques known to the person skilled in the art. Additionally, many of the compounds of component (b) are also commercially available (e.g. from, amongst others, HOS Technik and Lanxess). Homide 400 is commercially available from, amongst others, HOS and 1,3-bis(citraconimidomethyl)benzene (CAS-RN 119462-56-5, also called 1,3-Bis((3-methyl-2,5-dioxopyrrol-1-yl)methyl)benzol) is commercially available, amongst others, from Lanxess (available as Perkalink®900).

The viscous liquid mixture can be used as a stand-alone thermoset resin for casting process, adhesives, insulation films or, alternatively, it can be used in combination with fibres and fabric for the production of fibre-reinforced parts. For the production of fiber-reinforced parts, there are several established, well known, methods that can be applied such as traditional pre-preg (hot melt and solvated), resin infusion, resin injection, filament winding, pultrusion, hand-laminating and compression molding.

***Preparation of thermoset composite materials according to the invention***

Preparation of the thermoset composite materials according to the invention can be achieved as follows: providing a viscous liquid mixture of cyanate esters of component (a) and substituted bisimides compounds of component (b) as described above, casting the mixture into the desired form, and then initiating polymerization of the mixture (*e.g.* by, *inter alia,* increasing temperature, use of a catalyst as described above and below, or other methods commonly known in the art).

Additionally, as described above and below, the mixture may further comprise a catalyst and/or further components selected from fibres, fillers, pigments and/or additives that may be desired or useful for the resin casting process and/or the preparation of adhesives and insulation films. The inclusion of these optional components is achieved by adding them to the mixture in the process described above.

In one embodiment, the thermoset composite material according to the invention exhibits a mass loss after 1000 h at 250°C of less than about 2.5 wt.-%, preferably less than about 2.0 wt.- %, more preferably of less than about 1.75 wt.-%.

In one embodiment, the method for the preparation of a thermoset composite part produced according to the invention comprises:

(i) mixing the cyanate ester of component (a) and the substituted bisimides compounds of component (b) to obtain a homogenous mixture;

a. optionally, a catalyst and a solvent may be added to the mixture composition;

(ii) providing a fiber structure;
(iii) placing said fiber structure in a mold or on a substrate;
(iv) impregnating said fiber structure with said mixture (from step (i)), optionally by applying elevated pressure and/or evacuating the air and solvent from the mold and fiber structure, preferably at a temperature of 50 to 150° C; and

curing said liquid mixture in cured laminates by applying a temperature of preferably 50 to 200° C with heating steps for a time sufficient to achieve a degree of conversion that allows de-moulding of the parts. A post-cure step can directly follow the cure cycle and/or be applied once the part is removed from the mold (freestanding). Preferably a post-cure is be applied freestanding by applying a temperature of 200 to 300° C to achieve very high degree of conversion and, respectively, an optimal thermal resistance.

In another embodiment, the impregnation in step (iv) is achieved using a method selected from the group consisting of pre-preg (hot melt and solvated), resin transfer molding, vacuum assisted resin transfer molding, Vacuum resin infusion, Seemann Composites Resin Infusion Molding Process, injection molding, compression molding, spray molding, pultrusion, hand laminating, filament winding, Quickstep process or Roctool process.

In another embodiment, the impregnation in step (iv) is achieved using a composite molding process method selected from the group consisting of pre-preg (hot melt and solvated), resin transfer molding, liquid resin infusion, Seemann Composites Resin Infusion Molding Process, vacumn assisted resin infusion, injection molding, BMC/SMC bulk and sheet molding compounds and EADS vacuum assisted process (VAP®).

The mixture of cyanate esters of component (a) and substituted bisimides of the compounds of component (b) can optionally be formulated with at least one di- or polyfunctional epoxy resin selected from the group consisting of bisphenol A diglycidyl ether resins, bisphenol F diglycidyl ether resins, *N,N,O*-triglycidyl-3-aminophenol, *N,N,O*-triglycidyl-4-aminophenol, *N,N,N',N'*-tetraglycidyl-4,4'-methylenebisbenzenamine, 4,4',4"-methylidenetrisphenol triglycidyl ether resins, naphthalenediol diglycidyl ethers, and mixtures thereof.

The mixture of cyanate esters of component (a) and substituted bisimides of the compounds of component (b) can optionally be formulated with at least one bismaleimide compounds known to the skilled person and is selected from the group consisting of for examples 2,2'-bis(4-(4-maleimidophenoxy)-phenyl)propane, bis(3-ethyl-5-methyl-4-maleimidophenyl)methane and mixtures thereof as disclosed in WO2018/139368.

The mixture of cyanate esters of component (a) and substituted bisimides of the compounds of component (b) can optionally be formulated with at least one benzoxazines compounds known to the skilled person and is selected from the group consisting of for examples bisphenol-A benzoxazine, bisphenol-F benzoxazine, phenolphthaleine (PhPTH) benzoxazine, dicyclopentadiene (DCPD) benzoxazine, thiodiphenol benzoxazine and mixtures thereof.

The mixture of cyanate esters of component (a) and substituted bisimides of the compounds of component (b) can be optionally formulated with at least one unsaturated polyester compounds known to the skilled person and is selected from the group consisting of for examples isophthalic polyester, acrylic based unsaturated polyester, methyl methacrylate (MMA) based unsaturated polyester, butyl methacrylate (BMA) based unsaturated polyester, acrylonitrile (AN) based unsaturated polyester and mixtures thereof.

The mixture of cyanate esters of component (a) and substituted bisimides of the compounds of component (b) can optionally be formulated with at least one vinylester compounds known to the skilled person and is selected from the group consisting of for examples methacrylate vinylester, acrylate vinylester, bisphenol-A epoxy based vinylester, phenolic novolac based vinylester, tetrabromobisphenol A epoxy based vinylester and mixtures thereof.

Further, the mixture of cyanate esters of component (a) and substituted bisimides of the compounds of component (b) optionally can be formulated with at least one reactive modifier which include but are not limited to thermoplastics, small organic molecules, rubbers, and inorganic/ organometallic polymers. The reactive groups on the additives include but are not limited to hydroxyl groups, acrylate, methacrylate, phenol groups, bisphenol groups, thiol groups, epoxy groups, bismaleimide groups, benzoxazin group, amines, thiols, thiophenols, and phosphorous groups.

The compositions according to the invention may optionally further comprise a catalyst to aid the curing process.

Suitable catalysts are selected from the group consisting of aliphatic mono-, di- and polyamines, aromatic mono-, di- and polyamines, carbocyclic mono-, di and polyamines, heterocyclic mono-, di- and polyamines, compounds containing a five- or six-membered nitrogen-containing heterocyclic ring, hydroxyamines, phosphines, phenols, bisphenols and mixtures thereof.

Preferably, the catalyst comprises a bisphenol such as bisphenol A or a substituted bisphenol A e.g. substituted with linear $C_2$-$C_{10}$ alkenyl such as vinyl or allyl.

The catalyst can be comprised in the composition in amount of 0 to 20 wt.-% based on total amount of the resin composition. An amount of 0 to 20 wt.-% includes about 1 wt.-%, about 2 wt.-%, about 3 wt.-%, about 4 wt.-%, about 5 wt.-%, about 6 wt.-%, about 7 wt.-%, about 8 wt.-%, about 9 wt.-%, about 10 wt.-%, about 11 wt.-%, about 12 wt.-%, about 13 wt.-%, about 14 wt.-%, about 15 wt.-%, about 16 wt.-%, about 17 wt.-%, about 18 wt.-%, about 19 wt.-%, or about 20 wt.-%,

based on total amount of the resin composition. In one embodiment, catalyst can be comprised in the composition in amount of 0 to 20 wt.-%, 0 to 15 wt.-%, or 0 to 10 wt.-% based on total amount of the resin composition.

A particularly suitable catalyst is a compound of formula (VII)

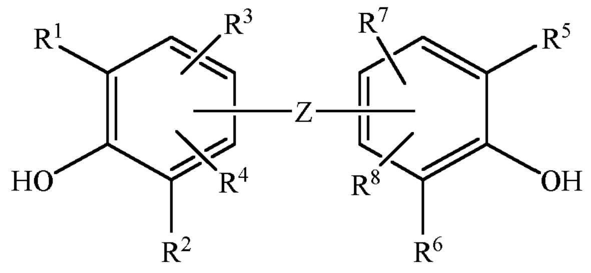

(VII)

wherein

$R^1$ through $R^8$ are independently selected from the group consisting of hydrogen, linear $C_{1-10}$ alkyl, linear $C_2$-$C_{10}$ alkenyl, halogenated linear $C_{1-10}$ alkyl, branched $C_{4-10}$ alkyl, branched $C_3$-$C_{10}$ alkenyl, halogenated branched $C_{4-10}$ alkyl, $C_{3-8}$ cycloalkyl, halogenated $C_{3-8}$ cycloalkyl, $C_{1-10}$ alkoxy, halogen, phenyl and phenoxy,
wherein at least one of $R^1$ to $R^8$ is selected from the group consisting of linear $C_2$-$C_{10}$ alkenyl and branched $C_3$-$C_{10}$ alkenyl;
Z indicates a direct bond or a divalent moiety selected from the group consisting of -O-, -S-, -S(=O)-, -S(=O)$_2$-, -CH$_2$-, -CH(CH$_3$)-, -C(CH$_3$)$_2$-, -CH(CF$_3$)-, -C(CF$_3$)$_2$-, -C(=O)-, -C(=CH$_2$)-, -C(=CCl$_2$)-, -Si(CH$_3$)$_2$-, linear $C_{1-10}$ alkanediyl, branched $C_{4-10}$ alkanediyl, $C_{3-8}$ cycloalkanediyl, 1,2-phenylene, 1,3-phenylene, 1,4-phenylene, -N($R^{13}$)- wherein $R^{13}$ is selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, phenyl and phenoxy, and moieties of formulas

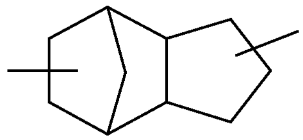

and

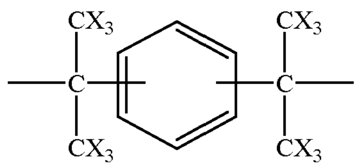

;

wherein X is independently selected from hydrogen and halogen;
and oligomers, prepolymers, polymers or mixtures thereof.

Preferably, the catalyst is a compound according to the following formula

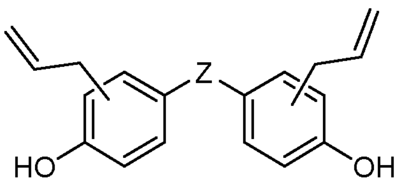

wherein

Z indicates a direct bond or a divalent moiety selected from the group consisting of -O-, -S-, -S(=O)-, -S(=O)$_2$-, -CH$_2$-, -CH(CH$_3$)-, -C(CH$_3$)$_2$-,-CH(CF$_3$)-, -C(CF$_3$)$_2$-, -C(=O)-, -C(=CH$_2$)-, -C(=CCl$_2$)-, -Si(CH$_3$)$_2$-, linear $C_{1-10}$ alkanediyl, branched $C_{4-10}$ alkanediyl, $C_{3-8}$ cycloalkanediyl, 1,2-phenylene, 1,3-phenylene, 1,4-phenylene, -N($R^{13}$)- wherein $R^{13}$ is selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, phenyl and phenoxy, and moieties of formulas

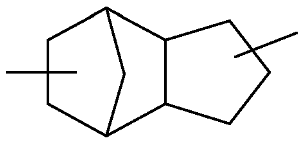 and 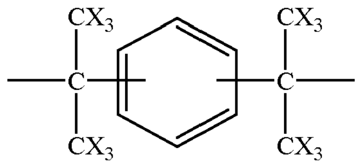

wherein X is independently selected from hydrogen and halogen and oligomers, polymers or mixtures thereof.

More preferably, the catalyst is a compound according to the following formula

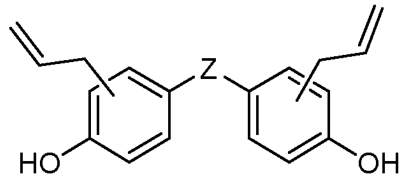

wherein

Z indicates a direct bond or a divalent moiety selected from the group consisting of $-CH_2-$, $-CH(CH_3)-$, and $-C(CH_3)_2-$.

Even more preferably, the catalyst is

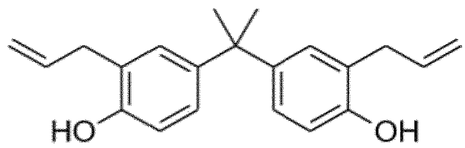

Besides, the resin composition of the present embodiment may optionally contain a curing accelerator for appropriately controlling a curing rate if necessary. Any of those generally used as a curing accelerator catalyst for a cyanate and the bismalimide ester compound, an epoxy resin and the like can be suitably used as the curing accelerator, and the type is not especially limited. Specific examples of the curing accelerator include organic metal salts such as aluminium acetylacetonate, zinc octylate, zinc naphthenate, cobalt naphthenate, copper naphthenate, iron acetylacetonate, nickel octylate and manganese octylate; phenolic compounds such as phenol or 2,2'-Bis(3-allyl-4-hydroxyphenyl) propane , xylenol, cresol, resorcin, catechol, octylphenol and nonylphenol; alcohols such as 1-butanol and 2-ethylhexanol; imidazoles such as 2-phenylimidazole, 4-phenylimidazole, 1-phenylimidazole, 2-methylimidazole, 2-ethyl-4-methylimidazole, 1-cyanoethyl-2-phenylimidazole, 1-cyanoethyl-2-ethyl-4-methylimidazole, 2-phenyl-4,5-dihydroxymethylimidazole and 2-phenyl-4-methyl-5-hydroxymethylimidazole, and derivatives of these imidazoles such as carboxylic acid or anhydride adducts thereof; amines such as dicyandiamide, benzyldimethylamine and 4-methyl-N,N-dimethylbenzylamine; phosphorus compounds such as phosphine-based compounds, phosphine oxide-based compounds, phosphonium salt-based compounds and diphosphine compounds; epoxy-imidazole adduct-based compounds; peroxides such as benzoyl peroxide, p-chlorobenzoyl peroxide, di-t-butyl peroxide, diisopropyl peroxycarbonate and di-2-ethylhexyl peroxycarbonate 2,5-Dimethyl-2,5-di(tert-butylperoxy) hexyne-3 (Trigonox 145-E85 manufatored by Nouryon); and azo compounds such as azobisisobutyronitrile. Many curing accelerators (a polymerization catalyst) are commercially available, such as Amicure PN-23 (product name, manufactured and available from Ajinomoto Fine-Techno Co., Inc.), Novacure HX-3721 (product name, manufactured and available from Asahi Kasei Advance Corporation) and Fujicure FX-1000 (product name, manufactured and available from Fuji Kasei Co., Ltd.).

In one embodiment the catalyst is selected from the group consisting of aromatic diamine catalysts, transition metal salt catalysts, peroxide catalysts, imidazoles catalysts, or 1,4-Diazabicyclo[2.2.2]octane (DABCO), and mixtures thereof, as defined directly below.

The aromatic diamine catalyst is selected from the group consisting of aromatic diamines of formula VIIa and VIIb

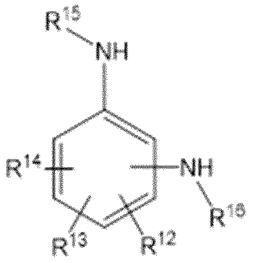

(VIIa)

or

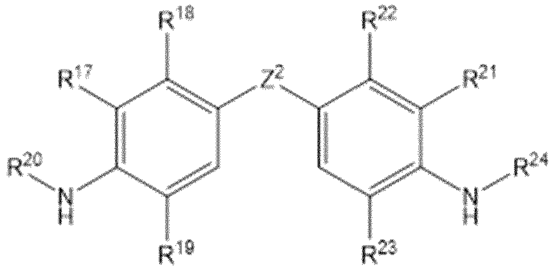

(VIIb)

wherein

$R^{12}$, $R^{13}$, $R^{14}$, $R^{17}$, $R^{16}$, $R^{18}$, $R^{19}$, $R^{21}$, $R^{22}$ and $R^{23}$ are independently selected from hydrogen, $C_{1-4}$ alkyl, $C_{1-4}$ alkoxy, $C_{1-4}$ alkylthio and chlorine;

$R^{15}$, $R^{16}$, $R^{20}$ and $R^{24}$ are independently selected from hydrogen and $C_{1-8}$ alkyl; and

$Z^2$ indicates a direct bond or a divalent moiety selected from the group consisting of -O-, -S-, -S(=O)-, $-S(=O)_2-$, $-CH_2-$, $-CH(CH_3)-$, $-C(CH_3)_2-$, $-CH(CF_3)-$, $-C(CF_3)_2-$, -C(=O)-, $-C(=CH_2)-$, $-C(=CCl_2)-$, $-Si(CH_3)_2-$, linear $C_{1-10}$ alkanediyl, branched $C_{4-10}$ alkanediyl, $C_{3-8}$ cycloalkanediyl, 1,2-phenylene, 1,3-phenylene, 1,4-phenylene, $-N(R^{25})-$ wherein $R^{25}$ is selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, phenyl and phenoxy.

The expression "$C_{1-4}$ alkyl" is herein meant to include methyl, ethyl, 1-propyl, 2-propyl (isopropyl), 1-butyl, 2-butyl (sec-butyl), 2-methyl-1-propyl (isobutyl) and 2-methyl-2-propyl (tert-butyl) while the expression "$C_{1-8}$ alkyl" is meant to include the before mentioned and all linear and branched alkyl groups having 5 to 8 carbon atoms according to the definitions given above for linear $C_{1-10}$ alkyl and branched $C_{4-10}$ alkyl.

Preferably, $R^{12}$, $R^{13}$, $R^{14}$, $R^{17}$, $R^{16}$, $R^{18}$, $R^{19}$, $R^{21}$, $R^{22}$ and $R^{23}$ are independently selected from hydrogen, $C_{1-4}$ alkyl, and $C_{1-4}$ alkoxy;

$R^{15}$, $R^{16}$, $R^{20}$ and $R^{24}$ are independently selected from hydrogen and $C_{1-4}$ alkyl; and

$Z^2$ is a methylene ($-CH_2-$) group.

The transition metal salt catalyst is preferably selected from the group consisting of aluminum(III) acetylacetonate, manganese (II) acetylacetonate, zinc(II) acetylacetonate, cobalt (II) acetylacetonate, cobalt (III) acetylacetonate, copper (II) acetylacetonate, iron (III) acetylacetonate, and mixtures thereof.

The peroxide catalyst is preferably benzoyl peroxide, p-chlorobenzoyl peroxide, di-t-butyl peroxide, diisopropyl peroxycarbonate and di-2-ethylhexyl peroxycarbonate or 2,5-Dimethyl-2,5-di(tert-butylperoxy) hexyne-3 (Trigonox 145-E85 manufatored by Nouryon).

The imidazoles catalyst is preferably 2-phenylimidazole, 4-phenylimidazole, 1-phenylimidazole, 2-methylimidazole, 2-ethyl-4-methylimidazole, 1-cyanoethyl-2-phenylimidazole, 1-cyanoethyl-2-ethyl-4-methylimidazole, 2-phenyl-4,5-dihydroxymethylimidazole and 2-phenyl-4-methyl-5-hydroxymethylimidazole.

Alternatively, the catalyst is preferably 1,4-Diazabicyclo[2.2.2]octane (DABCO).

Preferably, the catalyst is selected from the group consisting of aromatic diamine catalysts, transition metal salt catalysts, peroxide catalysts, imidazoles catalysts, or 1,4-Diazabicyclo[2.2.2]octane (DABCO), and mixtures thereof, as defined directly below.

Preferably, the aromatic diamine catalyst is selected from the group consisting of 3,5-diethyltoluene-2,4-diamine, 3,5-diethyltoluene-2,6-diamine, 4,4'-methylene-bis(2,6-diisopropylaniline), 4,4'-methylene-bis(2-isopropyl-6-methylaniline), 4,4'-methylene-bis(2,6-diethylaniline) (M-DEA), 4,4'-methylene-bis(3-chloro-2,6-diethylaniline) (M-CDEA), 4,4'-methylene-bis(2-ethyl-6-methylaniline), 4,4'-methylene-bis(N-sec-butylaniline), dimethylthiotoluenediamine (DMTDA), and mixtures thereof.

Preferably, the transition metal salt catalyst is selected from the group consisting of aluminum(III) acetylacetonate, manganese (II) acetylacetonate, zinc(II) acetylacetonate, cobalt (II) acetylacetonate, cobalt (III) acetylacetonate, copper (II) acetylacetonate, iron (III) acetylacetonate, and mixtures thereof.

Preferably, the peroxide catalyst is more preferably benzoyl peroxide, p-chlorobenzoyl peroxide, di-t-butyl peroxide, diisopropyl peroxycarbonate and di-2-ethylhexyl peroxycarbonate or 2,5-dimethyl-2,5-di(tert-butylperoxy) hexyne-3 (Trigonox 145-E85 manufatored by Nouryon).

Preferably, the imidazoles catalyst is more preferably 2-phenylimidazole, 4-phenylimidazole, 1-phenylimidazole, 2-methylimidazole, 2-ethyl-4-methylimidazole.

Alternatively, the catalyst is more preferably 1,4-Diazabicyclo[2.2.2]octane (DABCO).

In one embodiment, the catalyst is selected from the group consisting of aromatic diamine catalysts, transition metal salt catalysts, peroxide catalysts, imidazoles catalysts, or 1,4-Diazabicyclo[2.2.2]octane (DABCO), and mixtures thereof, as defined directly below.

In one embodiment, the aromatic diamine catalyst is selected from the group consisting of 3,5-diethyltoluene-2,4-diamine, 3,5-diethyltoluene-2,6-diamine, 4,4'-methylene-bis(2,6-diisopropylaniline), 4,4'-methylene-bis(2-isopropyl-6-methylaniline), 4,4'-methylene-bis(2,6-diethylaniline) (M-DEA), 4,4'-methylene-bis(3-chloro-2,6-diethylaniline) (M-CDEA), 4,4'-methylene-bis(2-ethyl-6-methylaniline), 4,4'-methylene-bis(*N*-*sec*-butylaniline), and mixtures thereof.

The transition metal salt catalyst is most preferably selected from the group consisting of aluminum (III) acetylacetonate, manganese (II) acetylacetonate, zinc(II) acetylacetonate, cobalt (II) acetylacetonate, cobalt (III) acetylacetonate, copper (II) acetylacetonate, iron (III) acetylacetonate, and mixtures thereof. Especially most preferably the transition metal salt catalyst is aluminum (III) acetylacetonate.

The peroxide catalyst is more preferably benzoyl peroxide, di-t-butyl peroxide, diisopropyl peroxycarbonate and di-2-ethylhexyl peroxycarbonate or 2,5-dimethyl-2,5-di(tert-butylperoxy) hexyne-3 (Trigonox 145-E85 manufatored by Nouryon).

The imidazoles catalyst is more preferably 2-phenylimidazole, 4-phenylimidazole, or 1-phenylimidazole.

Alternatively, the catalyst is more preferably 1,4-Diazabicyclo[2.2.2]octane (DABCO).

It has been found that the above catalysts act as curing catalysts when used in in the compositions according to the invention.

The amount of the catalyst can be varied to adapt to different applications and needs. Typically, the amount of the catalyst ranges from 0.05 to 20.0 wt.-%, more preferably from 0.1 to 15 wt.- %, even more preferably from 0.15 to 10 wt.-% based on the total amount of cyanate ester bisimides mixture.

The compositions according to the invention may optionally further comprise reinforcement fibres to improve the mechanical performance of the final resultant composite materials.

Suitable reinforcement fibres are known in the art, and may be selected from materials such as carbon fibres, glass fibres (such as E glass fibres, S glass fibres), aramid fibres (including KEVLAR®), basalt fibres (geotextile fibers), natural fibres (such as flax, hemp, jute or sisal), fleeces and woven fabrics (multi-layered or single layered).

Mixtures of two or more reinforcement fibres can also be applied.

In one embodiment the reinforcement fibres are carbon fibres such as polyacrylonitrile PAN based carbon fibres, glass fibres, basalt fibres, aramid fibres or natural fibres, or mixtures thereof.

In another embodiment the reinforcement fibres are glass fibres, carbon fibres or aramid fibres, or mixtures thereof.

The reinforcement fibres may be pre-shaped fibres. The reinforcement fibres may be chopped or continuous, random or oriented, woven or non-woven, knitted or non-knitted or braided according to the requirements of any of various different portions of the desired structure of the moulded composite or fibre reinforced part.

The pre-shaped form of the reinforcement fibres may be selected in view of the desired form of the moulding composite (also called reinforced part), the fibre may have the form of a sheet, mat, bead, strand, thread, band, web, roving, band of rovings, bundle, or the like.

The amount of reinforcement fibres may vary depending on the desired thermoset composite.

The compositions according to the invention may optionally further comprise a filler.

Suitable fillers known to the person skilled in the art are for example organic, such as thermoplastics and elastomers, or inorganic, such as glass microspheres, graphite or silica.

Further suitable fillers known in the art are for example mineral powders, such as for example $CaCO_3$, coated $CaCO_3$, kaolin clay, $SiO_2$, talc, graphite, corundum ($\alpha$-$Al_2O_3$), SiC, glass microspheres, mica, calcium silicate ($Ca_2O_4Si$), wollastonite, MgO, anhydrous calcium sulfate ($CaSO_4$ or anhydrite), ceramic hollow microspheres, fused mullite ($Al_2O_3$-$SiO_2$), boron nitride (BN), vermiculite, or basalt. Mixtures of the above fillers can also be used.

In one embodiment, the filler to be used in the invention is independently selected from the group consisting of $CaCO_3$, coated $CaCO_3$, kaolin clay, $SiO_2$, talc, graphite, graphene/nano-graphen, carbon nanotubes (SWCNT and/or MWCNT), corundum ($\alpha$-$Al_2O_3$), SiC, glass microspheres, mica, calcium silicate ($Ca_2O_4Si$), wollastonite, MgO, anhydrous calcium sulfate ($CaSO_4$ or anhydrite), ceramic hollow microspheres, fused mullite ($Al_2O_3$-$SiO_2$), boron nitride (BN), vermiculite, basalt, and mixtures thereof.

In another embodiment, the filler is independently selected from the group consisting of $CaCO_3$, coated $CaCO_3$, kaolin clay, $SiO_2$, wollastonite, talc, graphene/nano-graphen, carbon nanotubes (SWCNT and/or MWCNT) and mixtures thereof.

In another embodiment, the filler is independently selected from the group consisting of coated $CaCO_3$, Talc, and mixtures thereof.

The fillers may be in particle, powder, sphere, chip and/or strand form and have an average particle size from nano scale to millimeters, preferably the fillers have an average particle size from 0.01 to 1000 μm, more preferably the fillers have an average particle size of from 0.5 to 500 μm.
The amount of fillers may vary and is preferably from 5 to 60 wt.-%, preferably from 15 to 50 wt.-%, more preferably from 15 to 45 wt.-%, based on the total weight of the thermoset composite.

## Examples

### *Abbreviations*

| | |
|---|---|
| TMA | Thermal mechanical analysis |
| RT | Room temperature |
| Tg | Glass transition temperature |

### Materials

| | |
|---|---|
| Perkalink | 1,3-bis(citraconimidomethyl)benzene, CAS 119462-56-5 |
| DABA-CN | Primaset CL-100 / DABA-CN Propane-2,2-diylbis-2-(prop-2-en-1-yl)benzene-4,1-diyl dicyanate -from Arxada AG, Switzerland.<br>CAS: 126791-29-5. |

### Experimental procedure for Comparative Example 1

6 g of DABA-CN was poured at RT into an aluminum pan with a diameter of 5 cm and subsequently cured according to the following cure cycle:

Cure cycle: heat-up from 25°C to 175°C at 1K /min, hold 3h at 175°C
heat-up from 175°C to 220°C at 1K /min, hold 2h at 220°C
heat-up from 220°C to 260°C at 1K /min, hold 16h at 260°C

The cured DABA-CN material was cooled to RT and was removed from the aluminum pan (de-molded). The cured material was evaluated in term of mass loss (thermal-oxidative stability) and glass transition temperature.
The cured material had the following dimensions: diameter = 5 cm, thickness = 2cm.

### Experimental procedure for Examples 2, 3 and 4

DABA-CN and Perkalink were mixed at 90-100°C until complete homogenization and 6 g of said mixture was poured into an aluminum pan with a diameter of 5 cm and subsequently cured according to the following cure cycle:

Cure cycle: heat-up from 25°C to 175°C at 1K /min, hold 3h at 175°C
heat-up from 175°C to 220°C at 1K /min, hold 2h at 220°C
heat-up from 220°C to 260°C at 1K /min, hold 16h at 260°C

The cured material was cooled to RT and was removed from the aluminum pan (de-molded). The cured material was evaluated in term of mass loss (thermal-oxidative stability) and glass transition temperature.
The cured material had the following dimensions: diameter = 5 cm, thickness = 2cm.
The components and their amounts in gram (g) and wt.-% (% based on the total weight of the mixture) used in Comparative Example 1 and Examples 2, 3 and 4 are given in Table 1 (g) and Table 2 (wt.-%).

**Table 1:** Components and their amounts in gram (g) for Comparative Example 1 and Examples 2 to 4.

| | Comp. **Ex. 1** | **Example 2** | **Example 3** | **Example 4** |
|---|---|---|---|---|
| Perkalink | - | 7.5 | 5.0 | 2.5 |
| DABA-CN | 10 | 2.5 | 5.0 | 7.5 |
| Total gram | 10 | 10 | 10 | 20 |

**Table 2:** Components and their amounts in wt.-% based on the total weight of the mixture for Comparative Example 1 and Examples 2 to 4.

| **Example** | **Comp. Ex. 1** | **Example 2** | **Example 3** | **Example 4** |
|---|---|---|---|---|
| Perkalink | - | 75 | 50 | 25 |
| DABA-CN | 100 | 25 | 50 | 75 |
| Total wt.-% | 100 | 100 | 100 | 100 |

**Experimental procedure for testing the cured samples of Comparative Example 1 and Examples 2, 3, and 4**

Thermal oxidative stability:

The thermal oxidative stability of above cured samples was evaluated based upon weight loss during isothermal aging at 250°C. The cured samples (diameter 5 cm and thickness of 2 cm) were placed in an oven at 250°C for a long term aging test. The initial weight ($w_0$) of the cured samples was measured with an analytical balance having a resolution of at least 0.1 mg before starting aging test. Then the weight of the samples was re-measured ($w_{xhours}$) after different thermal aging periods at 250°C. The correspondent mass loss in % was calculated using the following formula:

$$\text{Mass Loss [\%]} = ((w_0 - w_{xhours})/w_0) \times 100$$

The samples were then re-placed in the oven at 250°C for continuing the aging test. The weight loss results are given in Table 3.

Glass transition temperature:

In addition to thermal oxidative stability testing, samples of the cured composition obtained after the curing cycle defined above for Comparative Example 1 and Examples 2, 3, and 4 were cut to specimens and the glass transition temperature (Tg) was analysed by Thermal Mechanical Analysis (TMA).

Glass transition temperature is the temperature at which the physical properties of a polymeric materials change from amorphous rigid, glassy or crystalline state to a flexible rubbery state. The machine used was a Mettler Toledo instrument TMA SDTA840. The sample dimensions were 6×6 $mm^2$ (length × width) and 2.0 mm thickness. The test method applied two heating ramps ($1^{st}$ heat-up: 25-250 °C at 10 K/min, $2^{nd}$ heat-up: 25-400 °C at 10 K/min). The Tg was evaluated on the second ramp. The result are given in Table 3.

**Table 3:** Mass loss and Tg onset for Comparative Example 1 and Examples 2, 3, and 4

| | **mass loss 500h at 250°C [%]** | **mass loss 1000h at 250°C [%]** | **mass loss 3000h at 250°C [%]** | **$T_g$ onset by TMA [°C]** |
|---|---|---|---|---|
| **Comp. Ex. 1** | **NR | 2.19 | **NR | >240 |
| **Example 2** | **NR | 1.54 | **NR | >240 |
| **Example 3** | **NR | 1.95 | **NR | >240 |
| **Example 4** | **NR | **NR | **NR | >240 |
| **NR = not recorded | | | | |

## Claims

1. A composition comprising components (a) and (b) wherein component (a) is one or more cyanate esters independently selected from

(i) a difunctional cyanate ester compound of formula (I)

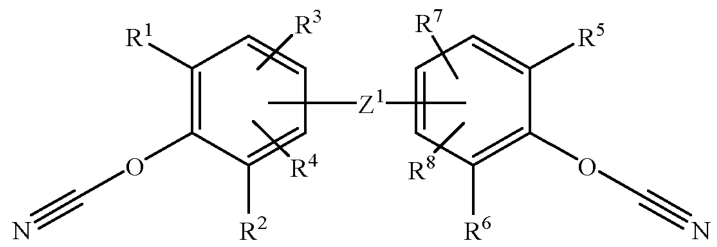

(I)

wherein

$R^1$ through $R^8$ are independently selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, halogenated $C_{3-8}$ cycloalkyl, linear $C_2$-$C_{10}$ alkenyl, branched $C_3$-$C_{10}$ alkenyl, $C_{1-10}$ alkoxy, halogen, phenyl and phenoxy,
wherein at least one of $R^1$ to $R^8$ is selected from the group consisting of linear $C_2$-$C_{10}$ alkenyl and branched $C_3$-$C_{10}$ alkenyl;
$Z^1$ indicates a direct bond or a divalent moiety selected from the group consisting of -O-, -S-, -S(=O)-, $-S(=O)_2-$, $-CH_2-$, $-CH(CH_3)-$, $-C(CH_3)_2-$, $-CH(CF_3)-$, $-C(CF_3)_2-$, -C(=O)-, $-C(=CH_2)-$, $-C(=CCl_2)-$, $-Si(CH_3)_2-$, linear $C_{1-10}$ alkanediyl, branched $C_{4-10}$ alkanediyl, $C_{3-8}$ cycloalkanediyl, 1,2-phenylene, 1,3-phenylene, 1,4-phenylene, $-N(R^{13})-$ wherein $R^{13}$ is selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, phenyl and phenoxy, and moieties of formulas

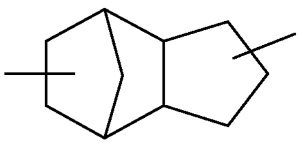

and

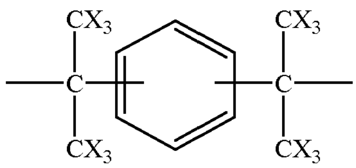

wherein X is independently selected from hydrogen and halogen;
and oligomers, prepolymers, polymers or mixtures thereof; or
wherein (a) is a mixture of (i) and (ii), wherein

(ii) is a polyfunctional cyanate ester of formula (II)

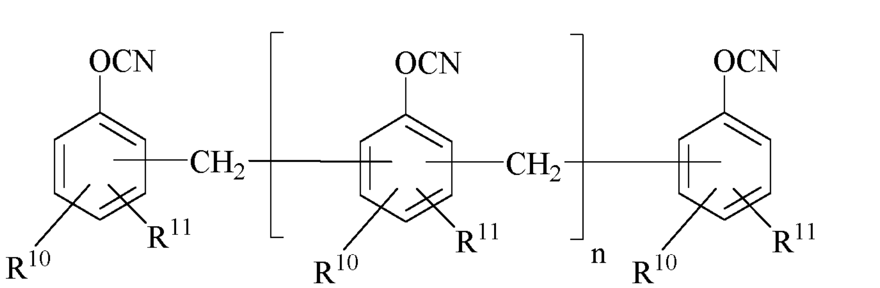

(II)

wherein

n is an integer from 1 to 20; and $R^{10}$ and $R^{11}$ are identical or different and independently from each other

selected from the group consisting of hydrogen, linear $C_{1-10}$ alkyl, branched $C_{4-10}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-1)

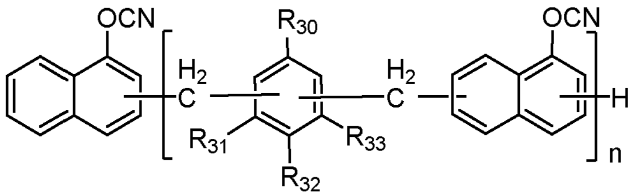

(IX-1)

wherein

n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and

oligomers, prepolymers, polymers or mixtures thereof; or

a polyfunctional cyanate ester of formula (IX-2)

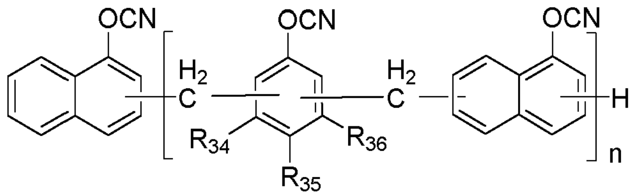

(IX-2)

wherein

n is an integer from 1 to 20; and $R^{34}$, $R^{35}$ and $R^{36}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-3)

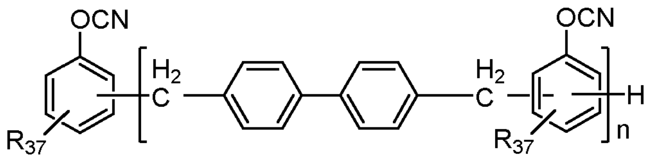

(IX-3)

wherein

n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-4)

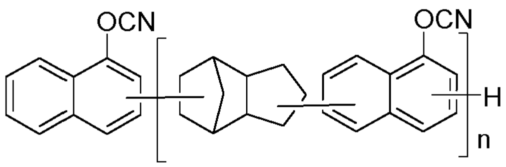

(IX-4)

wherein

n is an integer from 1 to 20; and oligomers, prepolymers, polymers or mixtures thereof;

or any combination of polyfunctional cyanate esters of formulas (II), (IX-1), (IX-2), (IX-3), and (IX-4);

and

wherein

component (b) is one or more substituted bisimide compound selected from the group consisting of biscitraconimide compound of formula (X1), bisitaconimide compound of formula (X2), and citraconimido-itaconimide compound of formula (X3)

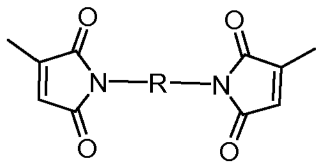 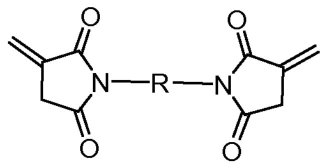 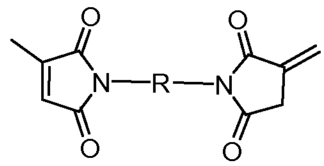

(X1) (X2) (X3)

wherein R is m-xylylene;
and oligomers, prepolymers, polymers or mixtures thereof;
wherein the ratio of component (a) to (b) is in the range of from 10-70 wt.-% component (a) to 90-30 wt.-% component (b) based on total amount of the resin composition.

**2.** A composition according to claim 1 wherein component (a) is one or more cyanate esters independently selected from

(i) a difunctional cyanate ester compound of formula (I)

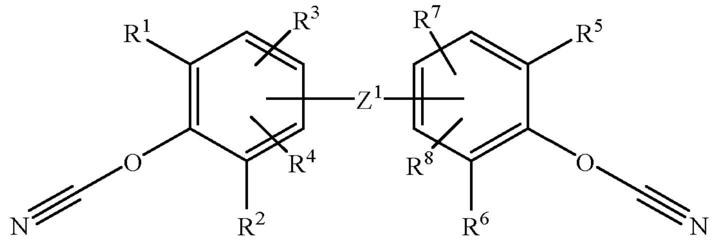

(I)

wherein

$R^1$ through $R^8$ are independently selected from the group consisting of hydrogen, linear $C_{1-10}$ alkyl, $C_{3-8}$ cycloalkyl, linear $C_2$-$C_{10}$ alkenyl, and branched $C_3$-$C_{10}$ alkenyl,
wherein at least one of $R^1$ to $R^8$ is selected from the group consisting of linear $C_2$-$C_{10}$ alkenyl and branched $C_3$-$C_{10}$ alkenyl;
$Z^1$ indicates a direct bond or a divalent moiety selected from the group consisting of -O-, -S-, -S(=O)-, $-S(=O)_2-$, $-CH_2-$, $-CH(CH_3)-$, $-C(CH_3)_2-$, $-CH(CF_3)-$, $-C(CF_3)_2-$, -C(=O)-, $-C(=CH_2)-$, $-C(=CCl_2)-$, $-Si(CH_3)_2-$, linear $C_{1-10}$ alkanediyl, branched $C_{4-10}$ alkanediyl, $C_{3-8}$ cycloalkanediyl, 1,2-phenylene, 1,3-phenylene, 1,4-phenylene, $-N(R^{13})-$ wherein $R^{13}$ is selected from the group consisting of hydrogen, linear $C_{1-10}$ alkyl, $C_{3-8}$ cycloalkyl, phenyl and phenoxy, and moieties of formulas

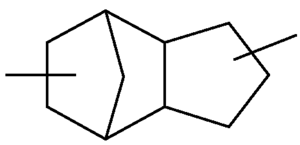 and 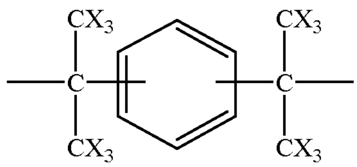

wherein X is independently selected from hydrogen and halogen; and oligomers, prepolymers, polymers or mixtures thereof; or
wherein (a) is a mixture of (i) and (ii), wherein

(ii) is a polyfunctional cyanate ester of formula (II)

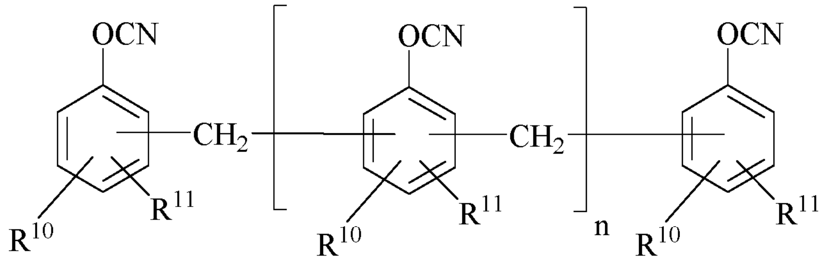

(II)

wherein

n is an integer from 1 to 20; and $R^{10}$ and $R^{11}$ are identical or different and independently from each other selected from the group consisting of hydrogen, linear $C_{1-10}$ alkyl, branched $C_{4-10}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-1)

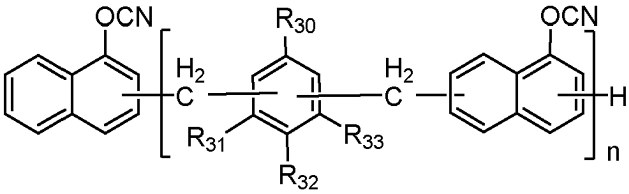

(IX-1)

wherein

n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and

oligomers, prepolymers, polymers or mixtures thereof; or

a polyfunctional cyanate ester of formula (IX-2)

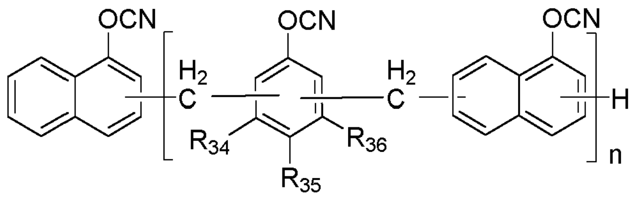

(IX-2)

wherein

n is an integer from 1 to 20; and $R^{34}$, $R^{35}$ and $R^{36}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and

oligomers, prepolymers, polymers or mixtures thereof; or

a polyfunctional cyanate ester of formula (IX-3)

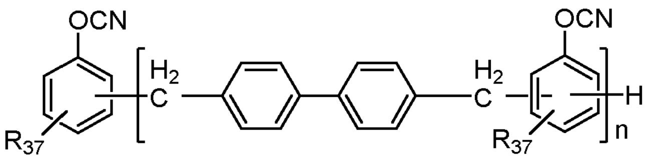

(IX-3)

wherein

n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-4)

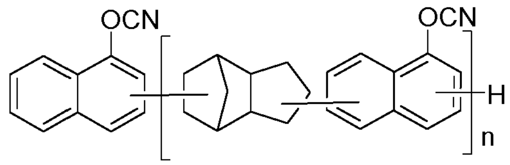

(IX-4)

wherein

n is an integer from 1 to 20; and oligomers, prepolymers, polymers or mixtures thereof;
or any combination of polyfunctional cyanate esters of formulas (II), (IX-1), (IX-2), (IX-3), and (IX-4).

**3.** A composition according to claim 1 or 2 wherein component (a) is one or more cyanate esters independently selected from

(i) a difunctional cyanate ester compound of formula (I)

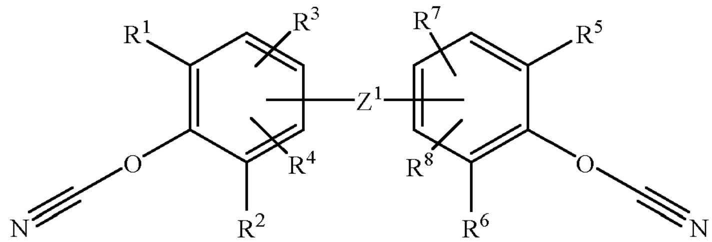

(I)

wherein

$R^1$ through $R^8$ are independently selected from the group consisting of hydrogen, linear $C_{1-3}$ alkyl, linear $C_2$-$C_{10}$ alkenyl, and branched $C_3$-$C_{10}$ alkenyl,
wherein at least one of $R^1$ to $R^8$ is selected from the group consisting of linear $C_2$-$C_{10}$ alkenyl and branched $C_3$-$C_{10}$ alkenyl;
$Z^1$ indicates a direct bond or a divalent moiety selected from the group consisting of -O-, -S-, $-S(=O)_2-$, $-CH_2-$, $-CH(CH_3)-$, $-C(CH_3)_2-$, $-C(CF_3)_2-$, $-C(=CCl_2)-$, branched $C_{4-6}$ alkanediyl, $C_{3-8}$ cycloalkanediyl, 1,2-phenylene, 1,3-phenylene, 1,4-phenylene; and oligomers, prepolymers, polymers or mixtures thereof; or wherein (a) is a mixture of (i) and (ii) wherein

(ii) is a polyfunctional cyanate ester of formula (II)

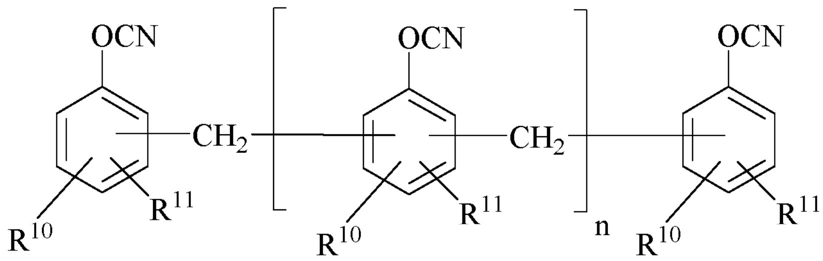

(II)

,

wherein

n is an integer from 1 to 10; and $R^{10}$ and $R^{11}$ are identical or different and independently from each other selected from the group consisting of hydrogen, linear $C_{1-5}$ alkyl, branched $C_{4-6}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-1)

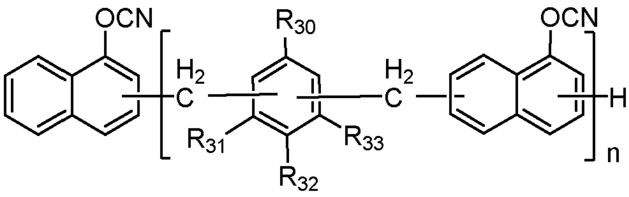

(IX-1)

wherein

n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-2)

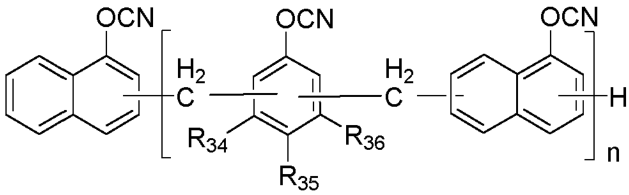

(IX-2)

wherein

n is an integer from 1 to 20; and $R^{34}$, $R^{35}$ and $R^{36}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-3)

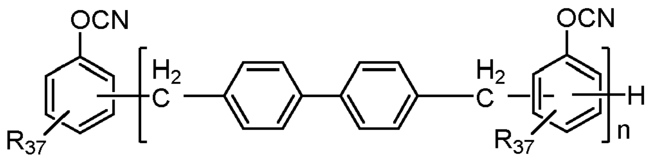

(IX-3)

wherein

n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-4)

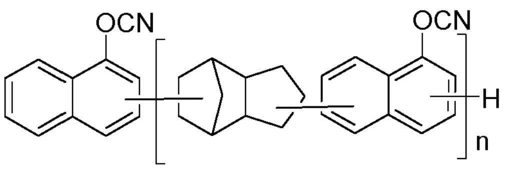

(IX-4)

wherein

n is an integer from 1 to 20; and oligomers, prepolymers, polymers or mixtures thereof;

or any combination of polyfunctional cyanate esters of formulas (II), (IX-1), (IX-2), (IX-3), and (IX-4).

**4.** A composition according to any one of claims 1, 2, or 3 wherein component (a) is one or more cyanate esters independently selected from

(i) a difunctional cyanate ester compound of formula (I)

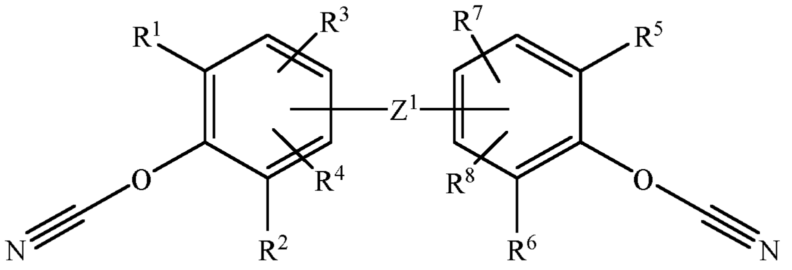

(I)

wherein the difunctional cyanate ester of formula I is independently selected from the group consisting of

i) $R^1$ and $R^5$ are allyl, $R^2$ and $R^6$ are methyl, $R^3$, $R^4$, $R^7$ and $R^8$ are hydrogen and wherein $Z^1$ is $-CH_2-$ (methylene);
ii) $R^1$ and $R^5$ are allyl and $R^2$, $R^3$, $R^4$, $R^6$, $R^7$ and $R^8$ are hydrogen and wherein $Z^1$ is $-CH_2-$(methylene);
iii) $R^1$ and $R^5$ are allyl and $R^2$, $R^3$, $R^4$, $R^6$, $R^7$ and $R^8$ are hydrogen and wherein $Z^1$ is $-C(CH_3)_2-$;
iv) $R^1$ and $R^5$ are allyl and $R^2$, $R^3$, $R^4$, $R^6$, $R^7$ and $R^8$ are hydrogen and $Z^1$ is $-C(=O)-$;
v) $R^1$ and $R^5$ are allyl and $R^2$, $R^3$, $R^4$, $R^6$, $R^7$ and $R^8$ are hydrogen and $Z^1$ is $-S(=O)-$ ;
vi) $R^1$ and $R^5$ are allyl and $R^2$, $R^3$, $R^4$, $R^6$, $R^7$ and $R^8$ are hydrogen and $Z^1$ is $-S-$;
vii) $R^1$ and $R^5$ are allyl and $R^2$, $R^3$, $R^4$, $R^6$, $R^7$ and $R^8$ are hydrogen and $Z^1$ is $-C(CF_3)_2-$;
viii)$R^1$ and $R^5$ are allyl and $R^2$, $R^3$, $R^4$, $R^6$, $R^7$ and $R^8$ are hydrogen and $Z^1$ is $-C(=CCl_2)-$;
ix) $R^1$ and $R^5$ are allyl and $R^2$, $R^3$, $R^4$, $R^6$, $R^7$ and $R^8$ are hydrogen and $Z^1$ is independently selected from the group consisting of

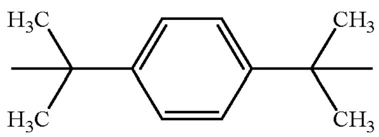

,

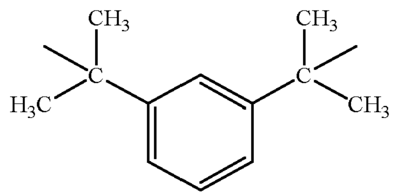

;

x) $R^1$ and $R^5$ are allyl and $R^2$, $R^3$, $R^4$, $R^6$, $R^7$ and $R^8$ are hydrogen and $Z^1$ is

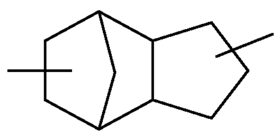

;

or
xi) $R^1$ and $R^5$ are allyl and $R^2$, $R^3$, $R^4$, $R^6$, $R^7$ and $R^8$ are hydrogen and $Z^1$ is $-CH(CH_3)-$;
and oligomers, prepolymers, polymers or mixtures thereof, or
wherein (a) is a mixture of (i) and (ii), wherein

(ii) is a polyfunctional cyanate ester of formula (II)

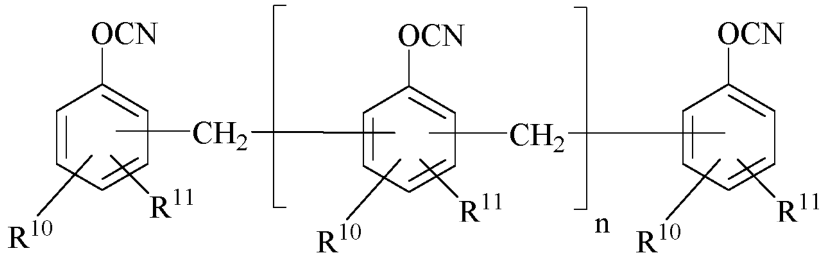

(II)

,

wherein the polyfunctional cyanate ester is independently selected from the group consisting of compound III, compound IV, compound V, compound VI, and oligomers, prepolymers, polymers or mixtures thereof

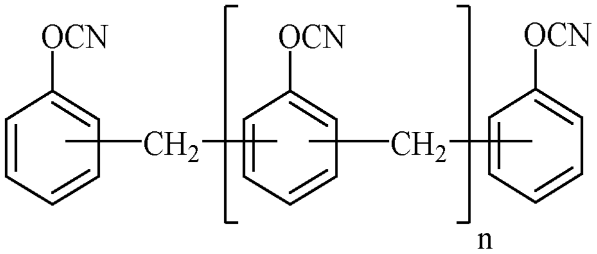

**III**

n is 2 to 3

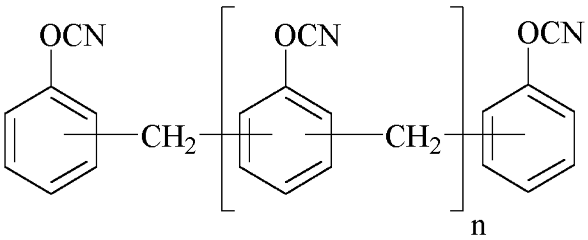

**IV**

n is 3 to 4

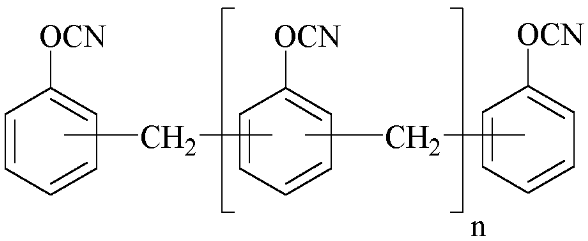

**V**

n is 3 to 6

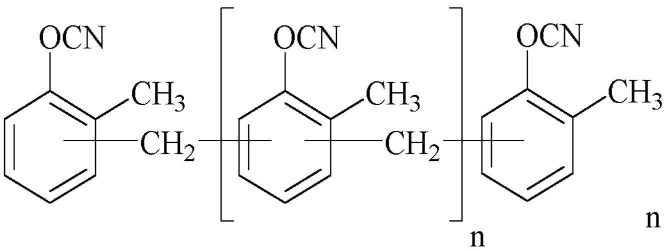

**VI**

n is 3 to 6 on average

;

or

a polyfunctional cyanate ester of formula (IX-1)

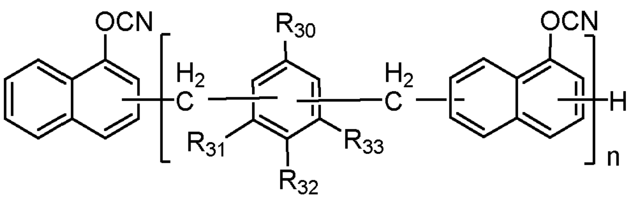

(IX-1)

wherein

n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and

oligomers, prepolymers, polymers or mixtures thereof; or

a polyfunctional cyanate ester of formula (IX-2)

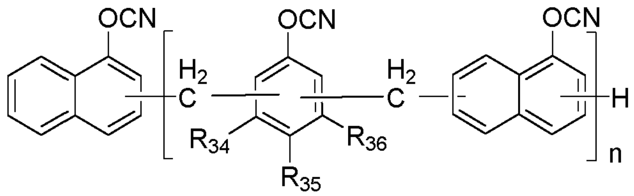

(IX-2)

wherein
n is an integer from 1 to 20; and $R^{34}$, $R^{35}$ and $R^{36}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and
oligomers, prepolymers, polymers or mixtures thereof; or
a polyfunctional cyanate ester of formula (IX-3)

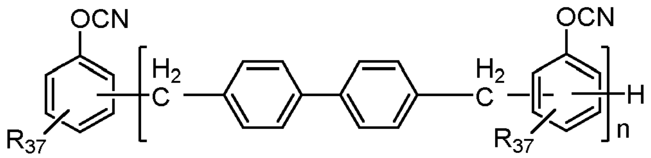

(IX-3)

wherein
n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or
a polyfunctional cyanate ester of formula (IX-4)

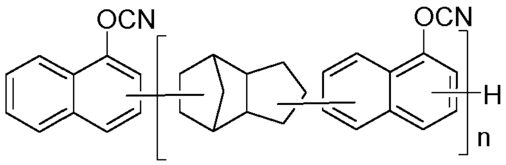

(IX-4)

wherein
n is an integer from 1 to 20; and oligomers, prepolymers, polymers or mixtures thereof;
or any combination of polyfunctional cyanate esters of formulas (II), (IX-1), (IX-2), (IX-3), and (IX-4).

**5.** A composition according to any one of claims 1, 2, 3, or 4 the ratio of component (a) to (b) is in the range of from 20-70 wt.-% component (a) to 80-30 wt.-% component (b) based on total amount of the resin composition.

**6.** A composition according to any one of claims 1, 2, 3, 4, or 5 wherein the composition further comprises a catalyst selected from the group consisting of aliphatic mono-, di- and polyamines, aromatic mono-, di- and polyamines, carbocyclic mono-, di and polyamines, heterocyclic mono-, di- and polyamines, compounds containing a five- or six-membered nitrogen-containing heterocyclic ring, hydroxyamines, phosphines, phenols, bisphenols, and mixtures thereof.

**7.** A composition according to claim 6, wherein the catalyst is a compound of formula (VII)

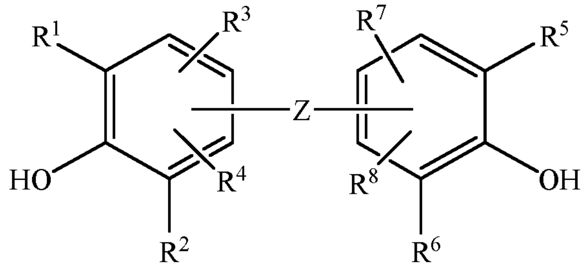

(VII)

wherein

$R^1$ through $R^8$ are independently selected from the group consisting of hydrogen, linear $C_{1-10}$ alkyl, linear $C_2$-$C_{10}$ alkenyl, halogenated linear $C_{1-10}$ alkyl, branched $C_{4-10}$ alkyl, branched $C_3$-$C_{10}$ alkenyl, halogenated branched $C_{4-10}$ alkyl, $C_{3-8}$ cycloalkyl, halogenated $C_{3-8}$ cycloalkyl, $C_{1-10}$ alkoxy, halogen, phenyl and phenoxy,
wherein at least one of $R^1$ to $R^8$ is selected from the group consisting of linear $C_2$-$C_{10}$ alkenyl and branched $C_3$-$C_{10}$ alkenyl;
Z indicates a direct bond or a divalent moiety selected from the group consisting of -O-, -S-, -S(=O)-, $-S(=O)_2-$, $-CH_2-$, $-CH(CH_3)-$, $-C(CH_3)_2-$, $-CH(CF_3)-$, $-C(CF_3)_2-$, -C(=O)-, $-C(=CH_2)-$, $-C(=CCl_2)-$, $-Si(CH_3)_2-$, linear $C_{1-10}$ alkanediyl, branched $C_{4-10}$ alkanediyl, $C_{3-8}$ cycloalkanediyl, 1,2-phenylene, 1,3-phenylene, 1,4-phenylene, $-N(R^{13})-$ wherein $R^{13}$ is selected from the group consisting of hydrogen, linear $C_{1-10}$ alkyl, halogenated linear $C_{1-10}$ alkyl, branched $C_{4-10}$ alkyl, halogenated branched $C_{4-10}$ alkyl, $C_{3-8}$ cycloalkyl, phenyl and phenoxy, and moieties of formulas

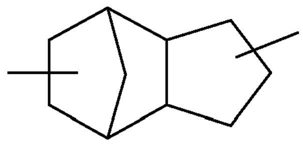

and

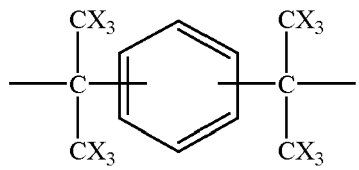

;

wherein X is independently selected from hydrogen and halogen;
and oligomers, prepolymers, polymers or mixtures thereof.

**8.** A composition according to claim 6 or 7, wherein the catalyst is present in an amount of 0.01 to 20 wt.-% based on the total amount of the resin composition.

**9.** A composition according to any one of claims 1, 2, 3, 4, 5, 6, 7, or 8 wherein the composition further comprises reinforcement fibres selected from the group consisting of carbon fibres, glass fibres (such as E glass fibres, S glass fibres), aramid fibres (including KEVLAR®), basalt fibres (geotextile fibers), natural fibres (such as flax, hemp, jute or sisal), fleeces and woven fabrics (multi-layered or single layered), and mixtures thereof.

**10.** A composition according to any one of claims 1, 2, 3, 4, 5, 6, 7, 8, or 9 wherein the composition further comprise a filler selected from the group consisting of organic fillers, such as thermoplastics and elastomers, inorganic fillers, wherein the inorganic filler is selected from glass microspheres, graphite, graphene/nano-graphen, carbon nanotubes (SWCNT and/or MWCNT) or silica, and mineral powder fillers, such as $CaCO_3$, coated $CaCO_3$, kaolin clay, $SiO_2$, talc, graphite, corundum ($\alpha$-$Al_2O_3$), wollastonite, SiC, glass microspheres, mica, calcium silicate ($Ca_2O_4Si$), MgO, anhydrous calcium sulfate ($CaSO_4$ or anhydrite), ceramic hollow microspheres, fused mullite ($Al_2O_3$-$SiO_2$), boron nitride (BN), vermiculite, or basalt, and mixtures thereof.

**11.** A composition according to any one of claims 1, 2, 3, 4, 5, 6, 7, 8, 9, or 10 wherein component (a) is one or more cyanate esters independently selected from

(i) a difunctional cyanate ester compound of formula (I)

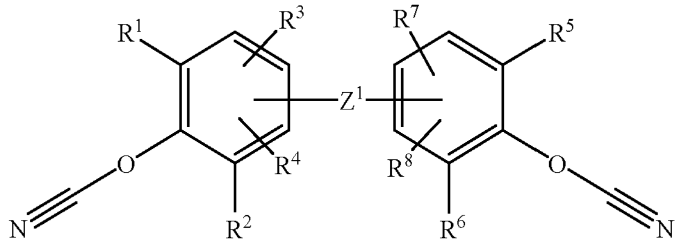

(I)

,

wherein $R^1$ through $R^8$ are independently selected from the group consisting of hydrogen, linear $C_2$-$C_{10}$ alkenyl, and branched $C_3$-$C_{10}$ alkenyl,
wherein at least one of $R^1$ to $R^8$ is selected from the group of consisting of linear $C_2$-$C_{10}$ alkenyl and branched $C_3$-$C_{10}$ alkenyl,
preferably wherein $R^1$ and $R^5$ are each independently linear $C_2$-$C_{10}$ alkenyl or branched $C_3$-$C_{10}$ alkenyl and $R^2$, $R^3$, $R^4$, $R^6$, $R^7$ and $R^8$ are hydrogen,
even more preferably wherein $R^1$ and $R^5$ are allyl and $R^2$, $R^3$, $R^4$, $R^6$, $R^7$ and $R^8$ are hydrogen; and
$Z^1$ is $-C(CH_3)_2-$
and oligomers, prepolymers, polymers or mixtures thereof; or

wherein (a) is a mixture of (i) and (ii), wherein
(ii) is a polyfunctional cyanate ester of formula (II)

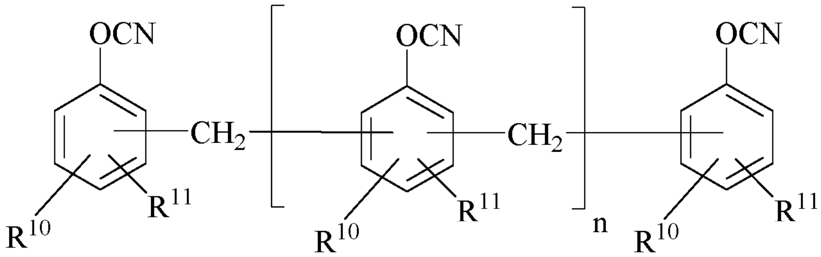

(II)

,

wherein the polyfunctional cyanate ester is independently selected from the group consisting of compound III, compound IV, compound V, and oligomers, prepolymers, polymers or mixtures thereof;

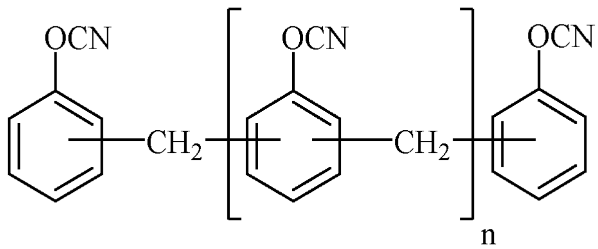

**III**

n is 2 to 3

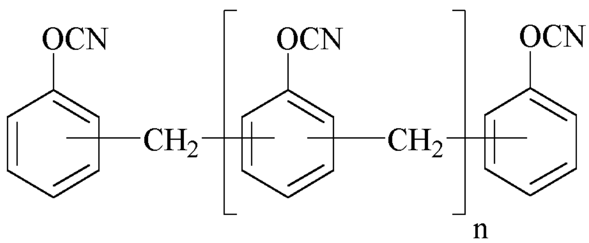

**IV**

n is 3 to 4

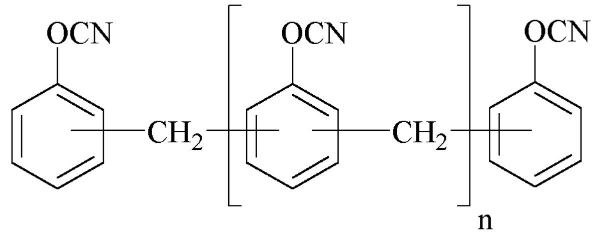

V

n is 3 to 6

;

or

a polyfunctional cyanate ester of formula (IX-1)

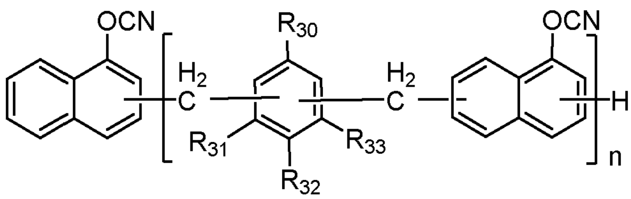

(IX-1)

wherein

n is an integer from 1 to 20; and $R^{30}$, $R^{31}$, $R^{32}$ and $R^{33}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-2)

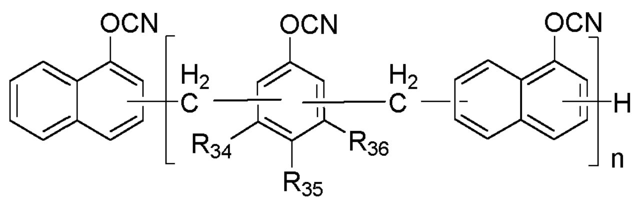

(IX-2)

wherein

n is an integer from 1 to 20; and $R^{34}$, $R^{35}$ and $R^{36}$ are identical or different and independently from each other selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-3)

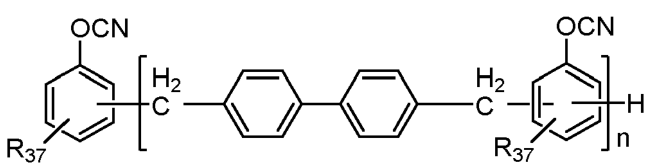

(IX-3)

wherein

n is an integer from 1 to 20; and $R^{37}$ is selected from the group consisting of hydrogen, linear $C_{1-10}$ alkyl, branched $C_{3-10}$ alkyl, linear $C_2$-$C_{10}$ alkenyl, and branched $C_3$-$C_{10}$ alkenyl; and oligomers, prepolymers, polymers or mixtures thereof; or

a polyfunctional cyanate ester of formula (IX-4)

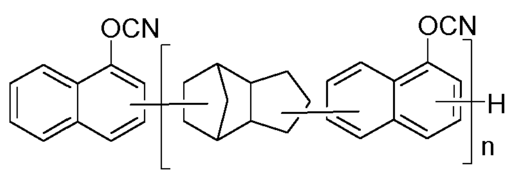

(IX-4)

wherein
n is an integer from 1 to 20; and oligomers, prepolymers, polymers or mixtures thereof;
or any combination of polyfunctional cyanate esters of formulas (II), (IX-1), (IX-2), (IX-3), and (IX-4);
and
wherein component (b) is a biscitraconimide compound of formula (X1)

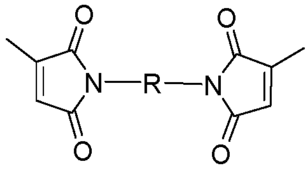

(X1)

wherein R is m-xylylene;
and oligomers, prepolymers, polymers or mixtures thereof.

**12.** A method for the preparation of a composition according to any one of claims 1-11 comprising the steps of:

i) providing a mixture of components according to any one of claims 1-11; and
ii) intimately mixing the components together.

**13.** A method for the preparation of a thermoset composite material comprising the steps of:

i) providing a mixture of components according to any one of claims 1-11;
ii) intimately mixing the components together;
iii) providing fibres, fillers, pigments and/or additives;
iv) contacting the mixture obtained in step ii) with the fibres, fillers, pigments and/or additives;
v) optionally casting the mixture into the desired form; and
vi) initiating polymerization of the mixture.

**14.** Use of a composition as defined in any one of claims 1-11 for producing a thermoset composite material.

**15.** A thermoset composite material obtained by the method according to claim 13, wherein the thermoset composite material exhibits a mass loss after 1000 h at 250°C of less than 2.5 wt.-%, preferably of less than 2.0 wt.-%, more preferably of less than 1.75 wt.-%.

**Patentansprüche**

**1.** Zusammensetzung, umfassend die Komponenten (a) und (b), wobei Komponente (a) ein oder mehrere Cyanatester ist, die unabhängig voneinander ausgewählt sind aus

(i) einer difunktionellen Cyanatesterverbindung der Formel (I)

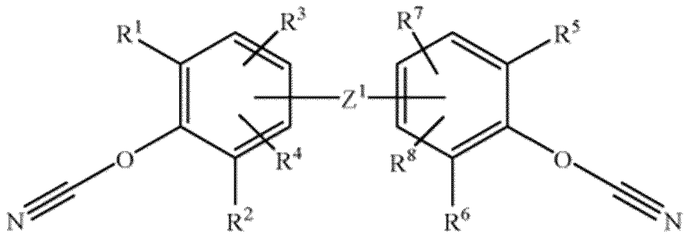

(I)

wobei

$R^1$ bis $R^8$ unabhängig voneinander ausgewählt sind aus der Gruppe bestehend aus Wasserstoff, linearem $C_{1-10}$-Alkyl, halogeniertem linearem $C_{1-10}$-Alkyl, verzweigtem $C_{4-10}$-Alkyl, halogeniertem verzweigtem $C_{4-10}$-Alkyl, $C_{3-8}$-Cycloalkyl, halogeniertem $C_{3-8}$-Cycloalkyl, linearem $C_{2-10}$-Alkenyl, verzweigtem $C_3$-$C_{10}$-Alkenyl, $C_{1-10}$-Alkoxy, Halogen, Phenyl und Phenoxy,
wobei mindestens einer von $R^1$ bis $R^8$ ausgewählt ist aus der Gruppe bestehend aus linearem $C_{2-10}$-Alkenyl und verzweigtem $C_3$-$C_{10}$-Alkenyl
$Z^1$ bezeichnet eine direkte Bindung oder eine zweiwertige Gruppe, ausgewählt aus der Gruppe bestehend aus -O-, -S-, -S(=O)-, $-S(=O)_2-$, $-CH_2-$, $-CH(CH_3)-$, - $C(CH_3)_2-$, $-CH(CF_3)-$, $-C(CF_3)_2-$, -C(=O)-, $-C(=CH_2)-$, $-C(=CCl_2)-$, $-Si(CH_3)_2-$, linearem $C_{1-10}$-Alkandiyl, verzweigtem $C_{4-10}$-Alkandiyl, $C_{3-8}$-Cycloalkandiyl, 1,2-Phenylen, 1,3-Phenylen, 1,4-Phenylen, $-N(R^{13})-$, wobei $R^{13}$ ausgewählt ist aus der Gruppe bestehend aus Wasserstoff, linearem $C_{1-10}$-Alkyl, halogeniertem linearem $C_{1-10}$-Alkyl, verzweigtem $C_{4-10}$-Alkyl, halogeniertem verzweigtem $C_{4-10}$-Alkyl, $C_{3-8}$-Cycloalkyl, Phenyl und Phenoxy, sowie Resten der Formeln

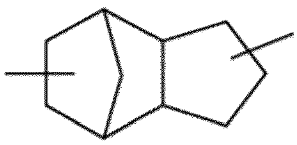
und
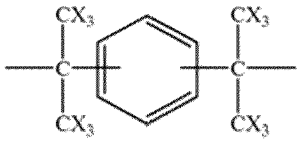

wobei X unabhängig ausgewählt ist aus Wasserstoff und Halogen; sowie Oligomeren, Präpolymeren, Polymeren oder Mischungen davon; oder
wobei (a) ein Gemisch aus (i) und (ii) ist, wobei

(ii) ein polyfunktioneller Cyanatester der Formel (II) ist

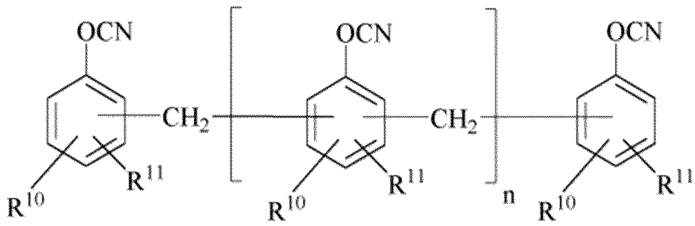
(II)

wobei

n eine ganze Zahl von 1 bis 20 ist; und $R^{10}$ und $R^{11}$ gleich oder verschieden sind und unabhängig voneinander ausgewählt sind aus der Gruppe bestehend aus Wasserstoff, linearem $C_{1-10}$-Alkyl, verzweigtem $C_{4-10}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-1)

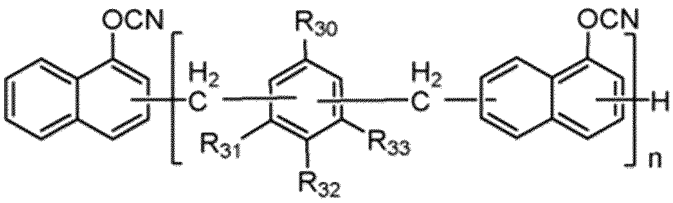
(IX-1)

wobei
n eine ganze Zahl von 1 bis 20 ist; und $R^{30}$, $R^{31}$, $R^{32}$ und $R^{33}$ gleich oder verschieden sind und unabhängig voneinander ausgewählt sind aus der Gruppe bestehend aus Wasserstoff, linearem $C_{1-10}$-Alkyl, verzweigtem $C_{3-10}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-2)

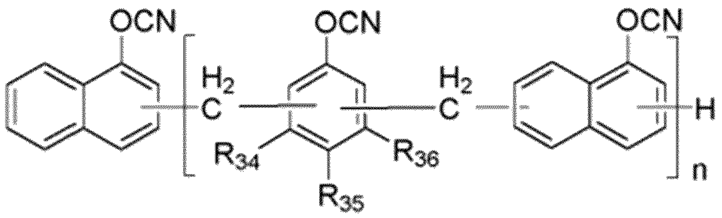

(IX-2)

wobei
n eine ganze Zahl von 1 bis 20 ist; und $R^{34}$, $R^{35}$ und $R^{36}$ gleich oder verschieden sind und unabhängig voneinander ausgewählt sind aus der Gruppe bestehend aus Wasserstoff, linearem $C_{1-10}$-Alkyl, verzweigtem $C_{3-10}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-3)

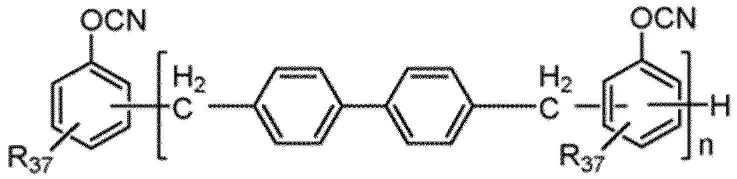

(IX-3)

wobei
n eine ganze Zahl von 1 bis 20 ist; und $R^{37}$ ausgewählt ist aus der Gruppe bestehend aus Wasserstoff, linearem $C_{1-10}$-Alkyl, verzweigtem $C_{3-10}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-4).

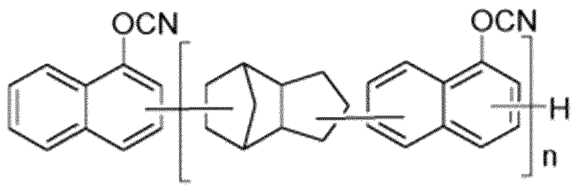

(IX-4)

wobei
n eine ganze Zahl von 1 bis 20 ist; sowie Oligomere, Präpolymere, Polymere oder Mischungen davon;
oder jede Kombination von polyfunktionellen Cyanatestem der Formeln (II), (IX-1), (IX-2), (IX-3) und (IX-4); und
wobei
Komponente (b) eine oder mehrere substituierte Bisimid-Verbindungen ist, ausgewählt aus der Gruppe bestehend aus Biscitraconimid-Verbindung der Formel (X1), Bisitaconimid-Verbindung der Formel (X2) und Citraconimido-Itaconimid-Verbindung der Formel (X3)

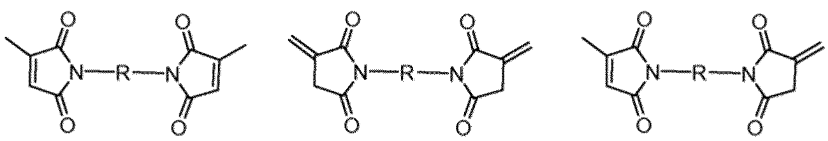

(X1) (X2) (X3)

wobei R m-Xylylen ist;
sowie Oligomere, Präpolymere, Polymere oder Mischungen davon;
wobei das Verhältnis von Komponente (a) zu (b) im Bereich von 10-70 Gew.-% Komponente (a) zu 90-30 Gew.-% Komponente (b) basierend auf der Gesamtmenge der Harzzusammensetzung.

**2.** Zusammensetzung gemäß Anspruch 1, wobei Komponente (a) ein oder mehrere Cyanatester ist, die unabhängig voneinander ausgewählt sind aus

(i) einem difunktionellen Cyanatester der Formel (I)

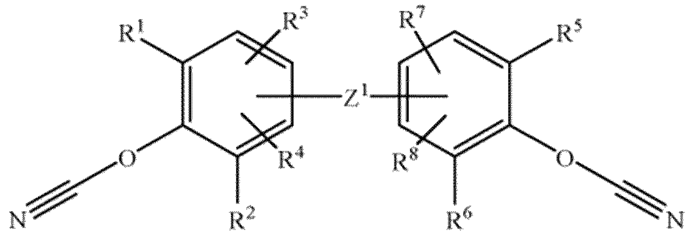

(I)

wobei

$R^1$ bis $R^8$ unabhängig voneinander ausgewählt sind aus der Gruppe bestehend aus Wasserstoff, linearem $C_{1-10}$-Alkyl, $C_{3-8}$-Cycloalkyl, linearem $C_{2-10}$-Alkenyl, und verzweigtem $C_3$-$C_{10}$-Alkenyl, wobei mindestens einer von $R^1$ bis $R^8$ ausgewählt ist aus der Gruppe bestehend aus linearem $C_{2-10}$-Alkenyl und verzweigtem $C_3$-$C_{10}$-Alkenyl;
$Z^1$ bezeichnet eine direkte Bindung oder eine zweiwertige Gruppe, ausgewählt aus der Gruppe bestehend aus -O-, -S-, -S(=O)-, $-S(=O)_2-$, $-CH_2-$, $-CH(CH_3)-$, - $C(CH_3)_2-$, $-CH(CF_3)-$, $-C(CF_3)_2-$, -C(=O)-, $-C(=CH_2)-$, $-C(=CCl_2)-$, $-Si(CH_3)_2-$, linearem $C_{1-10}$-Alkandiyl, verzweigtem $C_{4-10}$-Alkandiyl, $C_{3-8}$-Cycloalkandiyl, 1,2-Phenylen, 1,3-Phenylen, 1,4-Phenylen, $-N(R^{13})-$, wobei $R^{13}$ ausgewählt ist aus der Gruppe bestehend aus Wasserstoff, linearem $C_{1-10}$-Alkyl, $C_{3-8}$-Cycloalkyl, Phenyl und Phenoxy, sowie Resten der Formeln

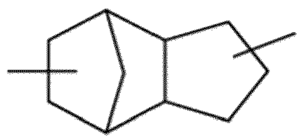

und

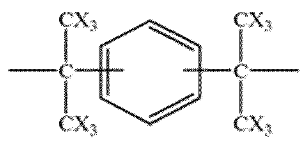

wobei X unabhängig ausgewählt ist aus Wasserstoff und Halogen; sowie Oligomeren, Präpolymeren, Polymeren oder Mischungen davon; oder
wobei (a) ein Gemisch aus (i) und (ii) ist, wobei

(ii) ein polyfunktioneller Cyanatester der Formel (II) ist

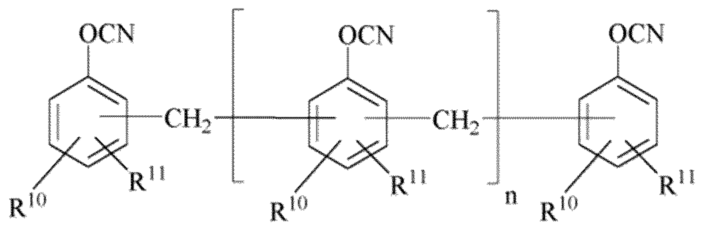

(II)

wobei

n eine ganze Zahl von 1 bis 20 ist; und $R^{10}$ und $R^{11}$ gleich oder verschieden sind und unabhängig voneinander ausgewählt sind aus der Gruppe bestehend aus Wasserstoff, linearem $C_{1-10}$-Alkyl, verzweigtem $C_{4-10}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-1)

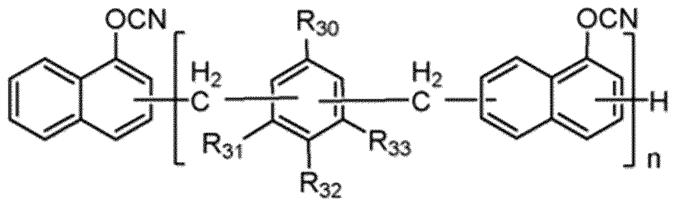

(IX-1)

wobei
n eine ganze Zahl von 1 bis 20 ist; und $R^{30}$, $R^{31}$, $R^{32}$ und $R^{33}$ gleich oder verschieden sind und unabhängig voneinander ausgewählt sind aus der Gruppe bestehend aus Wasserstoff, linearem $C_{1-10}$-Alkyl, verzweigtem $C_{3-10}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-2)

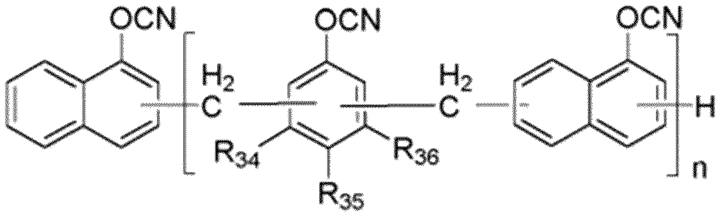

(IX-2)

wobei
n eine ganze Zahl von 1 bis 20 ist; und $R^{34}$, $R^{35}$ und $R^{36}$ gleich oder verschieden sind und unabhängig voneinander ausgewählt sind aus der Gruppe bestehend aus Wasserstoff, linearem $C_{1-10}$-Alkyl, verzweigtem $C_{3-10}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-3)

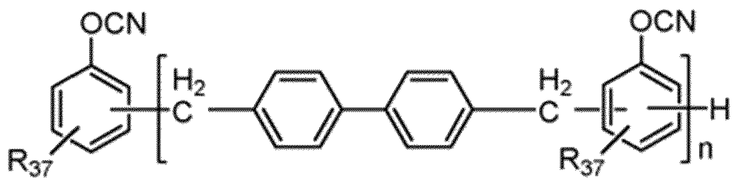

(IX-3)

wobei
n eine ganze Zahl von 1 bis 20 ist; und $R^{37}$ ausgewählt ist aus der Gruppe bestehend aus Wasserstoff, linearem $C_{1-10}$-Alkyl, verzweigtem $C_{3-10}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-4).

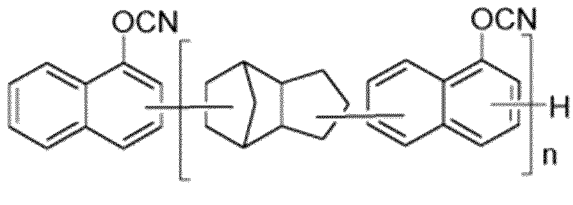

(IX-4)

wobei
n eine ganze Zahl von 1 bis 20 ist; sowie Oligomere, Präpolymere, Polymere oder Mischungen davon;
oder jede Kombination von polyfunktionellen Cyanatestern der Formeln (II), (IX-1), (IX-2), (IX-3) und (IX-4).

**3.** Zusammensetzung gemäß Anspruch 1 oder 2, wobei Komponente (a) ein oder mehrere Cyanatester ist, die unabhängig voneinander ausgewählt sind aus

(i) einem difunktionellen Cyanatester der Formel (I)

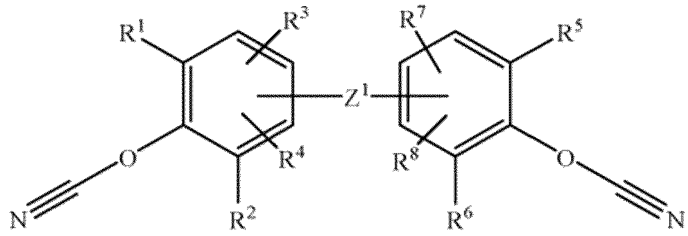

(I)

wobei

$R^1$ bis $R^8$ unabhängig voneinander ausgewählt sind aus der Gruppe bestehend aus Wasserstoff, linearem $C_{1-3}$-Alkyl, linearem $C_{2-10}$-Alkenyl, und verzweigtem $C_3$-$C_{10}$-Alkenyl,
wobei mindestens einer von $R^1$ bis $R^8$ ausgewählt ist aus der Gruppe bestehend aus linearem $C_{2-10}$-Alkenyl und verzweigtem $C_3$-$C_{10}$-Alkenyl;
$Z^1$ bezeichnet eine direkte Bindung oder eine zweiwertige Gruppe, ausgewählt aus der Gruppe bestehend aus -O-, -S-, $-S(=O)_2-$, $-CH_2-$, $-CH(CH_3)-$, $-C(CH_3)_2-$, - $C(=CCl_2)-$, verzweigtem $C_{4-6}$-Alkandiyl, $C_{3-8}$-Cycloalkandiyl, 1,2-Phenylen, 1,3-Phenylen, 1,4-Phenylen; sowie Oligomeren, Präpolymeren, Polymeren oder Mischungen davon; oder
wobei (a) ein Gemisch aus (i) und (ii) ist, wobei

(ii) ein polyfunktioneller Cyanatester der Formel (II) ist

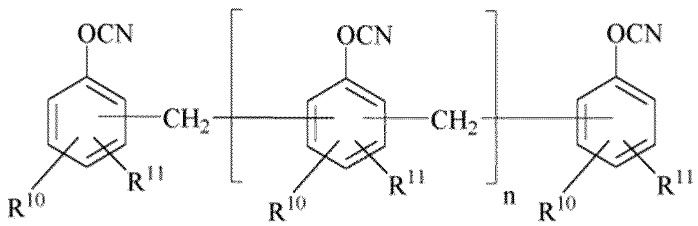

(II)

wobei

n eine ganze Zahl von 1 bis 10 ist; und $R^{10}$ und $R^{11}$ gleich oder verschieden sind und unabhängig voneinander ausgewählt sind aus der Gruppe bestehend aus Wasserstoff, linearem $C_{1-3}$-Alkyl, verzweigtem $C_{4-6}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-1)

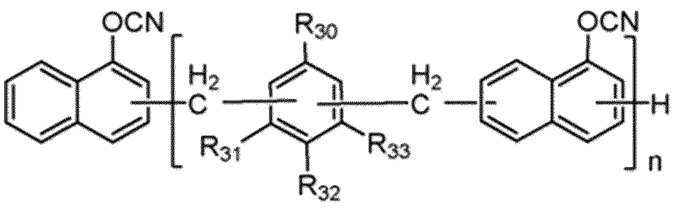

(IX-1)

wobei
n eine ganze Zahl von 1 bis 20 ist; und $R^{30}$, $R^{31}$, $R^{32}$ und $R^{33}$ gleich oder verschieden sind und unabhängig voneinander ausgewählt sind aus der Gruppe bestehend aus Wasserstoff, linearem $C_{1-10}$-Alkyl, verzweigtem $C_{3-10}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-2)

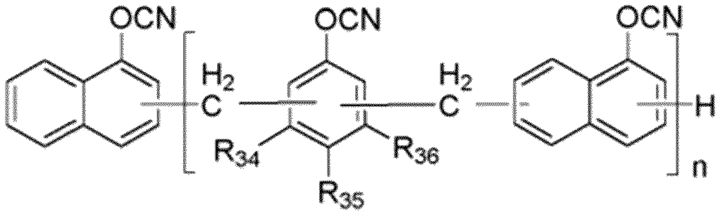

(IX-2)

wobei
n eine ganze Zahl von 1 bis 20 ist; und $R^{34}$, $R^{35}$ und $R^{36}$ gleich oder verschieden sind und unabhängig voneinander ausgewählt sind aus der Gruppe bestehend aus Wasserstoff, linearem $C_{1-10}$-Alkyl, verzweigtem $C_{3-10}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-3)

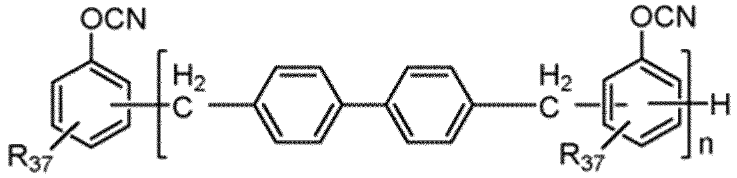

(IX-3)

wobei n eine ganze Zahl von 1 bis 20 ist; und $R^{37}$ ausgewählt ist aus der Gruppe bestehend aus Wasserstoff, linearem $C_{1-10}$-Alkyl, verzweigtem $C_{3-10}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-4).

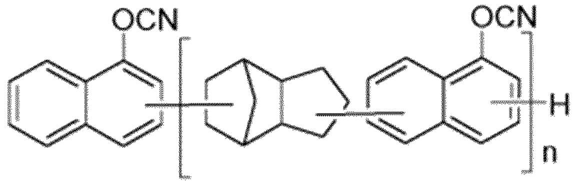

(IX-4)

wobei
n eine ganze Zahl von 1 bis 20 ist; sowie Oligomere, Präpolymere, Polymere oder Mischungen davon;
oder jede Kombination von polyfunktionellen Cyanatestern der Formeln (II), (IX-1), (IX-2), (IX-3) und (IX-4).

**4.** Zusammensetzung gemäß Anspruch 1, 2 oder 3, wobei Komponente (a) ein oder mehrere Cyanatester ist, die unabhängig voneinander ausgewählt sind aus

(i) einem difunktionellen Cyanatester der Formel (I)

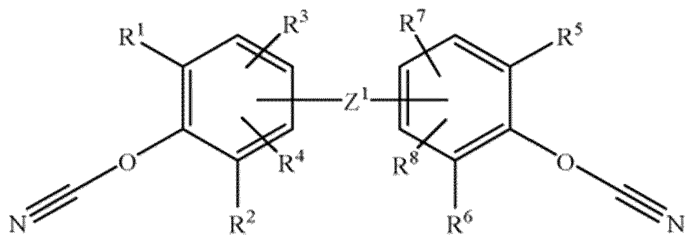

(I)

wobei der difunktionelle Cyanatester der Formel (I) unabhängig ausgewählt ist aus der Gruppe bestehend aus

i) $R^1$ und $R^5$ sind Allyl, $R^2$ und $R^6$ sind Methyl, $R^3$, $R^4$, $R^7$ und $R^8$ sind Wasserstoff und $Z^1$ ist $-CH_2-$

(Methylengruppe);
ii) $R^1$ und $R^5$ sind Allyl und $R^2$, $R^3$, $R^4$, $R^6$, $R^7$ und $R^8$ sind Wasserstoff und $Z^1$ ist $-CH_2-$(Methylengruppe);
iii) $R^1$ und $R^5$ sind Allyl und $R^2$, $R^3$, $R^4$, $R^6$, $R^7$ und $R^8$ sind Wasserstoff und $Z^1$ ist - $C(CH_3)_2$-,
iv) $R^1$ und $R^5$ sind Allyl und $R^2$, $R^3$, $R^4$, $R^6$, $R^7$ und $R^8$ sind Wasserstoff und $Z^1$ ist - C(=O)-;
v) $R^1$ und $R^5$ sind Allyl und $R^2$, $R^3$, $R^4$, $R^6$, $R^7$ und $R^8$ sind Wasserstoff und $Z^1$ ist - S(=O)-;
vi) $R^1$ und $R^5$ sind Allyl und $R^2$, $R^3$, $R^4$, $R^6$, $R^7$ und $R^8$ sind Wasserstoff und $Z^1$ ist -S-;
vii) $R^1$ und $R^5$ sind Allyl und $R^2$, $R^3$, $R^4$, $R^6$, $R^7$ und $R^8$ sind Wasserstoff und $Z^1$ ist - $C(CF_3)_2$-,
viii)$R^1$ und $R^5$ sind Allyl und $R^2$, $R^3$, $R^4$, $R^6$, $R^7$ und $R^8$ sind Wasserstoff und $Z^1$ ist - $C(=CCl_2)$-;
ix) $R^1$ und $R^5$ sind Allyl und $R^2$, $R^3$, $R^4$, $R^6$, $R^7$ und $R^8$ sind Wasserstoff und $Z^1$ ist unabhängig ausgewählt aus der Gruppe bestehend aus

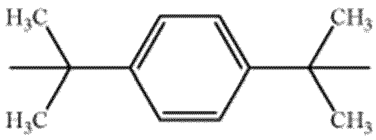
,
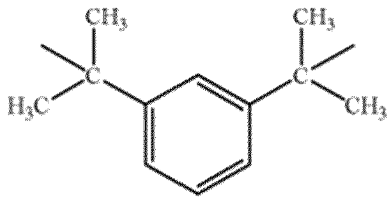
;

x) $R^1$ und $R^5$ sind Allyl und $R^2$, $R^3$, $R^4$, $R^6$, $R^7$ und $R^8$ sind Wasserstoff und $Z^1$ ist

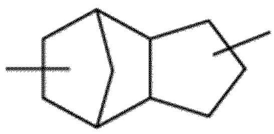
;

oder
xi) $R^1$ und $R^5$ sind Allyl und $R^2$, $R^3$, $R^4$, $R^6$, $R^7$ und $R^8$ sind Wasserstoff und $Z^1$ ist - $CH(CH_3)$-;

sowie Oligomeren, Präpolymeren, Polymeren oder Mischungen davon, oder
wobei (a) ein Gemisch aus (i) und (ii) ist, wobei

(ii) ein polyfunktioneller Cyanatester der Formel (II) ist

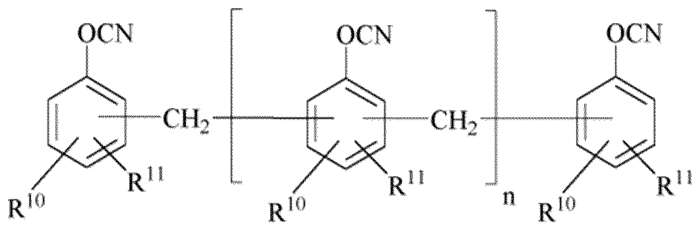
(II)

wobei der polyfunktionelle Cyanatester unabhängig ausgewählt ist aus der Gruppe bestehend aus Verbindung III, Verbindung IV, Verbindung V, Verbindung VI, sowie Oligomeren, Präpolymeren, Polymeren oder Mischungen davon

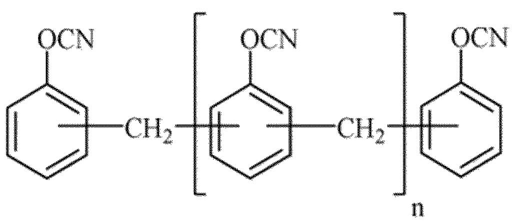
III

n ist 2 bis 3

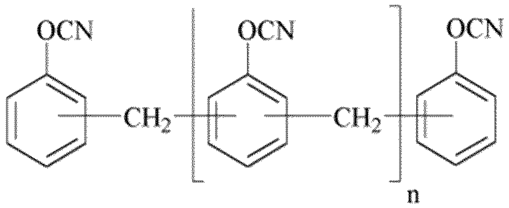

IV

n ist 3 bis 4

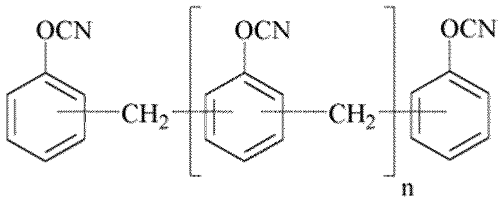

V

n ist 3 bis 6

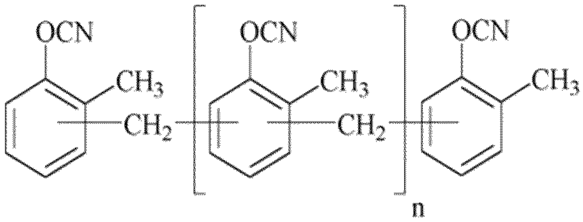

VI

n ist im Mittel 3 bis 6; oder
ein polyfunktioneller Cyanatester der Formel (IX-1)

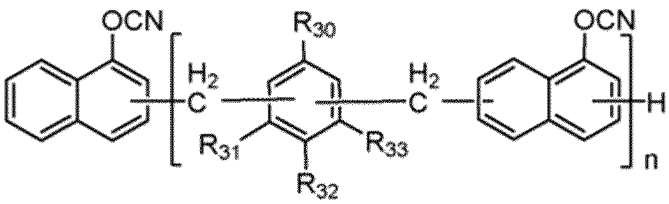

(IX-1)

wobei

n eine ganze Zahl von 1 bis 20 ist; und $R^{30}$, $R^{31}$, $R^{32}$ und $R^{33}$ gleich oder verschieden sind und unabhängig voneinander ausgewählt sind aus der Gruppe bestehend aus Wasserstoff, linearem $C_{1-10}$-Alkyl, verzweigtem $C_{3-10}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-2)

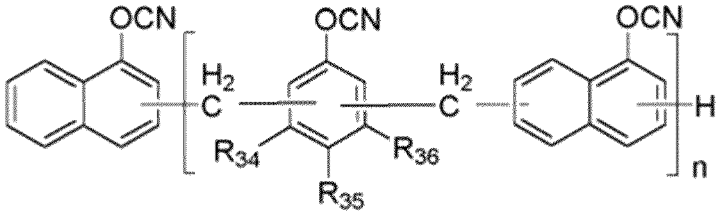

(IX-2)

wobei
n eine ganze Zahl von 1 bis 20 ist; und $R^{34}$, $R^{35}$ und $R^{36}$ gleich oder verschieden sind und unabhängig voneinander ausgewählt sind aus der Gruppe bestehend aus Wasserstoff, linearem $C_{1-10}$-Alkyl, verzweig-

tem $C_{3-10}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-3)

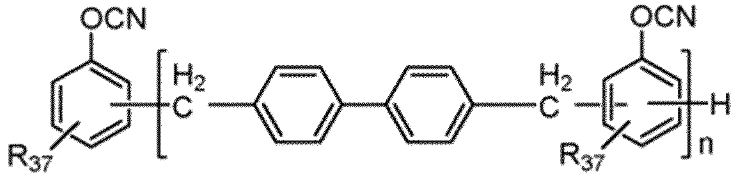

(IX-3)

wobei
n eine ganze Zahl von 1 bis 20 ist; und $R^{37}$ ausgewählt ist aus der Gruppe bestehend aus Wasserstoff, linearem $C_{1-10}$-Alkyl, verzweigtem $C_{3-10}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-4)

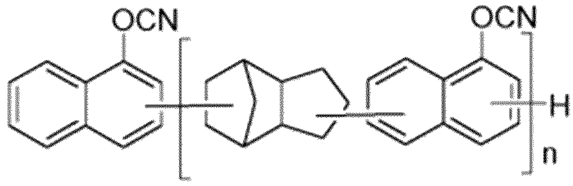

(IX-4)

wobei
n eine ganze Zahl von 1 bis 20 ist; sowie Oligomere, Präpolymere, Polymere oder Mischungen davon;
oder jede Kombination von polyfunktionellen Cyanatestern der Formeln (II), (IX-1), (IX-2), (IX-3) und (IX-4).

**5.** Zusammensetzung gemäß Anspruch 1, 2, 3 oder 4, wobei das Verhältnis von Komponente (a) zu (b) im Bereich von 20-70 Gew.-% Komponente (a) zu 80-30 Gew.-% Komponente (b) liegt, bezogen auf die Gesamtmenge der Harzzusammensetzung.

**6.** Zusammensetzung gemäß Anspruch 1, 2, 3, 4 oder 5, wobei die Zusammensetzung weiterhin einen Katalysator umfasst, ausgewählt aus der Gruppe bestehend aus aliphatischen Mono-, Di- und Polyaminen, aromatischen Mono-, Di- und Polyaminen, carbocyclischen Mono-, Di- und Polyaminen, heterocyclischen Mono-, Di- und Polyaminen, Verbindungen mit einem fünf- oder sechsgliedrigen stickstoffhaltigen Heterozyklus, Hydroxyaminen, Phosphinen, Phenolen, Bisphenolen und Mischungen davon.

**7.** Zusammensetzung gemäß Anspruch 6, wobei der Katalysator eine Verbindung der Formel (VII) ist

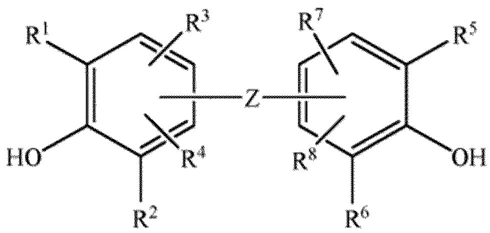

(VII)

$R^1$ bis $R^8$ unabhängig voneinander ausgewählt sind aus der Gruppe bestehend aus Wasserstoff, linearem $C_{1-10}$-Alkyl, linearem $C_{2-10}$-Alkenyl, halogeniertem linearem $C_{1-10}$-Alkyl, verzweigtem $C_{4-10}$-Alkyl, verzweigtem $C_3$-$C_{10}$-Alkenyl, halogeniertem verzweigtem $C_{4-10}$-Alkyl, $C_{3-8}$-Cycloalkyl, halogeniertem $C_{3-8}$-Cycloalkyl, $C_{1-10}$-Alkoxy, Halogen, Phenyl und Phenoxy,
wobei mindestens einer von $R^1$ bis $R^8$ ausgewählt ist aus der Gruppe bestehend aus linearem $C_{2-10}$-Alkenyl und verzweigtem $C_3$-$C_{10}$-Alkenyl;
Z bezeichnet eine direkte Bindung oder eine zweiwertige Gruppe, ausgewählt aus der Gruppe bestehend aus -O-, -S-, -S(=O)-, $-S(=O)_2-$, $-CH_2-$, $-CH(CH_3)-$, - $C(CH_3)_2-$, $-CH(CF_3)-$, $-C(CF_3)_2-$, -C(=O)-, $-C(=CH_2)-$, $-C(=CCl_2)-$,

$-Si(CH_3)_2-$, linearem $C_{1-10}$-Alkandiyl, verzweigtem $C_{4-10}$-Alkandiyl, $C_{3-8}$-Cycloalkandiyl, 1,2-Phenylen, 1,3-Phenylen, 1,4-Phenylen, $-N(R^{13})-$, wobei $R^{13}$ ausgewählt ist aus der Gruppe bestehend aus Wasserstoff, linearem $C_{1-10}$-Alkyl, halogeniertem linearem $C_{1-10}$-Alkyl, verzweigtem $C_{4-10}$-Alkyl, halogeniertem verzweigtem $C_{4-10}$-Alkyl, $C_{3-8}$-Cycloalkyl, Phenyl und Phenoxy, sowie Resten der Formeln

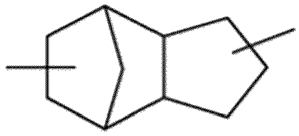

und

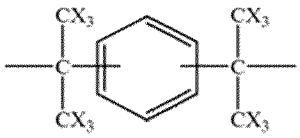

wobei X unabhängig ausgewählt ist aus Wasserstoff und Halogen; sowie Oligomeren, Präpolymeren, Polymeren oder Mischungen davon.

**8.** Zusammensetzung gemäß Anspruch 6 oder 7, wobei der Katalysator in einer Menge vorliegt von 0,01 bis 20 Gew.-%, basierend auf der Gesamtmenge der der Harzzusammensetzung.

**9.** Zusammensetzung gemäß Anspruch 1, 2, 3, 4, 5, 6, 7 oder 8, wobei die Zusammensetzung weiterhin Verstärkungsfasern umfasst, ausgewählt aus der Gruppe bestehend aus Kohlenstofffasern, Glasfasern (wie E-Glasfasern, S-Glasfasern), Aramidfasern (einschließlich KEVLAR®), Basaltfasern (Geotextilfasern), Naturfasern (wie Flachs, Hanf, Jute oder Sisal), Vliesen und Geweben (mehrlagig oder einlagig) sowie Mischungen davon.

**10.** Zusammensetzung gemäß Anspruch 1, 2, 3, 4, 5, 6, 7, 8 oder 9, wobei die Zusammensetzung weiterhin einen Füllstoff umfasst, ausgewählt aus der Gruppe bestehend aus organischen Füllstoffen wie Thermoplasten und Elastomeren, anorganischen Füllstoffen, wobei der anorganische Füllstoff ausgewählt ist aus Glasmikrosphären, Graphit, Graphen/Nanographen, Kohlenstoffnanoröhren (SWCNT und/oder MWCNT) oder Kieselsäure, und mineralischen Pulverfüllstoffen, wie $CaCO_3$, beschichtetem $CaCO_3$, Kaolinton, $SiO_2$, Talkum, Graphit, Korund ($\alpha$-$Al_2O_3$), Wollastonit, SiC, Glasmikrosphären, Glimmer, Calciumsilikat ($CaO_4Si$), MgO, wasserfreiem Calciumsulfat ($CaSO_4$ oder Anhydrit), keramischen Hohlmikrosphären, gesinterter Mullit ($Al_2O_3$-$SiO_3$), Bornitrid (BN), Vermiculit oder Basalt, sowie Mischungen davon.

**11.** Zusammensetzung gemäß Anspruch 1, 2, 3, 4, 5, 6, 7, 9 oder 10, wobei Komponente (a) ein oder mehrere Cyanatester ist, die unabhängig voneinander ausgewählt sind aus

(i) einer difunktionellen Cyanatesterverbindung der Formel (I)

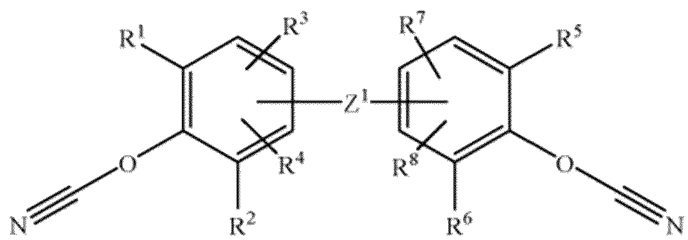

(I)

wobei $R^1$ bis $R^8$ unabhängig voneinander ausgewählt sind aus der Gruppe bestehend aus Wasserstoff, linearem $C_{2-16}$-Alkenyl und verzweigtem $C_3$-$C_{10}$-,
wobei mindestens einer von $R^1$ bis $R^8$ ausgewählt ist aus der Gruppe bestehend aus linearem $C_{2-10}$-Alkenyl und verzweigtem $C_3$-$C_{10}$-Alkenyl,
bevorzugt wobei $R^1$ und $R^5$ unabhängig voneinander lineares $C_{2-10}$-Alkenyl oder verzweigtes $C_3$-$C_{10}$-Alkenyl sind und $R^2$, $R^3$, $R^4$, $R^6$, $R^7$ und $R^8$ Wasserstoff sind, besonders bevorzugt wobei $R^1$ und $R^5$ eine Allylgruppe sind und $R^2$, $R^3$, $R^4$, $R^6$, $R^7$ und $R^8$ Wasserstoff sind; und
$Z^1$ $-C(CH_3)_2-$ ist;
sowie Oligomeren, Präpolymeren, Polymeren oder Mischungen davon; oder
wobei (a) ein Gemisch aus (i) und (ii) ist, wobei

(iii) ein polyfunktioneller Cyanatester der Formel (II) ist

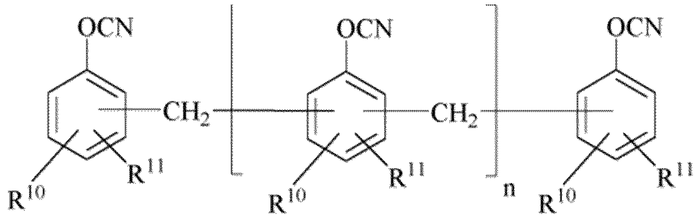

(II)

wobei der polyfunktionelle Cyanatester unabhängig ausgewählt ist aus der Gruppe bestehend aus Verbindung III, Verbindung IV, Verbindung V, Verbindung VI, sowie Oligomeren, Präpolymeren, Polymeren oder Mischungen davon

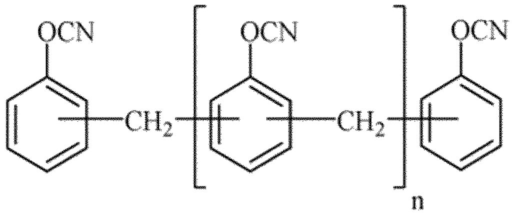

**III**

n ist 2 bis 3

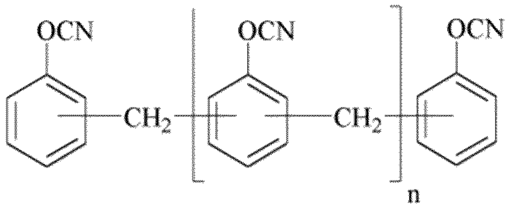

**IV**

n ist 3 bis 4

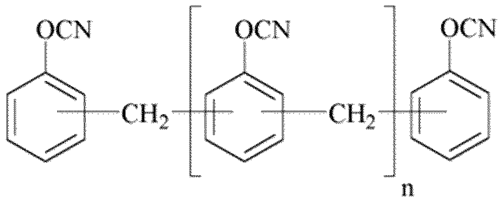

**V**

n ist 3 bis 6

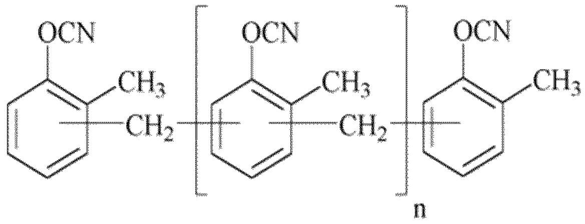

**VI**

n ist im Mittel 3 bis 6; oder
ein polyfunktioneller Cyanatester der Formel (IX-1)

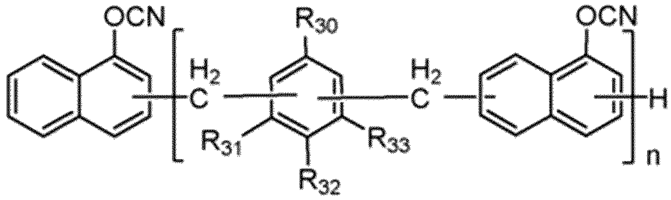

(IX-1)

wobei

n eine ganze Zahl von 1 bis 20 ist; und $R^{30}$, $R^{31}$, $R^{32}$ und $R^{33}$ gleich oder verschieden sind und unabhängig voneinander ausgewählt sind aus der Gruppe bestehend aus Wasserstoff, linearem $C_{1-10}$-Alkyl, verzweigtem $C_{3-10}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-2)

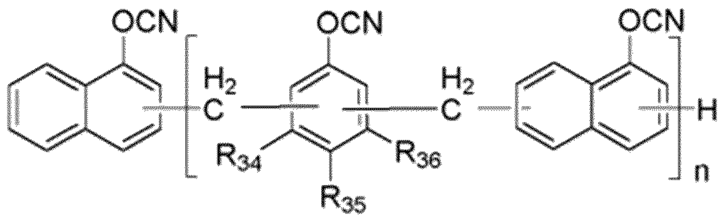

(IX-2)

wobei
n eine ganze Zahl von 1 bis 20 ist; und $R^{34}$, $R^{35}$ und $R^{36}$ gleich oder verschieden sind und unabhängig voneinander ausgewählt sind aus der Gruppe bestehend aus Wasserstoff, linearem $C_{1-10}$-Alkyl, verzweigtem $C_{3-10}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-3)

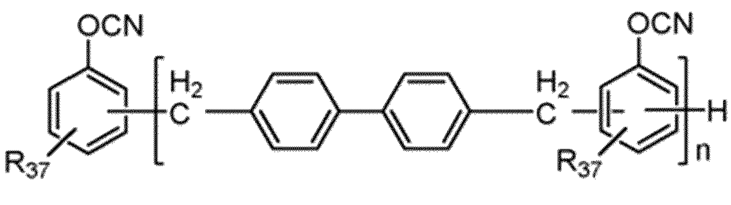

(IX-3)

wobei
n eine ganze Zahl von 1 bis 20 ist; und $R^{37}$ ausgewählt ist aus der Gruppe bestehend aus Wasserstoff, linearem $C_{1-10}$-Alkyl, verzweigtem $C_{3-10}$-Alkyl, linearem $C_{2-10}$-Alkenyl und verzweigtem $C_3$-$C_{10}$-Alkenyl; sowie Oligomeren, Präpolymeren, Polymeren oder Mischungen davon; oder
ein polyfunktioneller Cyanatester der Formel (IX-4).

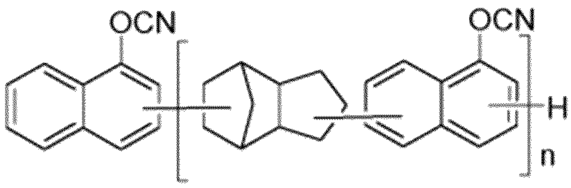

(IX-4)

wobei
n eine ganze Zahl von 1 bis 20 ist; sowie Oligomere, Präpolymere, Polymere oder Mischungen davon;
oder jede Kombination von polyfunktionellen Cyanatestern der Formeln (II), (IX-1), (IX-2), (IX-3) und (IX-4); und
wobei Komponente (b) eine Biscitraconimid-Verbindung der Formel (X1) ist

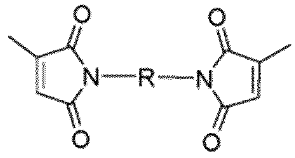

(X1)

wobei R m-Xylylen ist;
sowie Oligomere, Präpolymere, Polymere oder Mischungen davon

**12.** Verfahren zur Herstellung eine Zusammensetzung gemäß einem der Ansprüche 1-11, umfassend die Schritte:

i) Bereitstellen eines Gemisches von Komponenten gemäß einem der Ansprüche 1 bis 11; und
ii) inniges Vermischen der Komponenten.

**13.** Verfahren zur Herstellung eines duroplastischen Verbundwerkstoffes, umfassend die Schritte

i) Bereitstellen eines Gemisches von Komponenten gemäß einem der Ansprüche 1 bis 11;
ii) inniges Vermischen der Komponenten;
iii) Bereitstellen von Fasern, Füllstoffen, Pigmenten und/oder Additiven;
iv) Inkontaktbringen des in Schritt ii) erhaltenen Gemisches mit den Fasern, Füllstoffen, Pigmenten und/oder Additiven;
v) gegebenenfalls Gießen des Gemisches in die gewünschte Form; und
vi) Einleiten der Polymerisation des Gemisches.

**14.** Verwendung einer Zusammensetzung gemäß einem der Ansprüche 1-11 zur Herstellung eines duroplastischen Verbundwerkstoffes.

**15.** Duroplastischer Verbundwerkstoff erhalten nach dem Verfahren nach Anspruch 13, wobei der duroplastische Verbundwerkstoff nach 1000 h bei 250 °C einen Masseverlust von weniger als 2,5 Gew.-% aufweist, bevorzugt von weniger als 2,0 Gew.-%, besonders bevorzugt von weniger als 1,75 Gew.-%.

## Revendications

**1.** Composition comprenant les constituants (a) et (b) dans laquelle le constituant (a) est un ou plusieurs esters de cyanate indépendamment choisis parmi

(i) un composé ester de cyanate bifonctionnel de formule (I)

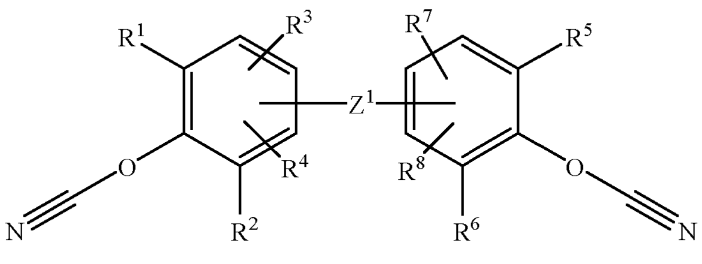

(I)

dans laquelle

$R^1$ à $R^8$ sont indépendamment choisis dans le groupe constitué par un hydrogène, un alkyle en $C_{1-10}$ linéaire, un alkyle en $C_{1-10}$ linéaire halogéné, un alkyle en $C_{4-10}$ ramifié, un alkyle en $C_{4-10}$ ramifié halogéné, un cycloalkyle en $C_{3-8}$, un cycloalkyle en $C_{3-8}$ halogéné, un alcényle en $C_2$-$C_{10}$ linéaire, un alcényle en $C_3$-$C_{10}$ ramifié, un alkoxy en $C_{1-10}$, un halogène, un phényle et un phénoxy, dans laquelle au moins un parmi $R^1$ à $R^8$ est choisi dans le groupe constitué par un alcényle en $C_2$-$C_{10}$ linéaire et un alcényle en $C_3$-$C_{10}$ ramifié ;

$Z^1$ indique une liaison directe ou une fraction divalente choisie dans le groupe constitué par - O-, -S-, -S(=O)-, $-S(=O)_2-$, $-CH_2-$, $-CH(CH_3)-$, $-C(CH_3)_2-$, $-CH(CF_3)-$, $-C(CF_3)_2-$, - C(=O)-, $-C(=CH_2)-$, $-C(=CCl_2)-$, $-Si(CH_3)_2-$, un alcanediyle en $C_{1-10}$ linéaire, un alcanediyle en $C_{4-10}$ ramifié, un cycloalcanediyle en $C_{3-8}$, un 1,2-phénylène, un 1,3-phénylène, un 1,4-phénylène, $-N(R^{13})-$ dans laquelle $R^{13}$ est choisi dans le groupe constitué par un hydrogène, un alkyle en $C_{1-10}$ linéaire, un alkyle en $C_{1-10}$ linéaire halogéné, un alkyle en $C_{4-10}$ ramifié, un alkyle en $C_{4-10}$ ramifié halogéné, un cycloalkyle en $C_{3-8}$, un phényle et un phénoxy, et des fractions de formule

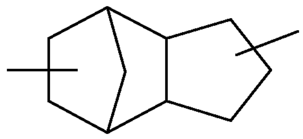

et

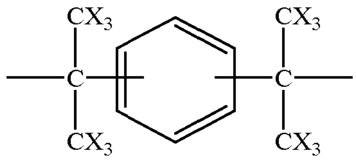

dans laquelle X est indépendamment choisi parmi un hydrogène et un halogène ; et des oligomères, des prépolymères, des polymères ou des mélanges de ceux-ci ; ou
dans laquelle (a) est un mélange de (i) et (ii), dans laquelle

(ii) est un ester de cyanate polyfonctionnel de formule (II)

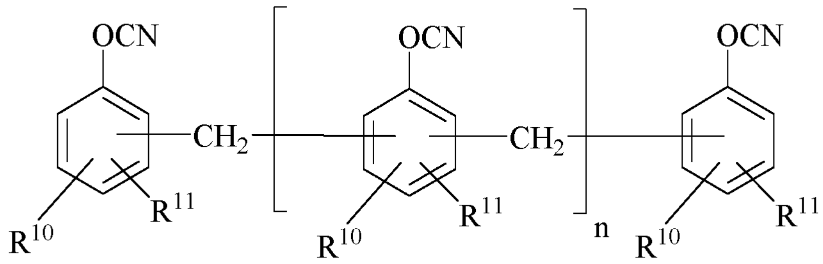

(II)

dans laquelle

n représente un entier de 1 à 20 ; et $R^{10}$ et $R^{11}$ sont identiques ou différents et choisis indépendamment les uns des autres dans le groupe constitué par un hydrogène, un alkyle en $C_{1-10}$ linéaire, un alkyle en $C_{4-10}$ ramifié, un alcényle en $C_2$-$C_{10}$ linéaire, et un alcényle en $C_3$-$C_{10}$ ramifié ; et des oligomères, des prépolymères, des polymères ou des mélanges de ceux-ci ; ou
un ester de cyanate polyfonctionnel de formule (IX-1)

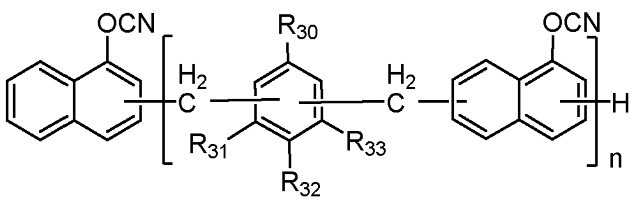

(IX-1)

dans laquelle
n représente un entier de 1 à 20 ; et $R^{30}$, $R^{31}$, $R^{32}$ et $R^{33}$ sont identiques ou différents et choisis indépendamment les uns des autres dans le groupe constitué par un hydrogène, un alkyle en $C_{1-10}$ linéaire, un alkyle en $C_{3-10}$ ramifié, un alcényle en $C_2$-$C_{10}$ linéaire, et un alcényle en $C_3$-$C_{10}$ ramifié ; et des oligomères, des prépolymères, des polymères ou des mélanges de ceux-ci ; ou
un ester de cyanate polyfonctionnel de formule (IX-2)

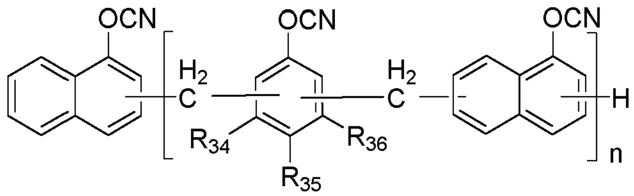

(IX-2)

dans laquelle
n représente un entier de 1 à 20 ; et $R^{34}$, $R^{35}$ et $R^{36}$ sont identiques ou différents et choisis indépendamment les uns des autres dans le groupe constitué par un hydrogène, un alkyle en $C_{1-10}$ linéaire, un alkyle en $C_{3-10}$ ramifié, un alcényle en $C_2$-$C_{10}$ linéaire, et un alcényle en $C_3$-$C_{10}$ ramifié ; et des oligomères, des prépolymères, des polymères ou des mélanges de ceux-ci ; ou
un ester de cyanate polyfonctionnel de formule (IX-3)

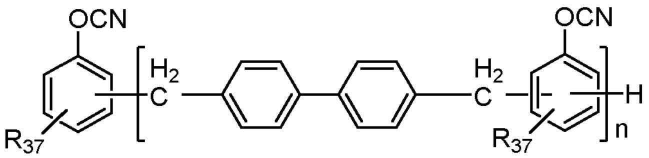

(IX-3)

dans laquelle
n représente un entier de 1 à 20 ; et $R^{37}$ est choisi dans le groupe constitué par un hydrogène, un alkyle en $C_{1-10}$ linéaire, un alkyle en $C_{3-10}$ ramifié, un alcényle en $C_2$-$C_{10}$ linéaire, et un alcényle en $C_3$-$C_{10}$ ramifié; et des oligomères, des prépolymères, des polymères ou des mélanges de ceux-ci ; ou
un ester de cyanate polyfonctionnel de formule (IX-4)

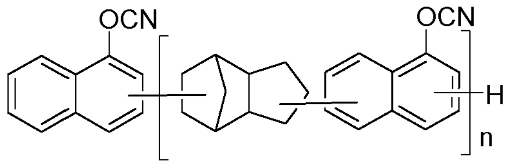

(IX-4)

dans laquelle
n représente un entier de 1 à 20 ; et des oligomères, des prépolymères, des polymères ou des mélanges de ceux-ci ;
ou n'importe quelle combinaison d'esters de cyanate polyfonctionnels de formule (II), (IX-1), (IX-2), (IX-3) et (IX-4) ;
et
dans laquelle
le constituant (b) est un ou plusieurs composés bisimide substitués choisis dans le groupe constitué par un composé biscitraconimide de formule (X1), un composé bisitaconimide de formule (X2), et un composé citraconimido-itaconimide de formule (X3)

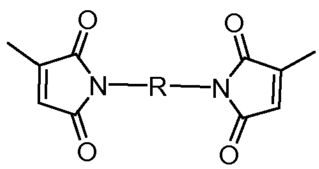

(X1)

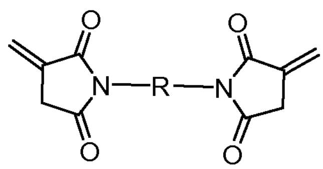

(X2)

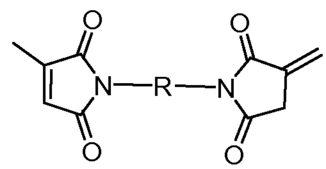

(X3)

dans laquelle R représente le m-xylylène ;
et des oligomères, des prépolymères, des polymères ou des mélanges de ceux-ci ;
dans laquelle le rapport des constituants (a) à (b) est dans la plage de 10 à 70 % en masse de constituant (a) à 90 à 30 % de masse de constituant (b) en se basant sur la quantité totale de la composition de résine.

**2.** Composition selon la revendication 1 dans laquelle le constituant (a) est un ou plusieurs esters de cyanate

indépendamment choisis parmi

(i) un composé ester de cyanate bifonctionnel de formule (I)

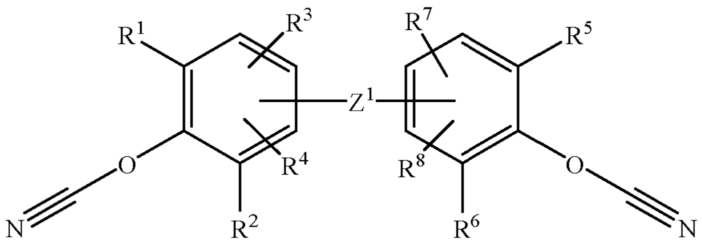

(I)

dans laquelle

$R^1$ à $R^8$ sont indépendamment choisis dans le groupe constitué par un hydrogène, un alkyle en $C_{1-10}$ linéaire, un cycloalkyle en $C_{3-8}$, un alcényle en $C_2$-$C_{10}$ linéaire, et un alcényle en $C_3$-$C_{10}$ ramifié,
dans lequel au moins un parmi $R^1$ à $R^8$ est choisi dans le groupe constitué par un alcényle en $C_2$-$C_{10}$ linéaire et un alcényle en $C_3$-$C_{10}$ ramifié ;
$Z^1$ indique une liaison directe ou une fraction divalente choisie dans le groupe constitué par - O-, -S-, -S(=O)-, $-S(=O)_2-$, $-CH_2-$, $-CH(CH_3)-$, $-C(CH_3)_2-$, $-CH(CF_3)-$, $-C(CF_3)_2-$, - C(=O)-, $-C(=CH_2)-$, $-C(=CCl_2)-$, $-Si(CH_3)_2-$, un alcanediyle en $C_{1-10}$ linéaire, un alcanediyle en $C_{4-10}$ ramifié, un cycloalcanediyle en $C_{3-8}$, un 1,2-phénylène, un 1,3-phénylène, un 1,4-phénylène, $-N(R^{13})-$ dans laquelle $R^{13}$ est choisi dans le groupe constitué par un hydrogène, un alkyle en $C_{1-10}$ linéaire, un cycloalkyle en $C_{3-8}$, un phényle et un phénoxy, et des fractions de formule

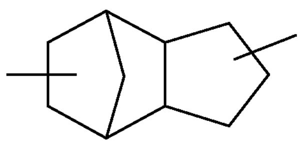

et

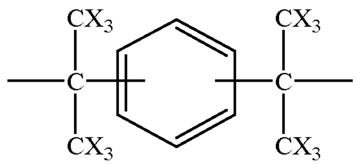

dans laquelle X est indépendamment choisi parmi un hydrogène et un halogène ; et des oligomères, des prépolymères, des polymères ou des mélanges de ceux-ci ; ou
dans laquelle (a) est un mélange de (i) et (ii), dans laquelle

(ii) est un ester de cyanate polyfonctionnel de formule (II)

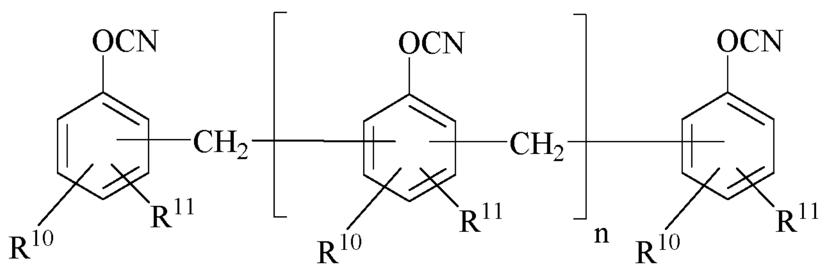

(II)

dans laquelle

n représente un entier de 1 à 20 ; et $R^{10}$ et $R^{11}$ sont identiques ou différents et choisis indépendamment les uns des autres dans le groupe constitué par un hydrogène, un alkyle en $C_{1-10}$ linéaire, un alkyle en $C_{4-10}$ ramifié, un alcényle en $C_2$-$C_{10}$ linéaire, et un alcényle en $C_3$-$C_{10}$ ramifié ; et des oligomères, des prépolymères, des polymères ou des mélanges de ceux-ci ; ou
un ester de cyanate polyfonctionnel de formule (IX-1)

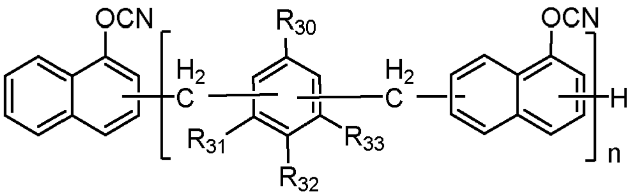

(IX-1)

dans laquelle

n représente un entier de 1 à 20 ; et $R^{30}$, $R^{31}$, $R^{32}$ et $R^{33}$ sont identiques ou différents et choisis indépendamment les uns des autres dans le groupe constitué par un hydrogène, un alkyle en $C_{1-10}$ linéaire, un alkyle en $C_{3-10}$ ramifié, un alcényle en $C_2$-$C_{10}$ linéaire, et un alcényle en $C_3$-$C_{10}$ ramifié ; et des oligomères, des prépolymères, des polymères ou des mélanges de ceux-ci ; ou

un ester de cyanate polyfonctionnel de formule (IX-2)

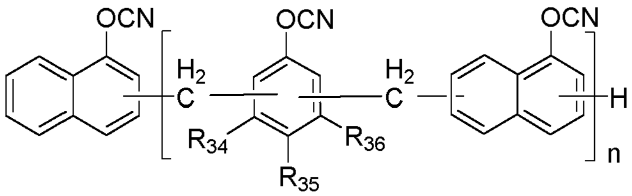

(IX-2)

dans laquelle

n représente un entier de 1 à 20 ; et $R^{34}$, $R^{35}$ et $R^{36}$ sont identiques ou différents et choisis indépendamment les uns des autres dans le groupe constitué par un hydrogène, un alkyle en $C_{1-10}$ linéaire, un alkyle en $C_{3-10}$ ramifié, un alcényle en $C_2$-$C_{10}$ linéaire, et un alcényle en $C_3$-$C_{10}$ ramifié ; et des oligomères, des prépolymères, des polymères ou des mélanges de ceux-ci ; ou

un ester de cyanate polyfonctionnel de formule (IX-3)

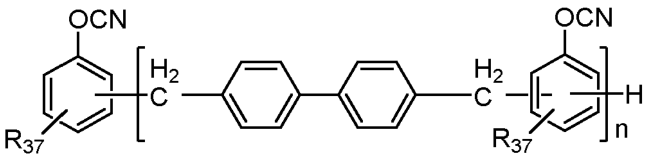

(IX-3)

dans laquelle

n représente un entier de 1 à 20 ; et $R^{37}$ est choisi dans le groupe constitué par un hydrogène, un alkyle en $C_{1-10}$ linéaire, un alkyle en $C_{3-10}$ ramifié, un alcényle en $C_2$-$C_{10}$ linéaire, et un alcényle en $C_3$-$C_{10}$ ramifié; et des oligomères, des prépolymères, des polymères ou des mélanges de ceux-ci ; ou

un ester de cyanate polyfonctionnel de formule (IX-4)

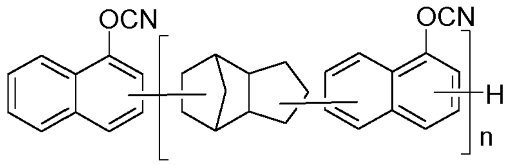

(IX-4)

dans laquelle

n représente un entier de 1 à 20 ; et des oligomères, des prépolymères, des polymères ou des mélanges de ceux-ci ;

ou n'importe quelle combinaison d'esters de cyanate polyfonctionnels de formule (II), (IX-1), (IX-2), (IX-3) et (IX-4).

**3.** Composition selon la revendication 1 ou 2 dans laquelle le constituant (a) est un ou plusieurs esters de cyanate indépendamment choisis parmi

(i) un composé ester de cyanate bifonctionnel de formule (I)

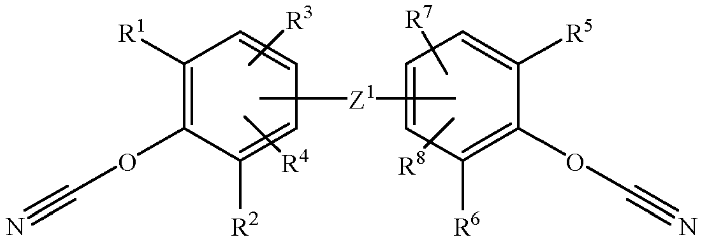

(I)

dans laquelle

$R^1$ à $R^8$ sont indépendamment choisis dans le groupe constitué par un hydrogène, un alkyle en $C_{1-3}$ linéaire, un alcényle en $C_2$-$C_{10}$ linéaire, et un alcényle en $C_3$-$C_{10}$ ramifié,
dans lequel au moins un parmi $R^1$ à $R^8$ est choisi dans le groupe constitué par un alcényle en $C_2$-$C_{10}$ linéaire et un alcényle en $C_3$-$C_{10}$ ramifié ;
$Z^1$ indique une liaison directe ou une fraction divalente choisie dans le groupe constitué par - O-, -S-, $-S(=O)_2-$, $-CH_2-$, $-CH(CH_3)-$, $-C(CH_3)_2-$, $-C(CF_3)_2-$, $-C(=CCl_2)-$, un alcanediyle en $C_{4-6}$ ramifié, un cycloalcanediyle en $C_{3-8}$, un 1,2-phénylène, un 1,3-phénylène, un 1,4-phénylène ; et des oligomères, des prépolymères, des polymères ou des mélanges de ceux-ci ; ou
dans laquelle (a) est un mélange de (i) et (ii) dans laquelle

(ii) est un ester de cyanate polyfonctionnel de formule (II)

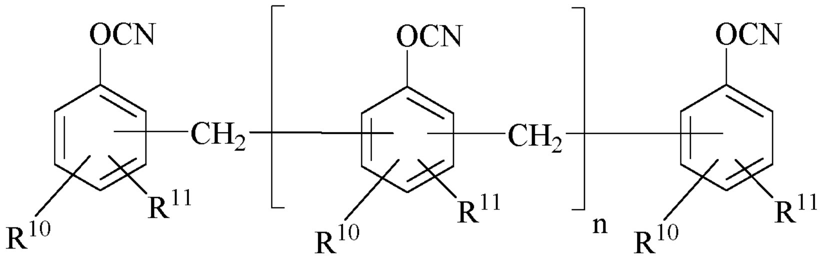

(II)

,

dans laquelle

n représente un entier de 1 à 10 ; et $R^{10}$ et $R^{11}$ sont identiques ou différents et choisis indépendamment les uns des autres dans le groupe constitué par un hydrogène, un alkyle en $C_{1-5}$ linéaire, un alkyle en $C_{4-6}$ ramifié, un alcényle en $C_2$-$C_{10}$ linéaire, et un alcényle en $C_3$-$C_{10}$ ramifié ; et des oligomères, des prépolymères, des polymères ou des mélanges de ceux-ci ; ou
un ester de cyanate polyfonctionnel de formule (IX-1)

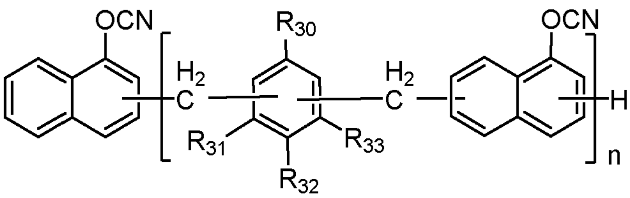

(IX-1)

dans laquelle
n représente un entier de 1 à 20 ; et $R^{30}$, $R^{31}$, $R^{32}$ et $R^{33}$ sont identiques ou différents et choisis indépendamment les uns des autres dans le groupe constitué par un hydrogène, un alkyle en $C_{1-10}$ linéaire, un alkyle en $C_{3-10}$ ramifié, un alcényle en $C_2$-$C_{10}$ linéaire, et un alcényle en $C_3$-$C_{10}$ ramifié ; et des oligomères, des prépolymères, des polymères ou des mélanges de ceux-ci ; ou
un ester de cyanate polyfonctionnel de formule (IX-2)

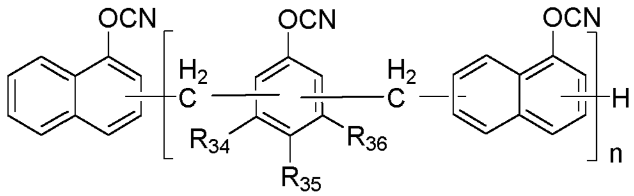

(IX-2)

dans laquelle

n représente un entier de 1 à 20 ; et $R^{34}$, $R^{35}$ et $R^{36}$ sont identiques ou différents et choisis indépendamment les uns des autres dans le groupe constitué par un hydrogène, un alkyle en $C_{1-10}$ linéaire, un alkyle en $C_{3-10}$ ramifié, un alcényle en $C_2$-$C_{10}$ linéaire, et un alcényle en $C_3$-$C_{10}$ ramifié ; et des oligomères, des prépolymères, des polymères ou des mélanges de ceux-ci ; ou

un ester de cyanate polyfonctionnel de formule (IX-3)

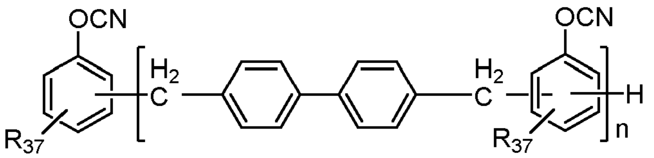

(IX-3)

dans laquelle

n représente un entier de 1 à 20 ; et $R^{37}$ est choisi dans le groupe constitué par un hydrogène, un alkyle en $C_{1-10}$ linéaire, un alkyle en $C_{3-10}$ ramifié, un alcényle en $C_2$-$C_{10}$ linéaire, et un alcényle en $C_3$-$C_{10}$ ramifié; et des oligomères, des prépolymères, des polymères ou des mélanges de ceux-ci ; ou

un ester de cyanate polyfonctionnel de formule (IX-4)

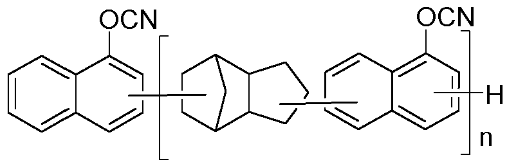

(IX-4)

dans laquelle

n représente un entier de 1 à 20 ; et des oligomères, des prépolymères, des polymères ou des mélanges de ceux-ci ;

ou n'importe quelle combinaison d'esters de cyanate polyfonctionnels de formule (II), (IX-1), (IX-2), (IX-3) et (IX-4).

**4.** Composition selon l'une quelconque des revendications 1, 2 ou 3 dans laquelle le constituant (a) est un ou plusieurs esters de cyanate indépendamment choisis parmi

(i) un composé ester de cyanate bifonctionnel de formule (I)

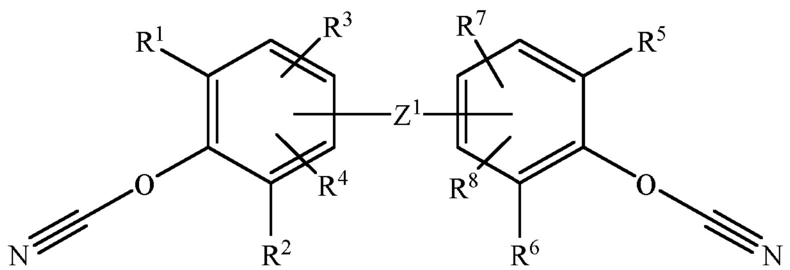

(I)

dans laquelle l'ester de cyanate bifonctionnel de formule I est indépendamment choisi dans le groupe constitué par

i) $R^1$ et $R^5$ représentent un allyle, $R^2$ et $R^6$ représentent un méthyle, $R^3$, $R^4$, $R^7$ et $R^8$ représentent un hydrogène et dans laquelle $Z^1$ représente $-CH_2-$ (méthylène) ;
ii) $R^1$ et $R^5$ représentent un allyle et $R^2$, $R^3$, $R^4$, $R^6$, $R^7$ et $R^8$ représentent un hydrogène et dans laquelle $Z^1$ représente $-CH_2-$ (méthylène) ;
iii) $R^1$ et $R^5$ représentent un allyle, et $R^2$, $R^3$, $R^4$, $R^6$, $R^7$ et $R^8$ représentent un hydrogène et dans laquelle $Z^1$ représente $-C(CH_3)_2-$ ;
iv) $R^1$ et $R^5$ représentent un allyle et $R^2$, $R^3$, $R^4$, $R^6$, $R^7$ et $R^8$ représentent un hydrogène et $Z^1$ représente -C(=O)- ;
v) $R^1$ et $R^5$ représentent un allyle et $R^2$, $R^3$, $R^4$, $R^6$, $R^7$ et $R^8$ représentent un hydrogène et $Z^1$ représente -S(=O)- ;
vi) $R^1$ et $R^5$ représentent un allyle et $R^2$, $R^3$, $R^4$, $R^6$, $R^7$ et $R^8$ représentent un hydrogène et $Z^1$ représente -S- ;
vii) $R^1$ et $R^5$ représentent un allyle, et $R^2$, $R^3$, $R^4$, $R^6$, $R^7$ et $R^8$ représentent un hydrogène et $Z^1$ représente $-C(CF_3)_2-$ ;
viii) $R^1$ et $R^5$ représentent un allyle et $R^2$, $R^3$, $R^4$, $R^6$, $R^7$ et $R^8$ représentent un hydrogène et $Z^1$ représente $-C(=CCl_2)-$ ;
ix) $R^1$ et $R^5$ représentent un allyle et $R^2$, $R^3$, $R^4$, $R^6$, $R^7$ et $R^8$ représentent un hydrogène et $Z^1$ est indépendamment choisi dans le groupe constitué par

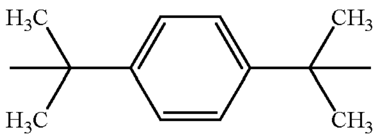
,
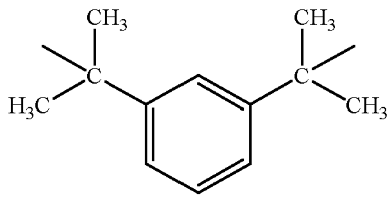
;

x) $R^1$ et $R^5$ représentent un allyle et $R^2$, $R^3$, $R^4$, $R^6$, $R^7$ et $R^8$ représentent un hydrogène et $Z^1$ représente

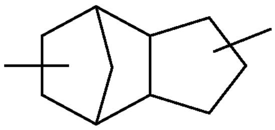
;

ou
xi) $R^1$ et $R^5$ représentent un allyle et $R^2$, $R^3$, $R^4$, $R^6$, $R^7$ et $R^8$ représentent un hydrogène et $Z^1$ représente $-CH(CH_3)-$ ;

et des oligomères, des prépolymères, des polymères ou des mélanges de ceux-ci, ou dans laquelle (a) est un mélange de (i) et (ii), dans laquelle

(ii) est un ester de cyanate polyfonctionnel de formule (II)

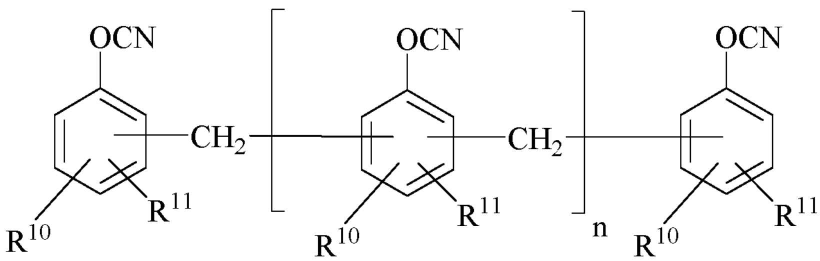
(II)
,

dans laquelle l'ester de cyanate polyfonctionnel est indépendamment choisi dans le groupe constitué par le composé III, le composé IV, le composé V, le composé VI, et des oligomères, des prépolymères, des polymères ou des mélanges de ceux-ci

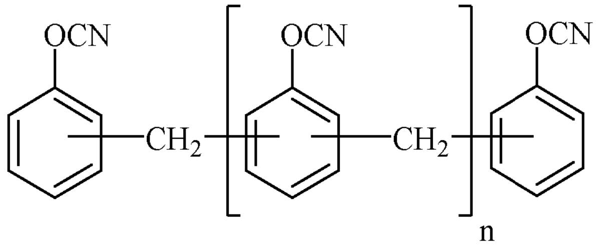

III

n représente 2 à 3

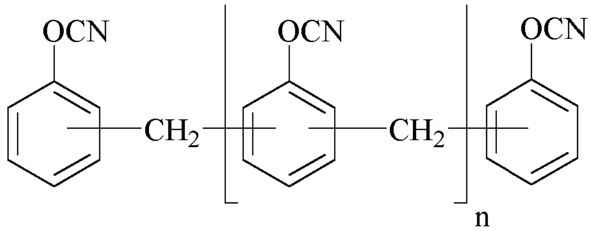

IV

n représente 3 à 4

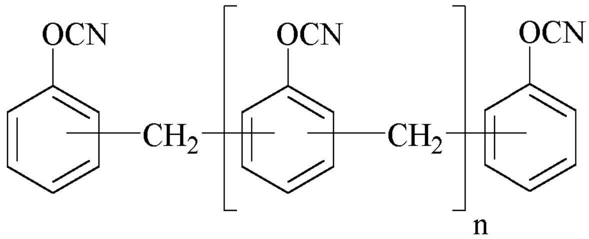

V

n représente 3 à 6

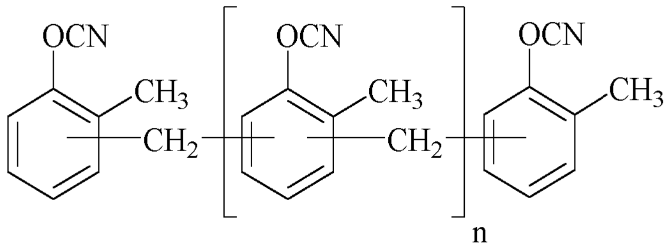

VI

n représente 3 à 6 en moyenne ; ou
un ester de cyanate polyfonctionnel de formule (IX-1)

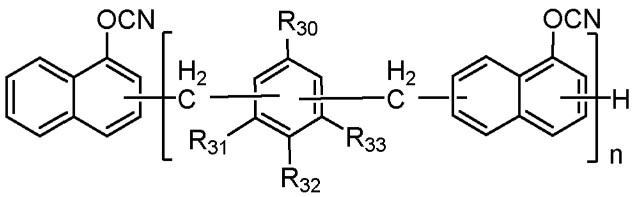

(IX-1)

dans laquelle

n représente un entier de 1 à 20 ; et $R^{30}$, $R^{31}$, $R^{32}$ et $R^{33}$ sont identiques ou différents et choisis indépendamment les uns des autres dans le groupe constitué par un hydrogène, un alkyle en $C_{1-10}$ linéaire, un alkyle en $C_{3-10}$ ramifié, un alcényle en $C_2$-$C_{10}$ linéaire, et un alcényle en $C_3$-$C_{10}$ ramifié ; et des oligomères,

des prépolymères, des polymères ou des mélanges de ceux-ci ; ou
un ester de cyanate polyfonctionnel de formule (IX-2)

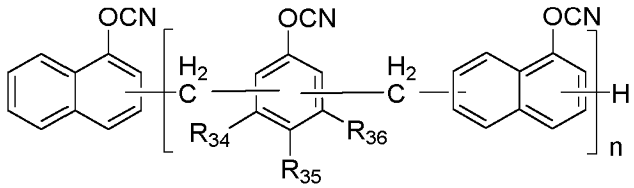

(IX-2)

dans laquelle
n représente un entier de 1 à 20 ; et $R^{34}$, $R^{35}$ et $R^{36}$ sont identiques ou différents et choisis indépendamment les uns des autres dans le groupe constitué par un hydrogène, un alkyle en $C_{1-10}$ linéaire, un alkyle en $C_{3-10}$ ramifié, un alcényle en $C_2$-$C_{10}$ linéaire, et un alcényle en $C_3$-$C_{10}$ ramifié ; et des oligomères, des prépolymères, des polymères ou des mélanges de ceux-ci ; ou
un ester de cyanate polyfonctionnel de formule (IX-3)

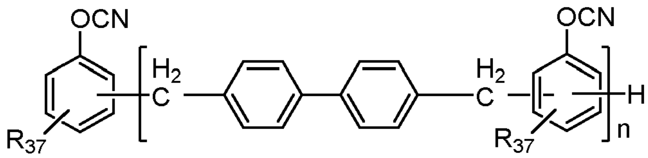

(IX-3)

dans laquelle
n représente un entier de 1 à 20 ; et $R^{37}$ est choisi dans le groupe constitué par un hydrogène, un alkyle en $C_{1-10}$ linéaire, un alkyle en $C_{3-10}$ ramifié, un alcényle en $C_2$-$C_{10}$ linéaire, et un alcényle en $C_3$-$C_{10}$ ramifié; et des oligomères, des prépolymères, des polymères ou des mélanges de ceux-ci ; ou
un ester de cyanate polyfonctionnel de formule (IX-4)

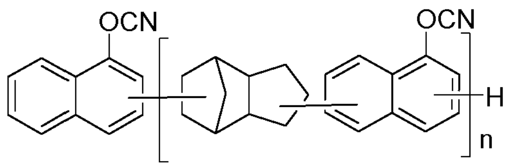

(IX-4)

dans laquelle
n représente un entier de 1 à 20 ; et des oligomères, des prépolymères, des polymères ou des mélanges de ceux-ci ;
ou n'importe quelle combinaison d'esters de cyanate polyfonctionnels de formule (II), (IX-1), (IX-2), (IX-3) et (IX-4).

**5.** Composition selon l'une quelconque des revendications 1, 2, 3 ou 4, le rapport des constituants (a) à (b) étant dans la plage de 20 à 70 % en masse de constituant (a) à 80 à 30 % de masse de constituant (b) en se basant sur la quantité totale de la composition de résine.

**6.** Composition selon l'une quelconque des revendications 1, 2, 3, 4 ou 5 dans laquelle la composition comprend en outre un catalyseur choisi dans le groupe constitué par les mono-, di- et polyamines aliphatiques, les mono-, di- et polyamines aromatiques, les mono-, di- et polyamines carbocycliques, les mono-, di- et polyamines hétérocycliques, les composés contenant un cycle hétérocyclique azoté à cinq ou six chaînons, les hydroxyamines, les phosphines, les phénols, les bisphénols, et les mélanges de ceux-ci.

**7.** Composition selon la revendication 6, dans laquelle le catalyseur est un composé de formule (VII)

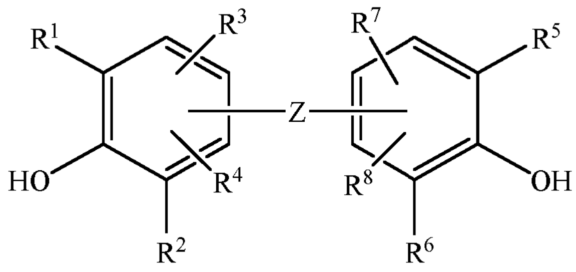

(VII)

dans laquelle

$R^1$ à $R^8$ sont indépendamment choisis dans le groupe constitué par un hydrogène, un alkyle en $C_{1-10}$ linéaire, un alcényle en $C_2$-$C_{10}$ linéaire, un alkyle en $C_{1-10}$ linéaire halogéné, un alkyle en $C_{4-10}$ ramifié, un alcényle en $C_3$-$C_{10}$ ramifié, un alkyle en $C_{4-10}$ ramifié halogéné, un cycloalkyle en $C_{3-8}$, un cycloalkyle en $C_{3-8}$ halogéné, un alkoxy en $C_{1-10}$, un halogène, un phényle et un phénoxy,
dans lequel au moins un parmi $R^1$ à $R^8$ est choisi dans le groupe constitué par un alcényle en $C_2$-$C_{10}$ linéaire et un alcényle en $C_3$-$C_{10}$ ramifié ;
Z indique une liaison directe ou une fraction divalente choisie dans le groupe constitué par - O-, -S-, -S(=O)-, $-S(=O)_2-$, $-CH_2-$, $-CH(CH_3)-$, $-C(CH_3)_2-$, $-CH(CF_3)-$, $-C(CF_3)_2-$, - C(=O)-, $-C(=CH_2)-$, $-C(=CCl_2)-$, $-Si(CH_3)_2-$, un alcanediyle en $C_{1-10}$ linéaire, un alcanediyle en $C_{4-10}$ ramifié, un cycloalcanediyle en $C_{3-8}$, un 1,2-phénylène, un 1,3-phénylène, un 1,4-phénylène, $-N(R^{13})-$ dans laquelle $R^{13}$ est choisi dans le groupe constitué par un hydrogène, un alkyle en $C_{1-10}$ linéaire, un alkyle en $C_{1-10}$ linéaire halogéné, un alkyle en $C_{4-10}$ ramifié, un alkyle en $C_{4-10}$ ramifié halogéné, un cycloalkyle en $C_{3-8}$, un phényle et un phénoxy, et des fractions de formule

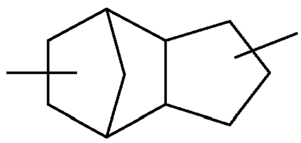

et

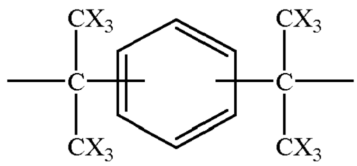

;

dans laquelle X est indépendamment choisi parmi un hydrogène et un halogène ;
et des oligomères, des prépolymères, des polymères ou des mélanges de ceux-ci.

**8.** Composition selon la revendication 6 ou 7, dans lequel le catalyseur est présent dans une proportion de 0,01 à 20 % en masse sur la base de la quantité totale de la composition de résine.

**9.** Composition selon l'une quelconque des revendications 1, 2, 3, 4, 5, 6, 7 ou 8 dans laquelle la composition comprend en outre des fibres de renfort choisies dans le groupe constitué par les fibres de carbone, les fibres de verre (telles que les fibres de verre E, les fibres de verre S), les fibres d'aramide (incluant le KEVLAR®), les fibres de basalte (fibres géotextiles), les fibres naturelles (telles que le lin, le chanvre, le jute ou le sisal), les tissus molletonnés et les tissus tissés (multicouches ou monocouche), et les mélanges de ceux-ci.

**10.** Composition selon l'une quelconque des revendications 1, 2, 3, 4, 5, 6, 7, 8 ou 9 dans laquelle la composition comprend en outre une charge choisie dans le groupe constitué par les charges organiques, telles que les thermoplastiques et les élastomères, les charges inorganiques, dans laquelle la charge inorganique est choisie parmi les microsphères de verre, le graphite, le graphène/nano-graphène, les nanotubes de carbone (SWCNT et/ou MWCNT) ou la silice, et les charges minérales en poudre, telles que $CaCO_3$, $CaCO_3$ revêtu, l'argile de kaolin, $SiO_2$, le talc, le graphite, le corindon ($\alpha$-$Al_2O_3$), la wollastonite, SiC, les microsphères de verre, le mica, le silicate de calcium ($Ca_2O_4Si$), MgO, le sulfate de calcium anhydre ($CaSO_4$ ou anhydrite), les microsphères céramiques creuses, la mullite fondue ($Al_2O_3$-$SiO_2$), le nitrure de bore (BN), la vermiculite ou le basalt, et les mélanges de ceux-ci.

**11.** Composition selon l'une quelconque des revendications 1, 2, 3, 4, 5, 6, 7, 8, 9 ou 10 dans laquelle le constituant (a) est un ou plusieurs esters de cyanate indépendamment choisis parmi

(i) un composé ester de cyanate bifonctionnel de formule (I)

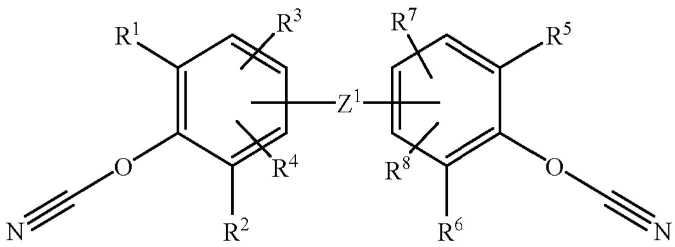

(I)

,

dans laquelle $R^1$ à $R^8$ sont indépendamment choisis dans le groupe constitué par un hydrogène, un alcényle en $C_2$-$C_{10}$ linéaire, et un alcényle en $C_3$-$C_{10}$ ramifié,
dans lequel au moins un parmi $R^1$ à $R^8$ est choisi dans le groupe constitué par un alcényle en $C_2$-$C_{10}$ linéaire et un alcényle en $C_3$-$C_{10}$ ramifié,
de préférence dans laquelle $R^1$ et $R^5$ représentent chacun indépendamment un alcényle en $C_2$-$C_{10}$ linéaire ou un alcényle en $C_3$-$C_{10}$ ramifié et $R^2$, $R^3$, $R^4$, $R^6$, $R^7$ et $R^8$ représentent un hydrogène,
encore plus préférentiellement dans laquelle $R^1$ et $R^5$ représentent un allyle et $R^2$, $R^3$, $R^4$, $R^6$, $R^7$ et $R^8$ représentent un hydrogène ; et
$Z^1$ représente $-C(CH_3)_2-$
et des oligomères, des prépolymères, des polymères ou des mélanges de ceux-ci ; ou

dans laquelle (a) est un mélange de (i) et (ii), dans laquelle
(ii) est un ester de cyanate polyfonctionnel de formule (II)

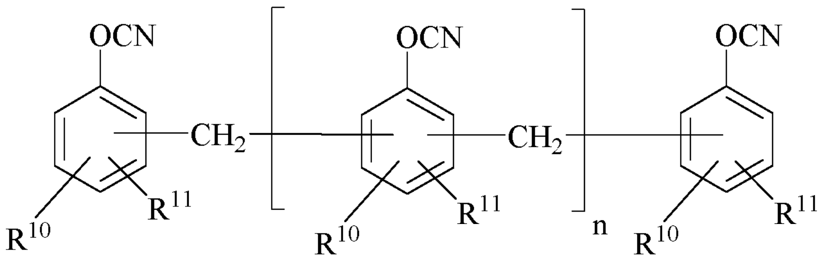

(II)

,

dans laquelle l'ester de cyanate polyfonctionnel est indépendamment choisi dans le groupe constitué par le composé III, le composé IV, le composé V, et des oligomères, des prépolymères, des polymères ou des mélanges de ceux-ci ;

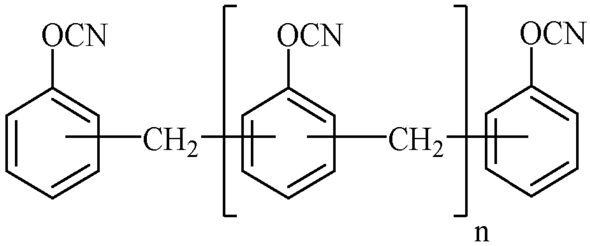

III

n représente 2 à 3

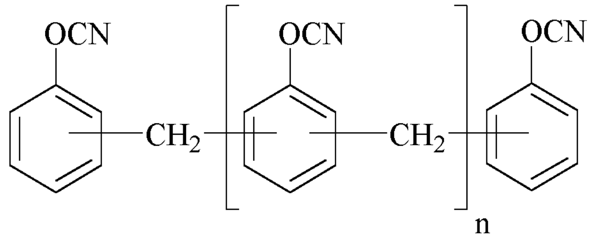

**IV**

n représente 3 à 4

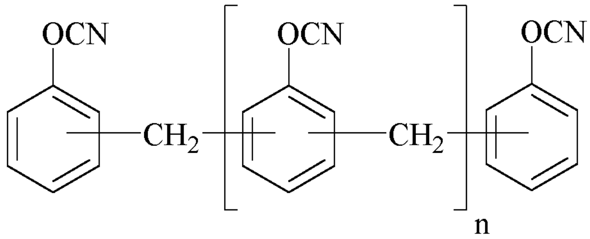

**V**

n représente 3 à 6 ; ou
un ester de cyanate polyfonctionnel de formule (IX-1)

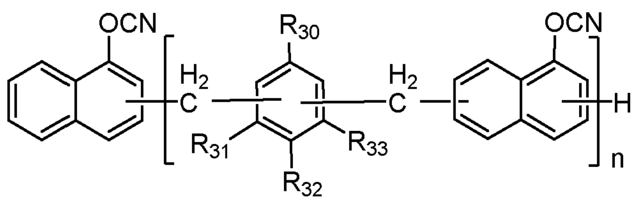

(IX-1)

dans laquelle

n représente un entier de 1 à 20 ; et $R^{30}$, $R^{31}$, $R^{32}$ et $R^{33}$ sont identiques ou différents et choisis indépendamment les uns des autres dans le groupe constitué par un hydrogène, un alkyle en $C_{1-10}$ linéaire, un alkyle en $C_{3-10}$ ramifié, un alcényle en $C_2$-$C_{10}$ linéaire, et un alcényle en $C_3$-$C_{10}$ ramifié ; et des oligomères, des prépolymères, des polymères ou des mélanges de ceux-ci ; ou
un ester de cyanate polyfonctionnel de formule (IX-2)

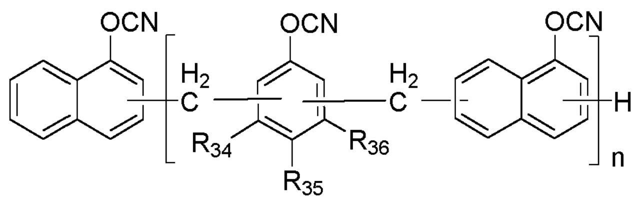

(IX-2)

dans laquelle
n représente un entier de 1 à 20 ; et $R^{34}$, $R^{35}$ et $R^{36}$ sont identiques ou différents et choisis indépendamment les uns des autres dans le groupe constitué par un hydrogène, un alkyle en $C_{1-10}$ linéaire, un alkyle en $C_{3-10}$ ramifié, un alcényle en $C_2$-$C_{10}$ linéaire, et un alcényle en $C_3$-$C_{10}$ ramifié ; et des oligomères, des prépolymères, des polymères ou des mélanges de ceux-ci ; ou
un ester de cyanate polyfonctionnel de formule (IX-3)

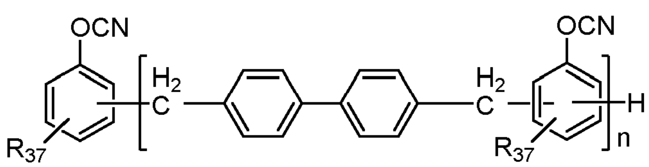

(IX-3)

dans laquelle
n représente un entier de 1 à 20 ; et $R^{37}$ est choisi dans le groupe constitué par un hydrogène, un alkyle en $C_{1-10}$ linéaire, un alkyle en $C_{3-10}$ ramifié, un alcényle en $C_2$-$C_{10}$ linéaire, et un alcényle en $C_3$-$C_{10}$ ramifié; et des oligomères, des prépolymères, des polymères ou des mélanges de ceux-ci ; ou
un ester de cyanate polyfonctionnel de formule (IX-4)

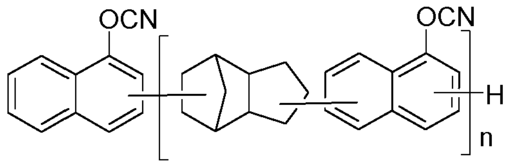
(IX-4)

dans laquelle
n représente un entier de 1 à 20 ; et des oligomères, des prépolymères, des polymères ou des mélanges de ceux-ci ;
ou n'importe quelle combinaison d'esters de cyanate polyfonctionnels de formule (II), (IX-1), (IX-2), (IX-3) et (IX-4) ;
et
dans laquelle le constituant (b) est un composé biscitraconimide de formule (X1)

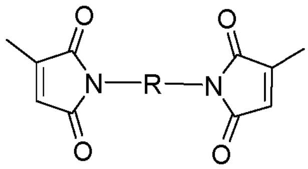
(X1)

dans laquelle R représente le m-xylylène ;
et des oligomères, des prépolymères, des polymères ou des mélanges de ceux-ci.

**12.** Procédé de préparation d'une composition selon l'une quelconque des revendications 1 à 11 comprenant les étapes consistant à :

i) fournir un mélange de constituants selon l'une quelconque des revendications 1 à 11 ; et
ii) mélanger intimement les constituants.

**13.** Procédé de préparation d'un matériau composite thermodurci comprenant les étapes consistant à :

i) fournir un mélange de constituants selon l'une quelconque des revendications 1 à 11 ;
ii) mélanger intimement les constituants ;
iii) fournir les fibres, les charges, les pigments et/ou les additifs ;
iv) mettre en contact le mélange obtenu dans l'étape ii) avec les fibres, les charges, les pigments et/ou les additifs ;
v) éventuellement mouler le mélange en la forme souhaitée ; et
vi) initier la polymérisation du mélange.

**14.** Utilisation d'une composition selon l'une quelconque des revendications 1 à 11 dans la production d'un matériau composite thermodurci.

**15.** Matériau composite thermodurci obtenu par le procédé selon la revendication 13, dans lequel le matériau composite thermodurci présente une perte de masse après 1000 h à 250 °C de moins de 2,5 % en masse, de préférence de moins de 2,0 % en masse, plus préférentiellement de moins de 1,75 % en masse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CA 2464339 A1
- US 3553244 A
- US 3755402 A
- US 3740348 A
- US 4578439 A
- EP 1190184 A
- EP 1195764 A
- US 9263360 B
- EP 327926 A
- EP 1566377 A
- EP 2722363 A
- US 20120049106 A
- US 7271227 B1
- US 5198515 A
- US 4568733 A
- US 20090110938 A1
- US 2014199549 A1
- US 4110294 A
- JP 20130551725 B
- JP 1990251518 A
- JP 2018062568 A
- EP 2799497 B1
- WO 2018139368 A


### Non-patent literature cited in the description


- *RSC Adv.*, 2017, vol. 7, 23149
- **GALANTI, A. V. et al.** The Synthesis of Bisitaconamic Acids and Isomeric Bisimide Monomers. *Journ. Poly. Sci.: Polymer Chemistry Edition*, 1982, vol. 20, 233-239
- *POLYMER*, June 1989, vol. 30, 1039
- *CHEMICAL ABSTRACTS*, 119462-56-5